(19) **Europäisches Patentamt**

**European Patent Office**

**Office européen des brevets**

(11) **EP 1 091 342 A2**

(12) # EUROPEAN PATENT APPLICATION

(43) Date of publication:
**11.04.2001 Bulletin 2001/15**

(51) Int. Cl.[7]: **G09G 3/34**, G09G 3/36

(21) Application number: **00308720.2**

(22) Date of filing: **04.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.10.1999 JP 28276799**
**05.10.1999 JP 28436799**

(71) Applicant:
**Matsushita Electric Industrial Co., Ltd.**
**Kadoma-shi, Osaka 571-8501 (JP)**

(72) Inventors:
• **Tanaka, Yukio**
**Kyoto-shi, Kyoto 607-8405 (JP)**

• **Komori, Kazunori**
**Sanda-shi, Hyogo 669-1322 (JP)**
• **Nishiyama, Kazuhiro**
**Hirakata-shi, Osaka 573-0081 (JP)**
• **Takimoto, Akio**
**Neyagawa-shi, Osala 572-0016 (JP)**

(74) Representative:
**Dempster, Benjamin John Naftel et al**
**Withers & Rogers,**
**Goldings House,**
**2 Hays Lane**
**London SE1 2HW (GB)**

(54) **Display technique of high grey scale**

(57) In order to provide gray scale display of good gray scale reproducibility and color reproducibility and of stable with time and less subject to temperature change in a display device using liquid crystal, a display device is provided with light batch modulating means for modulating en bloc optical states of all bundles of rays within a single display period of an image and means for separately modulating the optical states of the respective bundles of rays. The single display period is, for example, equally divided into eight sections so that luminance of a light source (light batch modulating means) is in proportion as $1/2_k$ in each section k ($0 \leq k \leq 7$). In each section, either a voltage V to bring the liquid crystal into OFF state or a voltage to the liquid crystal into ON state is applied to the liquid crystal. This can digitally provide a 256 linear gray scale in accordance with the $2^8 = 256$ voltage applications.

**EP 1 091 342 A2**

**Description**

## BACKGROUND OF THE INVENTION

**(1) Field of the Invention**

This invention relates to a display device, such as a liquid crystal projector, a direct view liquid crystal display and a micro display, and to a driving method thereof.

**(2) Description of the Prior Art**

(General Background Art)

A TFT (thin film transistors) liquid crystal panel and an electric writing type liquid crystal light valve are now in use as a graphic display device using liquid crystal. Either of them fundamentally has the structure that liquid crystals are injected in between a substrate having an active matrix structure and an opposite, transparent electrode substrate. It is noted that the active matrix structure is the structure that electrodes and transistors are two-dimensionally arrayed so that a voltage applied to the liquid crystal layer can be controlled on a pixel-to-pixel basis. A TFT array formed on a transparent substrate made of glass or quartz and a MOS (metal oxide semiconductor) transistor array formed on a polycrystal or monocrystal Si are mainly used therefor. In general, the former comes to be the transparent type and the latter comes to be the reflective type. The MOS transistors and the TFT are called pixel switching elements.

Nematic phase liquid crystals are in wide use. This is because, differently from e.g. smectic phase liquid crystal (ferroelectric liquid crystal), the nematic phase liquid crystal has no destabilizaing factors, such as ion decomposition under spontaneous polarization and low resistance characteristics against impact and thus the operation can be highly stabilized.

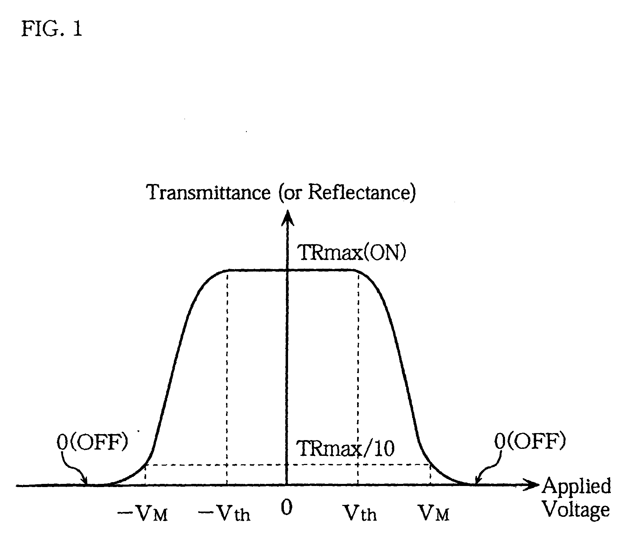

Of the nematic phase liquid crystals, the TN (twisted nematic) mode one is particularly in wide use. This twisted nematic mode is so designed that the liquid crystals are arrayed in the thickness direction of the liquid crystal layer between the two substrates in such a relation that they are spirally twisted with angle differences (90° in general) with respect to the liquid crystal arraying direction. When a voltage is applied to the TN mode liquid crystal, the relation between voltage and transmittance (or reflectance) {which is called $\gamma$ characteristics in the same sense as voltage-transmittance characteristics, voltage-reflectance characteristics and further voltage-luminance characteristics in the CRT} is given as shown in FIG. 1, for example. As shown in the same diagram, this mode shows the $\gamma$ characteristics of the so-called Normally-On that the transmittance (TR)(or reflectance) plotted in the ordinate axis is substantially large at zero voltage, and it decreases with an increase of the absolute value of the voltage plotted in the abscissa axis.

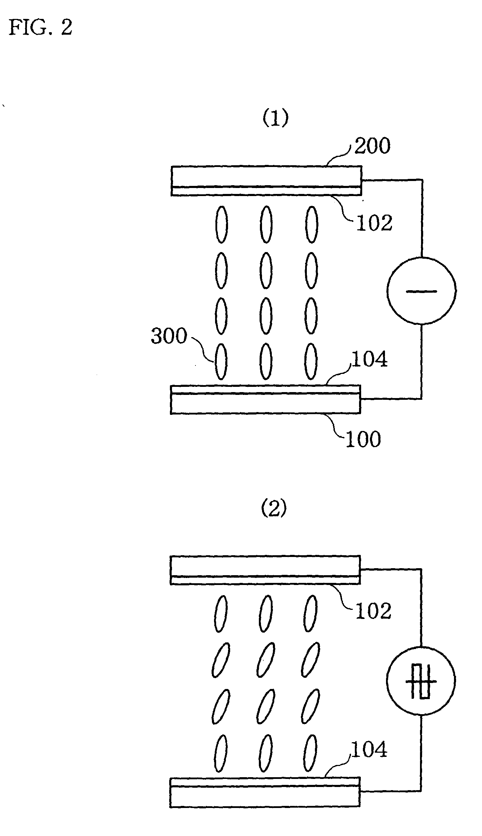

On the other hand, there is another liquid crystal mode called VA (vertically aligned) mode as a kind of nematic phase liquid crystal. This mode uses the nematic liquid crystals 300 whose anisotropy of dielectric constant $\Delta \varepsilon$ (=[dielectric constant in the direction of a major axis of molecule] - [dielectric constant in the direction of a minor axis of molecule]) is negative. In this VA mode, the liquid crystal molecules 300 are aligned with slightly slanted with respect to a direction vertical to surfaces of the substrates 100, 200 (generally in the order of 0.01° to 10°) when no voltage is applied thereto, as shown in FIG. 2(1).

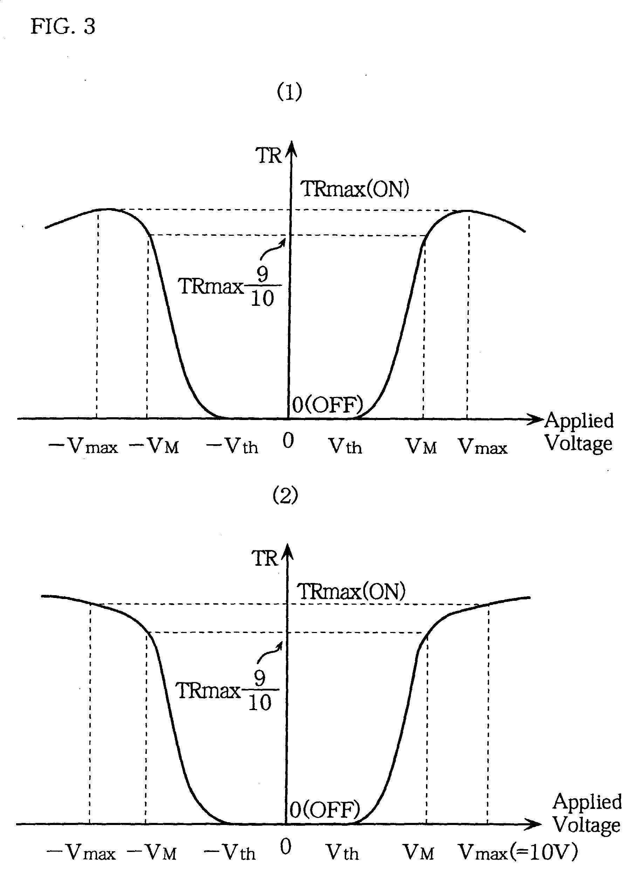

When the VA liquid crystal is energized by applying voltage to the transparent electrodes and the pixel electrodes arranged in the inside surfaces of the upper and lower substrates, the liquid crystal molecules are tilted in a direction parallel to the substrates, as shown in FIG. 2(2), to produce birefringence effects and, as a result of this, the transmittance increases. It then shows the $\gamma$ characteristics of Normally-Off (the transmittance T is minimum at zero voltage), as shown in FIG. 3(1).

As seen from this diagram, the VA mode has the advantage that the transmittance between the minimum transmittance (OFF) and the maximum transmittance (ON) can be controlled within a low voltage range. {It however may not come to peak transmittance in some cases, as shown in FIG. 3(2), for example). The TN mode has the disadvantage that when the liquid crystal layer is reduced in thickness (cell gap), an adequate optical rotation effect cannot be obtained, so that the maximum transmittance (which corresponds to the condition of no electric field being applied) is reduced. In contrast to this, since the VA mode uses no optical rotatory power, it does not have such a disadvantage and, accordingly, the thickness of the liquid crystal layer can be reduced to produce the advantage of high-speed response.

Next, reference is given to the outline of the structure of a typical device for driving the above-noted liquid crystals and the principle of the driving. These belong to the so-called well-known art, though relating to the subject mater of the present invention.

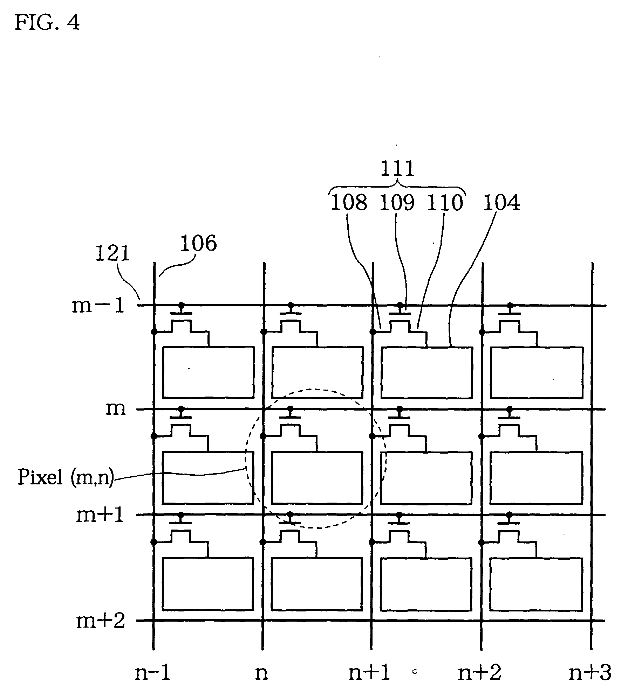

Pixel electrodes 104 of $M_A \times N_A$ as shown in FIG. 4 are arrayed in a matrix array, for example, on a lower substrate 100 of the two, upper and lower substrates sandwiching the liquid crystal layer 300 shown in FIG. 2 therebetween. Electrodes are also formed on the other substrate 200 (which is called the opposite substrate) (many of the electrodes on the opposite substrate are, in general, fully common in electric potential) in such a manner that voltage is applied to the liquid crystal on a pixel-to-pixel basis. The former substrate is so structured as to have thereon a n-type MOS transistor array corresponding to the array of the pixel electrodes (in which there are provided scanning lines 121 of $M_A$, signal wires 106 of $N_A$, and MOS transistors 111 of $M_A \times N_A$, though not shown completely, and which is called the active matrix structure) so that the voltage of each pixel electrode 104 can be controlled.

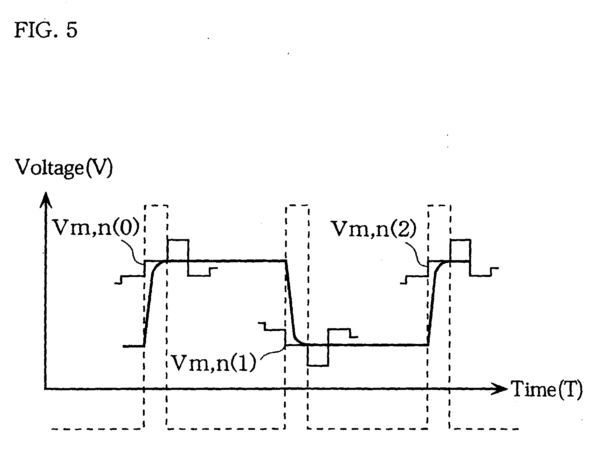

Under this structure, the m-th scanning line 121 is selected from the scanning lines 121, which are aligned side by side starting from the first scanning line to the $M_A$-th scanning line as viewed in the diagram, by increasing the voltage of the m-th scanning line 121 and decreasing the voltages of the remaining scanning lines. The MOS transistors belonging in this row are then switched to the ON-state and the pixel electrodes 104 are connected with their related signal wires 106, so that the pixel electrode 104 belonging to the pixel (m,n) is charged until it comes to have electric potential equal to the electric potential Vm, n(0) of the signal wire 106 at that time. This state is shown in FIG. 5. When the m-th scanning line 121 is lowered in voltage, the MOS transistor 111 is switched to the OFF state and the pixel electrode 104 is put into the electrically isolated state, so that the electric charge stored in the pixel electrode is held (a kind of writing is performed) and the applied voltage to the liquid crystal layer is held (the electrodes on the other substrate are then fixed at a fixed electric potential, e.g. 0V).

These operations are repeated for all $M_A$ scanning lines in sequence starting from the top to the bottom of FIG. 4, whereby the desired voltage signals are written to the respective pixel electrodes of the entire array. Those signals are held until the scanning line 121 is selected in the next display period to switch the MOS transistors 111 to the ON state (it is to be noted here that any voltage variation resulting from the influence of cross-talk or leak current due to the parasite capabilities of the MOS transistors, or any particular drive, such as an operation jumping across every other row (column), an intermittent display and the like are excluded). Further, for example when the VA liquid crystal is used, the transmittance (gray scale) of the liquid crystal can be controlled in an analog fashion by the voltages thus written being adjusted or controlled to adequate values in the range between 0V and a voltage value which is expressed by Vmax at the peak of the γ characteristics of FIG. 3(1).

In practice, direct current component of the voltage applied to the liquid crystal is controlled to around 0V to suppress the shift of the voltage-transmittance characteristics resulting from the charge-up, so an additional control is also made of, for example, reversing the polarity for even-numbered frames and odd-numbered frames. As the charge-up itself is the so-called well known art, the explanation of the contents is omitted.

This analogwise voltage control suffers from the following disadvantages.

[1] If the γ characteristics vary due to the charge-up of the liquid crystal, temperature changes and others, that will result in an image of poor in gray scale reproducibility (gray scale stability)(an image whose write level being isolated or black level being crashed) or an image of poor in color reproducibility (an image that gets off balance in color mixture of red (R), green (G) and blue (B)).

[2] If the γ characteristics vary in the panel surface due to non-uniformity in rubbing and cell gap, luminance unevenness and color irregularity will be distinguished.

[3] In the active matrix TFT array for driving the liquid crystal, the cross-talk originating from the parasitic capacitance between adjoining pixels and the parasitic capacitance between lines is produced, so that noise is easily produced in the image.

Consequently, in order to solve these disadvantages [1] to [3], the technique for digitally driving the liquid crystals was worked out, as disclosed in detail, for example, in Japanese Patent Application No. Hei 09-190837. As the technique relates to the subject matter of the present invention, the content will be outlined in the following.

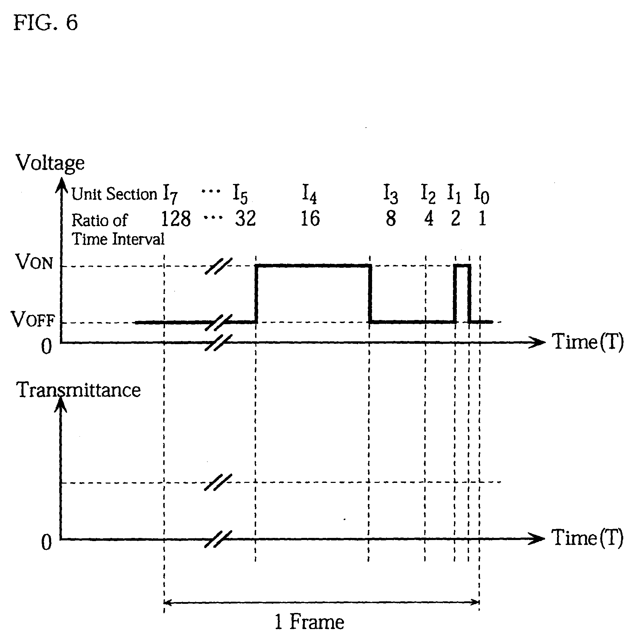

As shown in FIG. 6, one frame is divided, for example, into eight sections (which is called "unit section"), so that their respective time intervals are set to be $2^7:2^6:2^5:2^4:2^3:2^2:2^1:2^0 = 128:64:32:16:8:4:2:1$. Either a voltage $V_{OFF}$ required for the liquid crystal to be in the OFF (darkness) state (which corresponds to for example a certain voltage between -Vth and Vth in FIG. 3(1)) or a voltage $V_{ON}$ required for the liquid crystal to be in the ON (brightness) state (which corresponds to for example Vmax or -Vmax in FIG. 3(1)) is applied in each of the unit sections. Consequently, there are provided $2^8 = 256$ number of possible ways to apply the voltage to the liquid crystal in each frame.

Now, where the unit section corresponding to the time interval $2^k$ (k=0, 1, 2 ..., 7) is taken as $I_k$; the state of liquid crystal in that unit section is expressed by $b_k$, the OFF state of the same is expressed by $b_k=0$; and the ON state of the same is expressed by $b_k=1$, the way of applying voltage in each frame can be assigned to a binary number with eight digits of $[b_7 b_6 b_5 b_4 b_3 b_2 b_1 b_0]$ $(00000000_2 = 0_{10} - 11111111_2 = 255_{10})$. Then, the total time $T_{ON}$ for the liquid crystal to be kept in the ON state in each frame is expressed by Equation 1, and it follows that a value proportional to the binary number and thus the gray scale is obtained.

【Equation 1】

$$T_{0N} \propto \sum_{k=0}^{7} 2^k b_k$$

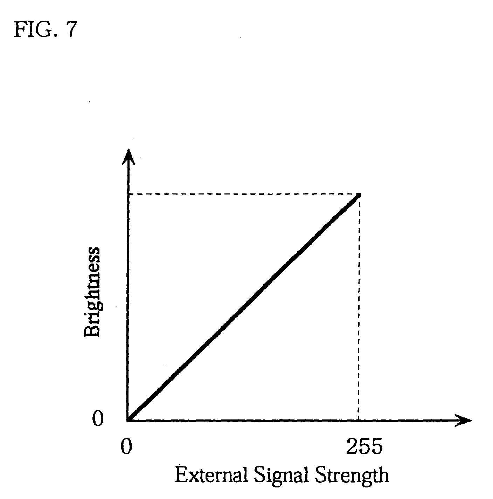

Brightness perceptible to human eye corresponds to energy of light passing through the liquid crystal for one frame or an integrated value of the intensity of light to pass through the liquid crystal for one frame with respect to time. In this case, since brightness is proportional to $T_{ON}$, as shown in FIG. 7, it follows that brightness is in substantially exact proportion to external signal strength $[b_7b_6b_5b_4b_3b_2b_1b_0]$ plotted in the abscissa axis or has linearity, as shown by the ordinate axis, so that the brightness having brightness levels of 256 levels (i.e., 256 gray scales) in a narrow sense or the output is obtained.

This method is quite different from the aforesaid analogwise voltage control in that essentially only a voltage of either $V_{ON}$ or $V_{OFF}$ is applied, rather than a voltage being applied to continuous regions of the γ characteristics, as in the analogwise voltage control. Hence, the disadvantages involved in the analogwise voltage control are all dissolved. Specifically:

[1] Even if the γ characteristics vary with time, in so far as the transmittance at those two points is stable, the linearity of the gray scale can be maintained to obtain an image having good gray scale reproducibility and color reproducibility. (In general, it is often the case that variation of the γ characteristics with time is a horizontal shift (voltage axis direction). Accordingly, when $V_{OFF}$ and $V_{ON}$ are set in a region in which variation in transmittance ($|dTR/dV|$) is small relative to variation in voltage, as shown in FIG. 3(1), the transmittance at those points will hardly vary and can be kept stable, even when the γ characteristics somewhat vary.)

[2] Likewise, even if the γ characteristics distribute in the panel surface, in so far as the transmittance at $V_{OFF}$ and $V_{ON}$ is generally uniform, uniform gray scale can be obtained within the surface.

[3] Even if a voltage applied to the liquid crystal deviates from $V_{OFF}$ or $V_{ON}$ due to addition of noise involved in the cross-talk, in so far as $V_{OFF}$ and $V_{ON}$ are set in the region in which variation of transmittance is small with respect to variation of voltage, as shown in FIG. 3(1), the transmittance will hardly vary and consequently a high quality image with little noise will be produced.

This digital driving method fits in with the trend in the image media toward digital from analog along with the technical advantages of computers and the development of digital image processing techniques. As a matter of fact, this method has the advantage that once an image source is input with digital signals, all subsequent processes can be made in a digital fashion.

(Background Art as viewed from the aspect of problems to be solved by the invention)

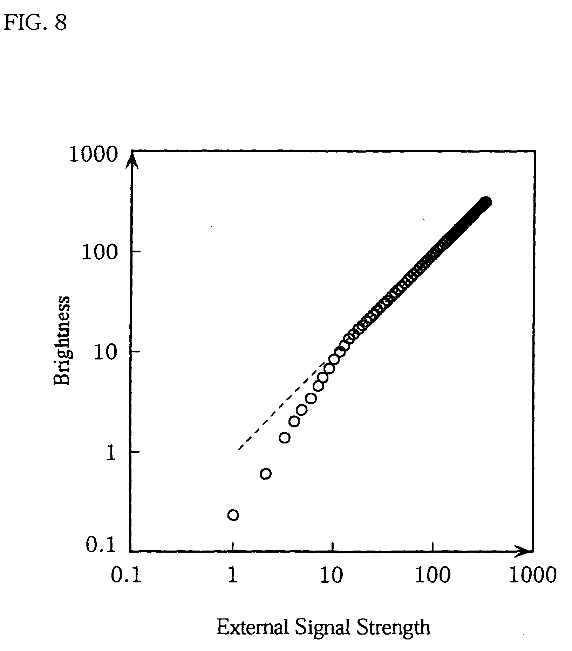

However, according to this method, the time in the narrowest unit section is significantly shortened as much as about 1/256 of each frame. If each frame takes 16.7msec at a frame frequency of 60Hz identical with that of the television broadcasting of the current NTSC system, the interval of the unit section will be 16.7msec × 1/256=65μsec. However, the response speed of the liquid crystal is about 100μsec to 1msec at the fastest. Because of this, even when driven by this method, the liquid crystal does not respond with complete linearity and, as a result of this, the linearity deviates in low gray scale levels in particular, as shown in FIG. 8, so that image quality deteriorates.

Not only in the liquid crystal but also in other means, existing at the time of filing of this application, including a liquid crystal plasma display, a light emitting diode and a material constitution, the responsive linearity of the γ characteristics is distorted in a low seizing signal range or in the condition of light being emitted, transmitted or scattered in a very short time to obtain a low gray scale.

When they are used to a monitor of computer and the like, that sort of deviation from the linearity presents no problem. But, when they are used to devices or equipment such as TVs that requires the high-quality image display, that sort of deviation from the linearity presents problems, because true reproducibility is required. The true reproducibility in the low gray scale level is particularly critical for movies in high definition broadcast, differently from news programs. Accordingly, further enhanced linearity of the γ characteristics is being sought.

Additionally, development of technique is being desired of minimizing the charge-up of the liquid crystal that may contribute distortion of the linearity of the γ characteristics.

Further, development of technique is being desired of enabling an excellent gray scale display even when any shift of the voltage-transmittance characteristics of the liquid crystal is caused by variation with age, temperature changes and charge-up and the like.

The digital gray scale display using the liquid crystal, in particular, suffers from the disadvantage that while reversal of gray scale can be presented under certain conditions, the image becomes visually undesirable. Accordingly, the solution is being desired.

In the display devices using liquid crystal for display as well as in the digital gray scale, development of technique is being desired of preventing the charge-up with more efficiency than conventional, for easily viewable display with high precision.

Likewise, development of technique is being desired of suppressing flickers and the like.

Further, development of technique is being desired of enabling the high-gray scale display over the entire range not only when the liquid crystal is used but also when elemental devices that maintain the linearity of the γ characteristics over the entire range with difficulties, irrespective of low seizing signals or high seizing signals, is used.

Furthermore, development of manufacturing technology is being desired of satisfying the above-noted requirements and also providing a display device low in price, of course.

## SUMMARY OF THE INVENTION

In consideration of the problems mentioned above, the present invention has been made. It is an object of the present invention to realize a completely linear gray scale by using the liquid crystal in particular, to thereby produce a high-quality image.

To achieve the object noted above, the present invention is designed to provide a modulation of a display device in two stages. Specifically, the present invention is designed as follows.

According to an invention, in order to provide a high gray scale digital display by using an element, such as a liquid crystal element, in which linearity of the γ characteristics cannot necessarily be held or may be impaired in a short time operation or in low start signal range, a display device comprising light batch modulating means for modulating en bloc luminance, color, and their related optical states of a bundle of rays for an entire display surface within a single display period of each image that forms an image or moving image in accordance with image signals and equivalent, independently from the image, in principle, under prescribed rules, programs and principals; and two-dimensional light modulation means for separately modulating the optical states of the bundle of rays from the light batch modulating means in correspondence with image signals and the image, in particular. Further, the two-dimensional light modulation means performs the separate modulation on a pixel-to-pixel basis by using the display element, in which the linearity of the γ characteristics cannot necessarily be held or may be impaired, in the specified conditions other than in the short time operation or the low start signal range.

According to another invention, in the above-noted invention, time variation of light modulation factor is equal in the single display period (which does not mean "exactly equal" in view of some possible error in manufacture, control, durable period of equipment and includes "substantially equal", though the same applies to another inventions. For example, there is included the error within the range of 0.1-0.2% or within the range of 1% in some cases). This provides the advantage in manufacture and control.

According to another invention, in the above-noted invention, the single display period of the image has two or more unit sections as components, and the light modulation factor waveforms in the single display period of the two-dimensional light modulation means are formed by selecting one from a set of two or more (finite number) unit light modulation factor waveforms belonging in its related unit section in every unit section (the waveforms include the waveform of a fixed value and also includes continuance of quantity of light of zero), for example, selecting either brightness (100% or 90%) or darkness (0% or 10%).

According to another invention, in the above-noted invention, when the number of unit sections in the single display period of the image are taken as N (N is an integer of not less than 2), the unit sections are each expressed by $I_k$ (k is an integer that satisfies $0 \leq k \leq N-1$), the number of the light modulation factor waveforms belonging in the unit sections $I_k$ for k are expressed by $M_k$ ($M_k$ is an integer of not less than 2), and light output energies for the unit light modulation factor waveforms are numbered in the ascending sequence as $E_k(0)$, $E_k(1)$, ..., $E_k(M_k-1)$ in the unit secton $I_k$, the relation of Equation 2 is satisfied with respect to k=0, 1, .... N-2 and $E_k(0)$

【Equation 2】

$$[\{E_{k+1}(M_{k+1}-1)\}/(M_{k+1}-1)]/[\{E_k(M_k-1)\}/(M_k-1)]=M_k$$

$$(k=0,1,\cdots,N-2)$$

(which include the case where Eq. 1 is generally satisfied in a range of no practical problem being presented, or is practically satisfied, in terms of the effects of the invention, such as reproducibility of gray scale and uniformity, though the same applied to the other invention) and also $E_k(0)$ is zero (which likewise include the case of this relation being generally practically established). From the viewpoint of prevention of reduction of brightness and improvement in contrast, it is preferable to satisfy the above-noted relations nearly completely, so it is ideal to do so, as long as no problem is presented from the aspects of cost, durable period.

It follows from this that when $M_k=2$, $[\{E_{k+1}(1)\}]/[E_k(1)]=2$, appearing in the binary system. As for each k, $E_k(0)=0$ which means that the light energy for display is not emitted to outside or toward an observer.

Take n=3 for instance, when n=1, $M_0=2$; when n=2, $M_1=4$, when n=3, $M_2=3$, etc.. $M_k$ is not necessarily constant for *n*s, of course. In this case, a 24 gray scale display can be provided.

According to another invention, in the above-noted invention, the light output energies $E_k(m_k)$ ($0{\leq}m_k{\leq}M_k-1$) for the unit light modulation factor waveforms (the waveforms include, of course, a waveform of a fixed value in the unit section) belonging in the unit section $I_k$ (k is an integer that satisfies $0{\leq}k{\leq}N-1$) is proportional as $m_k$ (including "generally proportional as $m_k$" in a range of no practical problem being presented). It follows that when $M_k=3$, the light energies to be adopted are 0, a, 2a, whether or not they are output to exterior, (a is preferably a value to match with N and $M_k$ of the above-noted invention)

According to another invention, in the above-noted invention, the N number of unit sections are all uniform in time interval (inclusive of "generally uniform in practice" in this case also) and also a sets of unit light modulation factor waveforms belonging in the each unit section are equal in any unit sections.

Since the unit sections are all uniform in time interval, the control can be facilitated and also the reversal of applied voltage or reference voltage (as mentioned later) can be provided on a single-unit-section basis or on a two-more-unit-sections basis. Also, since the sets of unit light modulation factor waveforms in the each unit section are equal (in other words, the unit light modulation factor waveforms from which one can selectively be adopted are equal in contents and kind), the control is facilitated.

According to another invention, in the above-noted invention, $M_k=2$ applies to all integers k that satisfy $0 \leq k \leq N-1$. This can provide facilitated processes in the binary system for response to usual digital signals.

According to another invention, in the above-noted invention, the light batch modulating means and the two-dimensional light modulation means both modulate intensity of light projected or transmitted. Specifically, light energy density varies under a prescribed rule or duration varies. Further specifically, in the light batch modulating means, the duration of light emission of light having a fixed energy density gradually shortens from one unit section after another. In the two-dimensional light modulation means, the ON and OFF switching is performed on a pixel-to-pixel basis. The combination of these can produce the gray scale display of luminance on a color basis.

According to another invention, in the above-noted invention, the light modulation factors of the light batch modulating means are constant (including "practically constant" for the reason mentioned above) in the unit sections $I_k$ and the light modulation factor is in proportion to $2^k$ (including "in general proportion to $2^k$").

According to another invention, somewhat differently from the above-noted invention, the unit sections $I_k$ are arranged in temporal descending order as $(..., I_1, I_0)$ within the single display period; the light modulation factor of the light batch modulating means is exponentially attenuated in the single display period; and the light modulation made by multiplying a time constant of the attenuation by $\ell$ n 2 ( $\ell$ n is a natural logarithm) is equal to an interval of the unit section (in the case of a non-display section being in between adjoining unit sections, an interval excluding the non-display section).

According to another invention, opposite to the above-noted invention, the unit sections $I_k$ are arranged in temporal ascending order within the single display period; the light modulation factor of the light batch modulating means is exponentially increased in the single display period; and the light modulation made by multiplying a time constant of the increase by $\ell$ n 2 is equal to an interval of the unit section.

According to another invention, the light modulation factor of the light batch modulating means is either zero (this value is not sometimes taken within the timing for the image to be displayed) or a fixed finite value, and the time during which the fixed value is taken in the unit section $I_k$ is in proportion as $2_k$ (including "in general proportion as $2^k$" in a range of no practical problem being presented), and the light modulation factor of the two-dimensional light modulation means is a fixed value (the state in which all light is permitted to transmit, not permitted to transmit or permitted to half transmit is held) during the time during which the light modulation factor of the light batch modulating means takes the fixed value in the each unit section $I_k$.

According to another invention, which is somewhat similar to the above-noted invention, the light modulation factor of the light batch modulating means uses a pulse waveform as a base unit; the number of pulses is either a value temporally varied or zero (including actual zero, though may be of repetitious); the number of pulse waveforms included in the unit section $I_k$ are in proportion as $2^k$; and the light modulation factor of the two-dimensional light modulation means is a fixed value during the time during which the light modulation factor of the light batch modulating means is varied in accordance with the number of pulses in the each unit section, as is the case with the above-noted invention.

It follows that when the two-dimensional light modulation means takes a binary number in a brightness display in a concerned unit section, the open state is maintained, so that light of all pulse waveforms belonging in the concerned unit section is output, while on the other hand, when the closed state is maintained, the light of all pulse waveforms is not output.

According to another invention, the light batch modulating means and the two-dimensional light modulation means are both used for modulation of intensity, and the N number of unit sections comprise the $N_1$ number of unit sections of a first kind ($N_1$ is an integer that satisfies $1 \leq N_1 \leq N-1$) and the $(N-N_1)$ number of unit sections of a second kind.

In the unit sections of the first kind $I_k$ ($k = N-N_1, N-N_1+1, ... , N-1$), the light modulation factor of the light batch modulation means is constant; the number of unit light modulation waveforms $M_k = 2$; and their time intervals are proportional to $2^k$.

In the unit sections of the second kind, the light modulation factor of the light batch modulation means vary temporally; the $(N-N_1)$ number of unit sections of the second kind are all equal in the time intervals; and the set of unit light modulation factor waveforms are equal in any unit sections.

According to an independent invention, the display device using the element in which the $\gamma$ characteristics of display is not necessarily linear comprises light batch modulating means for modulating en bloc luminance, color, and their related optical states of a bundle of rays for a display surface within a single display period of each image; and two-dimensional light modulation means for receiving the bundle of rays from the light batch modulating means and separately modulating luminance, color and their related optical states of the bundle of rays for each pixel. The light batch modulating means has a light source and controls the light emission condition within the single display period of the image. The two-dimensional light modulation means is a passive type light modulation means for controlling transmission and others of the light emitted from the light batch modulating means. With this construction, the image is displayed.

According to another invention, in the above-noted invention, the light source is any one of a light emitting diode, a laser and an electro-luminescence light source.

According to another invention, in the above-noted invention, the light batch modulating means of the display device has a circuit for electrically controlling luminance of the light emission of the light source. This enables the light source to controllably emit light with a constant luminance within each unit section in the single display period or stop emitting light with an interval of a unit section and enables the intensity of light to exponentially lower through the single display period, in some case.

According to another invention, the passive type light modulation element as the two-dimensional light modulation means of the above-noted invention has a liquid crystal layer formed between two substrates (including the case where one of the two substrates is a transparent resin film or equivalent). The liquid crystal layer is brought into the open state, the close state or the 1/2 transmission state for each pixel in each display period or each unit section in accordance with the gray scale of the image signal, whereby the transmission and others of the light travelling from the light batch modulation means toward a user (observer) is controlled.

According to a group of other inventions, the liquid crystal layer of the passive type light modulation element comprises liquid crystals having no spontaneous polarization or liquid crystals having the same as a main component.

According to a group of other inventions, the liquid crystal layer comprises liquid crystals showing nematic phase (including the liquid crystal containing 98 percent by weight or more of liquid crystal as a main component and a small amount of additives for the purpose of improvement of some characteristics)(colorant is included in the liquid crystal).

According to a group of other inventions, the liquid crystal comprises vertically aligned liquid crystals.

According to a group of other inventions, the liquid crystal layer of the above-noted inventions has a thickness of $2\mu m$ or less, preferably $1.5\mu m$ or less, or further preferably $1\mu m$ or less. This can provide improvement in high response of the liquid crystal layer, particularly in the $\gamma$ characteristics when the gray scale of luminance is small (dark), thus producing excellent gray scale display of image.

According to another invention, the passive type light modulation element as the two-dimensional light modulation means of the display device of the above-noted independent invention comprises a first substrate, a second substrate and a liquid crystal layer between the substrates, the first substrate having transparent electrodes on the side thereof confronting the liquid crystal layer, the second substrate having, on the side thereof confronting the liquid crystal layer, a plurality of light reflection type pixel electrodes which are formed into a matrix-like form (including a mosaic form, a delta form, and others) and further having thereon electric circuit portions, formed in the matrix form in correspondence with the array of the light reflective type pixel electrodes, for controlling voltage applied to the light reflective type pixel electrodes. This arrangement is similar to that of a usual liquid crystal display device.

Under this arrangement, voltage is applied between the transparent electrodes and the reflective pixel electrodes in accordance with the display condition and gray scale of the image so that the optical state of the liquid crystal layer can be varied with the applied voltage to perform the display. A bundle of rays are incident from the first substrate and pass through the liquid crystal layer. The bundle of rays reflect on the reflective type pixel electrodes formed on the second substrate and pass through the liquid crystal layer and the transparent electrodes again. Then, they pass through the first substrate and emit out toward an observer or a screen. In this process, 0% of light can reflect, 100% of light can reflect or 50% of light can reflect, depending on the state of the liquid crystal layer.

According to another invention, the electric circuit portion of the above-noted invention for controlling the voltage applied to the reflective type pixel electrodes is formed in correspondence with the reflective pixel electrodes arranged in the matrix form corresponding to the vertically and horizontally arrayed pixels on the display surface. As a result of this, the electric circuit portion comprises pixel switching elements arranged in the matrix form; scanning lines wired in a row direction of the matrix in correspondence with the pixel switching elements; and signal wires wired in a column direction of the same matrix. Under this arrangement, the pixel switching elements opens and closes electrical connection between the reflection type pixel electrodes and the related signal wires in accordance with the voltage applied to the related scanning lines. During the time during which the pixel switching elements electrically connects between the reflective type pixel electrodes and the signal wires, the voltage of the reflection type pixel electrodes is charged up to the voltage of the signal lines.

On the other hand, during the time during which the pixel switching elements do not electrically connect between the reflective type pixel electrodes and the signal wires, the reflection type pixel electrodes are electrically isolated (in general) and the applied voltage to the liquid crystal layer is held substantially constant by electric charge accumulated in the reflection type pixel electrodes, though some possible electric leakage may be generated.

According to another invention, the electric circuit portion, of the invention two occurrences back, for controlling the voltage applied to the light reflective type pixel electrodes comprises pixel switching elements and bistable elements, arranged in the matrix form in correspondence with the reflection type pixel electrodes arranged in the matrix form; scanning lines wired in a row (column) direction of the matrix in correspondence with the pixel switching elements; and signal wires wired in a column (row) direction of the same matrix. The pixel switching elements open and close the electrical connection with the signal wires corresponding to the bistable elements in accordance with the voltage (rise and fall) applied to the related scanning lines. The bistable elements are electrically connected with the light reflective type pixel electrodes to set the voltage of the reflective pixel electrodes to a varied value in accordance with two stable states of the bistable element.

The bistable elements are transited to one of the two stable states in accordance with a voltage of the signal wires during the time during which the pixel switching elements electrically connects the bistable elements and the signal wires, while the bistable elements keep the other stable state during which the pixel switching elements do not electrically connect them.

According to another invention, the electric circuit portion, of the invention three occurrences back, for controlling the voltage applied to the light reflective type pixel electrodes comprises pixel switching elements, memory circuits and liquid crystal writing switching elements, arranged in the matrix form in correspondence with the light reflection type pixel electrodes arranged in the matrix form; scanning lines wired in a row direction of the matrix in correspondence with the pixel switching elements; and signal wires wired in a column direction of the same matrix.

The pixel switching elements open and close the electrical connection with the signal wires corresponding to the memory circuits in accordance with the voltage applied to the related scanning lines. An output voltage of the memory circuits is charged to a certain voltage corresponding to the voltage of the signal wires during the time during which the pixel switching elements open the electrical connection, while the output voltage is held during the time during which the pixel switching elements close the electrical connection.

The liquid crystal writing switching elements are elements to open and close the electrical connection between the output of the memory circuits and the reflection type pixel electrodes for all pixels by one operation. The voltage of the light reflection type pixel electrodes is charged up to a certain voltage corresponding to an output voltage of the memory circuits during the time during which the liquid crystal writing switching elements open the electrical connection therebetween. The reflection type pixel electrodes are electrically isolated during the time during which the liquid crystal writing switching elements close the electrical connection therebetween, whereby the voltage applied to the liquid crystal layer is held by the electric charges accumulated in the reflection type pixel electrodes during that time.

According to another invention, the electric circuit portion, of the invention four occurrences back, for controlling the voltage applied to the light reflective type pixel electrodes comprises pixel switching elements, memory circuits, liquid crystal writing switching elements and bistable elements, arranged in the matrix form in correspondence with the reflection type pixel electrodes arranged in the matrix form; scanning lines wired in the matrix form in a row direction of the matrix in correspondence with the pixel switching elements; and signal wires wired in the matrix form in a column direction thereof.

The pixel switching elements open and close the electrical connection with the signal wires corresponding to the memory circuits in accordance with the voltage applied to the related scanning lines.

An output voltage of the memory circuits is charged up to a certain voltage corresponding to the voltage of the signal wires during the time during which the pixel switching elements electrically connects the memory circuits and the signal wires, while on the other hand, the output voltage of the memory circuits is held during the electrically non-connection time.

The liquid crystal writing switching elements open and close the electrically connection between the output of the memory circuits and the bistable elements for all pixels by one operation.

The bistable elements are electrically connected in accordance with their stable state. The voltage of the light reflective type pixel electrode is set to a varied value.

The bistable elements are transited to one of two stable states in accordance with an output voltage of the memory circuits during the time during which the liquid crystal writing switching elements electrically connect the bistable elements and the output of the memory circuits.

According to another invention, the passive type light modulation element of the above-noted independent invention is an element having moving type micro mirror surfaces which are moved under control signals and the like and are arrayed in the matrix form corresponding to the pixels on the display surface, for separately modulating an optical state for each pixel. The element has of course circuits for moving the mirror surfaces so that an angle of the micro mirrors to the incident light and thus orientation of the reflected light can be varied to modulate the light travelling toward the observer on a pixel-to-pixel basis.

According to an independent invention, the display device comprises light batch modulating means for modulating en bloc the optical states of all bundles of rays for a display surface within a single display period of an image; and two-dimensional light modulation means for receiving a bundle of rays from the light batch modulating means and separately modulating the optical states of the bundles of rays on a pixel-to-pixel basis with reference to the contents of the image. The light batch modulating means controls optical states of the light emitted from a light source and travelling toward the two-dimensional light modulation means, (e.g. quantity of light or quantity of light for separated light components), within the single display period of the image, independently, in principle, from whether the light source is constant or is to be varied and from whether or not the contents of the image, apart from the display of the other intended purpose.

The two-dimensional light modulation means is a passive type light modulation element for further controlling the light thus controlled with reference to the contents of the image to allow 100% of light to transmit or absorbed on a pixel-to-pixel basis.

According to another invention, the light batch modulating means of the above-noted invention is in principle a thin rotary member which has a light source, is located downstream from the light source (on the observer's side of the light source) and is rotatable around its axis at an interval equal to or an interval integral multiplies of the single display period. Further, the rotary member has windows, keys, and filters which are arrayed along the rotation direction, to change the optical states, such as luminance and color, of the light transmitted, reflected and travelling downstream from the light source. As a result of this, the light batch modulating means is a light batch modulating means using the rotary member by which the optical state of the light emitted from the light source is modulated within the single display period of the image along with the rotation of the rotary member.

According to another invention, the light batch varying means using the rotary member of the above-noted invention is, in principle, divided into parts of three kinds, particularly into segments or a group of windows. The segments are the group of windows for allowing components of light of, (mainly) red, green and blue, of the light emitted from the light source to pass through them. Further, the group of three segment windows have some small segments or small windows arrayed along the rotation direction. These small windows are gradually reduced in area or interval along the rotation direction, so that the transmittance is reduced along with the rotation direction on a component-of-light basis under a prescribed rule.

According to another invention, the light batch modulating means of the above-noted invention has an optical shutter. This can allow the light to be modulated by open and close of the optical shutter.

According to another invention, the optical shutter of the above-noted invention uses ferroelectric liquid crystal or antiferroelectric liquid crystal.

According to an independent invention, a display device comprising light batch modulating means for modulating en bloc luminance, color, and their related optical states of a bundle of rays for a display surface within a single display period of an image under prescribed process steps, programs and rules; and two-dimensional light modulation means for separately modulating the optical states of the bundle of rays for each pixel, wherein the two-dimensional light modulation means has a spontaneous light emission type display element which performs given emission of light under image signals or equivalent by itself, and wherein the light batch modulating means passively controls the optical states of the light emitted from the spontaneous light emission type display element within the single display period of an image, for example, by modulating the transmittance or reflectance.

According to another invention, the spontaneous light emission type display element of the display device of the above-noted invention is any one of an electro-luminescence element, a plasma display panel, a field emission type display, and a cathode ray tube. It has the related control part and a required optical system such as a lens, of course.

According to another invention, the light batch modulating means of the above-noted invention is a rotary member which is rotatable around a given axis. The rotary has windows with filters for allowing the light of a specific wavelength and color to transmit. The windows have a given distribution for optical characteristics for the transmitted light, for example, by arraying the windows in the descending order from a large area to a small area. Thus, the light emitted from the light source is modulated in a convenient manner for the gray scale display within the single display period of the image along with the rotation of the rotary member.

According to another invention, the light batch modulating means of the above-noted invention is an optical shutter. This allows only the transmitted light from a specified window to pass through in a downstream direction.

According to an independent invention, a display device comprises light batch modulating means for modulating en bloc luminance, color and their related optical states of a bundle of rays for a display surface within a single display period comprising a plurality of unit sections of an image; and two-dimensional light modulating means for separating modulating the optical states of the bundle of rays for each pixel. The light batch modulating means controls a condition of a light source or light emitted from the light source within the single display period of the image, regardless of the single display period or the unit section. The two-dimensional light modulation means has between two substrates a liquid crystal layer showing nematic phase. The response of the liquid crystal layer is used to select one (e.g. either open or close) from the finite number (two or more) of unit light modulation factor waveforms belonging in each of the unit sections (any response of the liquid crystal layer takes the time not more than that of the shortest unit section, of course).

According to an independent invention, a display device comprises light batch modulating means for modulating en bloc optical states of all bundles of rays for a display surface within a single display period of an image; and two-dimensional light modulating means for separating modulating the optical states of the bundles of rays for each pixel. The light batch modulating means temporally varies the light modulation factors within the single display period for the display surface, for example, by controlling the light source and equivalent, as is the case with the other invention.

The single display period of the image comprises two or more unit sections, and the two-dimensional light modulation means selects one from a set of two unit light modulation factor waveforms belonging in the respective unit section as a waveform of light modulation factor within the single display period. Further, when the number of unit sections in the single display period is taken as N (N is an integer of 2 or more); each unit section is expressed by $I_k$ (k is an integer that satisfies $0 \leq k \leq N-1$); a small light output energy with respect to the each unit light modulation waveform in each unit section $I_k$ is taken as $E_k(0)$; and a large one is taken as $E_k(1)$, the relation of Equation 3 is satisfied with respect to k=0, 1, .... N-2.

【Equation 3】

$$\{E_{k+1}(1)\} / E_k(1) = 1 / 2$$

The N number of unit sections are all equal in time interval and the set of unit light modulation waveforms belonging in the each unit section are uniform in any unit sections.

The two-dimensional light modulating means has between substrates a liquid crystal layer showing nematic phase, and the liquid crystal layer is an element showing a normally-off type voltage-transmittance (or reflectance) response. Also, an absolute value of the applied voltage to achieve the unit light modulation factor waveform corresponding to the small light output energy, of the unit light modulation factor waveforms, is not more than a switching threshold voltage of the liquid crystal layer. Thus, the transmitted or reflected light is controlled under the image signals on a pixel-to-pixel basis by presence and absence of the applied voltage or equivalent, to provide the gray scale to the screen.

According to another invention, in the above-noted invention, an absolute value of the voltage applied to the liquid crystal layer to achieve the unit light modulation factor waveform corresponding to the large light output energy is not less than a minimum modulation voltage.

According to an independent invention, the display device is identical to those of the above-noted two inventions in that the liquid crystal layer showing the nematic phase is formed between the two substrates, but is different therefrom in that the liquid crystal layer shows a normally-on type voltage-transmittance (or reflectance) response.

According to an independent invention, an absolute value of the voltage applied to the liquid crystal layer to achieve the unit light modulation factor waveform corresponding to the small light output energy is not less than a minimum modulation voltage.

According to another invention, in the display device of the above-noted four inventions, the voltage applied to the liquid crystal layer reverses at the single display periods, at q display periods (q is a natural number) or at q unit section sections.

According to another invention, in the display device of the above-noted invention, the reversal of voltage applied to the liquid crystal layer is a reversal of electric potential across the two substrates or of electric potential of the electrodes attached in close contact with the substrates at the single display periods or at q unit sections (q is a natural number).

According to an independent invention, a display device comprises light batch modulating means for controlling a condition of a light source within the single display period of the image to modulate en bloc optical states of a bundle of rays for a display surface; two-dimensional light modulation means for separately modulating the optical states of the bundle of rays by controlling or using the proportion of the transmittance or reflectance of the light from the light batch modulating means; and an optical magnifying means for optically magnifying an image so that an observer can observe the image under magnification.

According to another invention, the optical magnifying means of the above-noted invention is a convex lens (including other kinds of auxiliary lens) so that an observer can observe the image displayed, for example, on a small display surface in a portable equipment through the convex lens attached to a case of the portable equipment.

According to another invention, the optical magnifying means of the above-noted invention two occurrences back includes a lens and a light source system in a projection display, such that an image displayed on a transparent liquid crystal film is displayed under magnification, in principle, on a white screen like a movie picture.

According to an independent invention, a display device comprises light batch modulating means for modulating en bloc optical states of a bundle of rays for a display surface within a single display period of an image; two-dimensional light modulation means for separately modulating the optical states of the bundle of rays for each pixel; and control means for controlling both the light batch modulating means and the two-dimensional light modulation means in accordance with the image signals for gray scale display of the image, particularly the modulation factor. This produces good gray scale even when the linearity of the γ characteristics of the display element is not necessarily held.

According to another invention, the light batch modulating means and the two-dimensional light modulation means each have a display element using liquid crystal. The liquid crystals used as the light batch modulating means and the two-dimensional light modulation means are arranged in parallel or in integration, so that the both liquid crystal layers are controlled to control a back light, so as to provide a gray scale display.

According to an independent invention, the two product inventions noted above are expressed as a process invention.

According to an independent invention, an image display device has pixels each having a plurality of (e.g. four (2x2)) partial pixels. The display device further comprises partial-pixel-related, applied voltage waveform determining means for selectively determining to which partial pixel a voltage is to be applied to at voltage modulating terms forming the single display period in correspondence with degree of gray scale, such as luminance and color, of the image signals, or which partial pixel is made to contribute to the display. Further, the partial-pixel-related, applying means applies voltage to the partial pixels under the determination. The applied voltage is the one selected from the predetermined voltages.

Accordingly, depending on the partial pixels, some partial pixels only open and close and others select one from open and 50% close. This enables the high gray scale display. As a result of this, the linearity of the γ characteristics for the low gray scale level (e.g. 16 or less) can be ensured over the whole region by performing the gray scale display using the area ratio. According to the invention, although the number of incorporating pixels are increased, since currently advanced semiconductors can make high speed signal process, no problems in manufacture and response are presented, of course.

According to an independent invention, the unit voltage waveform of the above-noted invention is a rectangular pulse of a constant voltage in the voltage modulation terms (unit section) from the aspects of manufacture and control.

According to another invention, the pixel has four unit voltage waveforms in each voltage modulation term of the above-noted two inventions. The voltages of the first and third unit voltage waveforms are revere in polarity to each other, and the voltages of the second and fourth unit voltage waveforms are also revere in polarity to each other. An absolute value of the voltage of the first unit voltage waveform is larger than an absolute value of the voltage of the second unit voltage waveform, and an absolute value of the voltage of the third unit voltage waveform being larger than an absolute value of the voltage of the fourth unit voltage waveform. The odd numbered display periods (which can of course be even numbered display period, depending on which image is selected as the basis) are constituted by selecting either of the first and second unit voltage waveforms in accordance with image input signals for each of the voltage modulation terms. The even numbered display periods are constituted by selecting either of the third and fourth unit voltage waveforms in accordance with the image input signals for each of the voltage modulation terms. For the record, this means that the polarity is reversed alternately at display periods, in order to prevent generation of flicker or generation of charge-up. So, the terms of "odd" and "even" numbers do not have any significant meaning. Further, for the switching of a CM or a TV program or for some other intended purposes, the odd and even numbers may be changed alternately on a some seconds basis.

According to another invention, in the above-noted invention, an optical state of a light modulation layer provided when the first unit voltage waveform is applied and the an optical state of the light modulation layer provided when the third unit voltage waveform is applied are identical to each other and an optical state of the light modulation layer provided when the second unit voltage waveform is applied and the an optical state of the light modulation layer provided when the fourth unit voltage waveform is applied are identical to each other. This can provide facilitated control and manufacture.

According to another invention, in the above-noted invention, the single display period has the M number of voltage modulation terms (M is an integer of not less than 2) and further the intervals of the M number of voltage modulation terms form a geometric progression of a common ratio of 1/2. This can provide facilitated manufacture and control and also improved conformity with the two-valued logic of CPU.

According to another invention, in the above-noted invention, there are the $2^M$ number of image input signals. Where the $2^M$ number of image signals are numbered as $S_0$, $S_1$, ... , $S_2{}^M$-1, in the ascending order of luminance; the M number of voltage modulation terms are numbered as $P_0$, $P_1$, ..., $P_{M-1}$, in the ascending order of interval; and the voltage waveforms is expressed by $V_j$ which are so formed that when with respect to the gray scale j=0, 1, ... , $2^M$-1, a value of a k-th digit ($2^k$) of the j appearing in the binary system is 1, the unit voltage waveforms in the voltage modulation terms $P_k$ (k=0, 1, ..., M-1) in the single display period are taken as the first unit voltage waveform or the third unit voltage waveform, while when the k-th digit ($2^k$) of the j is 0, the unit voltage waveforms are taken as the second unit voltage waveform or the fourth unit voltage waveform, the display control means generates the voltage waveforms $V_j$ with respect to the image input signals Si (i=0, 1, ..., $2^M$-1).

According to an invention, in the above-noted invention, the display control means generates a voltage waveform $V_{j(i)}$ with j(i) formed by associating any integer j with the image input signals Si (i=0, 1, ..., $2^{M-1}$) of the input signal and also $I_{j(i)}$ is an increasing function for i,
where luminance of the image signals has $2^M$ gray scales as $S_0$, $S_1$, ..., $S_2{}^M$-1, in the ascending order; the M number of voltage modulation terms are numbered as $P_0$, $P_1$, .., $P_{M-1}$, in the ascending order of interval; and the voltage waveforms is expressed by $V_j$ which are so formed that when with respect to the gray scale j=0, 1, ... , $2^M$-1, a value of a k-th digit ($2^k$) of the j appearing in the binary system is 1, the unit voltage waveforms in the voltage modulation terms $P_k$ (k=0, 1, ... , M-1) in the single display period are taken as the first unit voltage waveform or the third unit voltage waveform, while when the k-th digit ($2^k$) of the j is 0, the unit voltage waveforms are taken as the second unit voltage waveform or the fourth unit voltage waveform; and an integrated value of intensity of light transmitting or reflecting on the light modulation layer over the single display period corresponding to $V_j$ is taken as $I_j$.

According to an invention, in the above-noted invention four occurrences back, voltages of n-th unit voltage waveforms are constant for four unit voltage waveforms (n=1, 2, 3, 4) in all voltage modulation terms in each display period.

According to an invention, in the above-noted invention five occurrences back, the display control means has a display control (array) substrate and a transparent electrode substrate. The liquid crystal layer is sandwiched from both sides by the display control substrate and the transparent electrode substrate, as is the case with the common liquid crystal display device. The transparent electrode substrate is equal in potential in the whole surface. Where $V_S$ and $V_B$ are set to voltage values that satisfy Vs>$|V_B|\geqq0$, the potential of the transparent electrode substrate is -$V_B$ for the first and second unit voltage waveforms; the potential of the transparent electrode substrate is $V_S$ for the third and fourth unit voltage waveforms, and the potential of the display control substrate is $V_S$ -$V_B$ for the first and fourth unit voltage waveforms; and the potential of the display control substrate is zero for the second and third unit voltage waveforms.

According to an invention, the light modulation layer of the above-noted invention is a liquid crystal layer (including other related components and equipment to the liquid crystal).

According to an invention, the liquid crystal layer of the above-noted invention uses liquid crystal showing a nematic phase.

According to an invention, the liquid crystal of the above-noted invention is a liquid crystal having a smaller dielectric constant with respect to a major axis direction of molecule thereof than the dielectric constant with respect to a direction perpendicular to the major axis direction of the molecule.

According to an independent invention, the single display period is divided into a plurality of voltage modulation terms of unit sections and a predetermined voltage is applied for each unit section. Further, waveforms of the voltages to be applied for the concerned sections are predetermined for each voltage modulation term and one waveform is selected therefrom.

According to an independent invention, in the display device having pixels having light modulation layers and display controlling means for controlling the optical states related to luminance and color of the light modulation layers of the pixels in accordance with input signals, the light modulation layer is a two-variant light modulation layer that takes either of two optical states for each pixel, and the display controlling means is a binary type display controlling means that brings the light modulation layer into one of the two optical states only during the time corresponding to the input signals within each display period and brings the light modulation layer into the other optical state during the remaining time.

According to an invention, the light modulation layer of the above-noted invention is a liquid crystal layer.

According to an invention, the light modulation layer of the above-noted two inventions is a zero output capable light modulation layer in which the output light intensity in the one optical state is taken as zero.

According to an invention, in the above-noted invention, where the input signals input to the light modulation layer so as to provide the gray scale display of the pixel within the single display period are numbered as 0, 1, 2, ... in descending order or ascending order and the time during which the light modulation layer takes the other optical state of not zero for the input signal of the number j within the single display period is expressed by $T(j)$, $T(j)$ is in proportion to j.

According to an invention, the two-variant light modulation layer of the above-noted invention takes either the first optical state or the second optical state in accordance with the voltage applied to the pixels from the display controlling means, and the display controlling means comprises a register, a counter and a comparator which are arranged in association with each pixel. Numeric values corresponding to image input signals are registered in the register. Indicated numeric values of the counter increases or decreases at each time when clock signals are input to the counter. The comparator compares numeric values between the registered numeric values of the register and the indicated numeric values of the counter and applies voltages in accordance with the numerical relation, such that the optical state of the light modulation layer can be put into either the first optical state and the second optical state.

According to an invention, the two-variant light modulation layer of the above-noted invention two occurrence back takes either the first optical state or the second optical state in accordance with the voltage applied to the pixels from the display controlling means, and the display controlling means comprising a counter, and a register and a comparator which are arranged in association with each pixel. Numeric values corresponding to image input signals are registered in the register. Indicated numeric values of the counter increases or decreases at each time when clock signals are input to the counter. The comparator compares numeric values between the registered numeric values of the register and the indicated numeric values of the counter and applies voltages in accordance with the numerical relation, such that the optical state of the light modulation layer can be put into either the first optical state and the second optical state.

According to an invention, the display controlling means in the above-noted two inventions comprises two electrodes sandwiching the light modulating layer therebetween, and the applied voltage to the light modulation layer is controlled by varying the potentials of both of the two electrodes.

According to an independent invention, in a method for driving an image display device comprising a light modulation layer and display controlling means for controlling an optical state of each of pixels in a plane of the light modulation layer in accordance with image input signals, the light modulation layer is a two-variant light modulation layer that takes either a first optical state or a second optical state, and the display controlling means brings the light modulation layer into the first optical state only during a time corresponding to the image input signals within a signal display period and brings the light modulation layer into the second optical state during the remaining time.

According to an independent invention, a method for manufacturing a display device comprises the steps that a plurality of display controlling unit circuits, each having the register, the counter, the comparator and wiring interconnecting therewith as a unit, are produced in pack on a Si substrate; that the display controlling unit circuits produced are separated into each individual display controlling unit circuit; and that the separated display controlling unit circuits are each arranged in place for each pixel (or each partial pixel) of the image display device. Of course, the method includes the step of forming necessary wiring and electrodes, in addition to the steps mentioned above.

According to an independent invention, a method for manufacturing a display device comprises, as is the case with the above-noted invention, the steps that a plurality of display controlling unit circuits, each having the register, the comparator and wiring interconnecting therewith as a unit, are produced in pack on a Si substrate; that the display controlling unit circuits produced in pack are separated into each individual display controlling unit circuit; and that the separated display controlling unit circuits are each arranged for each pixel of the image display device.

According to an invention, the display control unit circuit in the above-noted invention two occurrences back is formed with two or more pixels as a unit. For example, the display control unit is formed by forming four pixels and partial pixels as a unit.

According to an invention, the display control unit circuit in the above-noted invention two occurrences back is formed with two or more pixels as a unit. For example, the display control unit is formed by forming four pixels and partial pixels as a unit.

According to an independent invention, there is provided a display device used for providing a gray scale display of a digital image by use of a display element, in which linearity of $\gamma$ characteristics cannot necessarily be held under a specified condition, such as a low start-up signal region of Grade 1 to Grade 5 or a high start-up signal region of Grade 98 to Grade 100, when luminance is changed from 1 to 100 in a very short time, such as 1 ms. or 1 µs., in a common television broadcast. The display device comprises light batch modulating means for modulating luminance, color, and their related optical states of a bundle of rays, apart from contents of an image, for an entire display surface within a single display period of the image under a prescribed rule corresponding to lapsed time of the related display period, regardless of on a color basis (red, blue, green) or on a white light basis; and two-dimensional light modulation means for modulating the optical states of the bundle of rays, which are eventually related to the display on the display surface, with reference to the contents of the image (signals) on a pixel-to-pixel basis, for the bundle of rays modulated en bloc by the light batch modulating, by using the display element in which the linearity of the $\gamma$ characteristics cannot necessarily be held under a specified condition, so as to fulfill its function beyond the confines of the specified condition and also using the modulation under prescribed rules corresponding to lapsed time of the light from the light batch modulating means.

Accordingly, for example for the case of color display, if the light batch modulating means modulates white light en bloc, the two-dimensional modulating means is provided with a color filter for every color. On the other hand, if the light batch modulating means is timeshared for each elementary color to achieve the batch modulation under the prescribed process steps, the two-dimensional light modulation means is also timeshared to achieve separate modulation of each elementary color for each pixel.

According to an invention, the two-dimensional light modulation means has a subordinate unit light modulation factor waveform selecting means for selecting one light modulation factor waveform from a predetermined plural number of light modulation factor waveforms for each unit section, for separate light modulation. Due to this, or on this condition, the light batch modulating means can brighten with luminance of $2^7$, $2^6$, ... , $2^0$ in order within the unit section.

According to an invention, the pixel comprises a plurality of partial pixels (e.g. 2x2 or 3x3), and the two-dimensional light modulation means has a subordinate partial pixel separately driving means for controlling the partial pixels, separately from the remaining partial pixels, to provide a high gray scale display. Thus, for a low gray scale display, only a part of the pixels can be brightened and for a high gray scale display, all pixels can be brightened.

According to an invention, the above-noted invention two occurrences back is combined with the above-noted invention three occurrences back.

According to an invention, in the above-noted four inventions, the two-dimensional light modulation means has an light transmission control element, such as an optical shutter, for controlling the light from the light batch modulating means by opening (100% transmission) and closing (0% transmission) at each display period of each pixel and further each unit section thereof. Accordingly, the two-dimensional light modulation means may of course include or incorporate therein a semi-switch that permits only 50% of transmission of light.

According to an invention, in the above-noted four inventions, the two-dimensional light modulation means has a reflective angle control type reflection element for receiving and reflecting the light from the light batch modulating means and controlling the light reflecting angle in each display period or each unit section thereof. The reflecting mechanism is not limited to a metal-plated mirror and equivalent, of course.

According to an invention, in the above-noted four inventions, the two-dimensional light modulation means uses liquid crystal to fulfill its function.

According to two inventions, in the above-noted invention, the two-dimensional light modulation means uses a region in which hard shift is caused of the characteristics of the liquid crystal, and further alternation of + and - of a voltage loaded to the two substrates are provided under prescribed rules.

According to an invention, ingeniousness is given for improvement of the display characteristics of the above-noted two inventions.

## BRIEF DESCRIPTION OF THE DRAWINGS

In the drawings:

FIG. 1 is a diagram showing $\gamma$ characteristics of a TN liquid crystal;
FIG. 2 is an illustrating for explaining response of a VA liquid crystal to voltage;
FIG. 3 is a diagram showing $\gamma$ characteristics of the vertically aligned (VA) liquid crystal;
FIG. 4 is a circuit diagram formed on a Si substrate of a reflective liquid crystal light valve;
FIG. 5 is a diagram of waveform for explaining the writing of voltage signal to a pixel electrode in the circuit of FIG. 8;

FIG. 6 is a diagram of timing waveform for explaining the gray scale display provided by prior art;

FIG. 7 is a graph showing a proportionality relation between signals supplied to the display device from outside and brightness;

FIG. 8 is a graph showing an output of a sample panel with respect to the respective voltage waveforms;

FIG. 9 is a diagram for explaining the basic of the gray scale display of luminance of a pixel of the display device as the first embodiment of the present invention;

FIG. 10 is a diagram showing the principle under which the gray scale is obtained with the display of the above-mentioned embodiment;

FIG. 11 is a diagram showing the principle under which the gray scale is obtained in the 1st to 4th embodiments of the present invention;

FIG. 12 is a diagram showing the principle under which the gray scale is obtained in the 1st to 7th embodiments of the present invention;

FIG. 13 is a diagram showing the principle under which the gray scale is obtained in the 1st to 8th embodiments of the present invention;

FIG. 14 is a diagram showing the principle of the case using a laser beam as one example of the 2nd embodiment of the present invention;

FIG. 15 is a block diagram of a device using a light emitting diode and a reflective liquid crystal light valve as the 2nd embodiment of the present invention;

FIG. 16 is a sectional view of a reflective liquid crystal light valve of the 2-1 embodiment of the present invention;

FIG. 17 is a waveform diagram showing the luminance of a light emitting source and the timing of the reflectance in each pixel of the reflective liquid crystal light valve in the above-mentioned embodiment;

FIG. 18 is a waveform diagram for explaining the rising time $\tau_r$ and fall time $\tau_d$ of the liquid crystal in the above-mentioned embodiment;

FIG. 19 is a diagram showing the relation between time variation of reflectance of the liquid crystal and the output when considering the rising time and fall time of the liquid crystal in the above-mentioned embodiment;

FIG. 20 is a circuit diagram formed on the Si substrate of a reflective liquid crystal light valve as the 2-2 embodiment of the present invention;

FIG. 21 is a circuit diagram formed on the Si substrate of a reflective liquid crystal light valve as the 2-3 embodiment of the present invention;

FIG. 22 is a waveform diagram showing the luminance of the light emitting source and the timing of the reflectance in each pixel of the reflective liquid crystal light valve in the above-mentioned embodiment;

FIG. 23 is circuit diagram formed on the Si substrate of a reflective liquid crystal light valve as the 2-4 embodiment of the present invention;

FIG. 24 is circuit diagram formed on the Si substrate of a reflective liquid crystal light valve as the 2-5 embodiment of the present invention;

FIG. 25 is circuit diagram formed on the Si substrate of a reflective liquid crystal light valve as a variant of the above-mentioned embodiment;

FIG. 26 is an illustration for explaining the structure and operation of DMD;

FIG. 27 is a block diagram of the display device using the DMD as the 2-6 embodiment of the present invention;

FIG. 28 is an illustration for explaining the construction of the display device using a rotary filter as the 2-7 embodiment of the present invention and the construction of the rotary filter;

FIG. 29 is a block diagram of a display device using an optical shutter as the 2-8 embodiment of the present invention;

FIG. 30 is a block diagram of the optical shutter using liquid crystal in the above-mentioned embodiment;

FIG. 31 is a block diagram of the display device using a spontaneous light type spatial light modulator element as the 2-9 embodiment of the present invention;

FIG. 32 is a sectional view of the display device using the liquid crystal as the 2-10 embodiment of the present invention;

FIG. 33 is a conceptual diagram of a characteristic measuring instrument of a sample panel of the 3rd embodiment of the present invention;

FIG. 34 is a diagram showing the relation of voltage-transmittance of the VA liquid crystal used in the above-mentioned embodiment;

FIG. 35 is a diagram of a waveform of voltage for driving the sample panel in the above-mentioned embodiment;

FIG. 36 is a graph showing an output of the sample panel in the case where the display pixels are reduced in number in the low gray scale region in the above-mentioned embodiment;

FIG. 37 is a diagram of waveforms of voltages for independently controlling the electric potentials on the Al electrode side and the ITO electrode side of the sample panel of the above-mentioned embodiment;

FIG. 38 is a diagram of waveforms of voltages for driving the liquid crystal panel formed by combination of an active matrix substrate or a SRAM substrate and the VA liquid crystal in the 4th embodiment of the present invention;

FIG. 39 is a diagram showing a pixel structure and a logical circuit of the SRAM substrate in the 5th embodiment of the present invention;

FIG. 40 is a diagram showing one example of a sectional view of a graphic display device in the 6th embodiment of the present invention;

FIG. 41 is a plan view of a circuit of display control means of the graphic display device of the above-mentioned embodiment;

FIG. 42 is a diagram showing the timing of a variety of driving signals of the graphic display device of the above-mentioned embodiment;

FIG. 43 is a diagram showing the timing of the output of a coefficient unit, a register and a comparator of the graphic display device of the above-mentioned embodiment;

FIG. 44 is a diagram for explaining a mechanism of generation of reversal of gray scale in the prior art;

FIG. 45 is a circuit diagram of the display control means of the graphic display device as the 7th embodiment of the present invention;

FIG. 46 is a circuit diagram of the display control means of the graphic display device as the 8th embodiment of the present invention;

FIG. 47 is a diagram showing the timing of the output of the counter, the register and the comparator;

FIG. 48 is a diagram showing the timing of the output of the counter, the register and the comparator;

FIG. 49 is a diagram showing a XOR (exclusive OR) gate provided between the coefficient unit and the pixel electrode;

FIG. 50 is a diagram showing a method of manufacturing the graphic display device of the present invention;

FIG. 51 is a diagram showing another method of manufacturing the graphic display device of the present invention;

FIG. 52 is a diagram showing a projection display using a liquid crystal film sheet doubling as a two-dimensional light modulation means of the present invention;

FIG. 53 is a diagram showing a construction of a principal part of the above-mentioned embodiment;

FIG. 54 is a diagram showing the use of a micro display as a portable projection display; and

FIG. 55 is a diagram showing the outline of the process steps for converting an analog image into a digital gray scale for the display of digital image in some embodiments of the present invention.

(Description of reference numerals)

| | |
|---|---|
| 10 | Observer |
| 11 | Photo detector |
| 100 | Substrate (Opposite substrate) |
| 102 | Transparent electrode |
| 104 | Pixel electrode |
| 105 | Light blocking layer |
| 106 | Signal wire |
| 107 | Innerlayer insulating layer |
| 108 | Drain |
| 109 | Gate |
| 110 | Source |
| 111 | Pixel switching element, MOS transistor |
| 112 | Si substrate |
| 121 | Scanning line |
| 122 | Bistable element |
| 123 | Memory circuit |
| 124 | Liquid crystal write switching element |
| 125 | Batch writing line |
| 126 | Batch erasing line |
| 127 | Batch erasing switching element |
| 128 | Clock signal wire |
| 132 | First register |
| 133 | Second register |
| 134 | Comparator |
| 135 | Counter |

| 150 | Si substrate |
| --- | --- |
| 151 | Monocrystal Si semiconductor substrate |
| 200 | Opposite substrate |
| 206 | Sample panel, Pixel |
| 207 | Driving power |
| 212 | Switch |
| 213 | Display-controlling unit circuit |
| 2131 | Display-controlling unit circuit (2 pixels of the same) |
| 2132 | Display-controlling unit circuit (4 pixels of the same) |
| 300 | Liquid crystal molecules, Liquid crystal layer |
| 400 | Light batch modulating means |
| 401 | Light source (Light emitting diode) |
| 401, 401r, g, b | LED (Light emitting diode) |
| 402 | Light emission luminance control circuit |
| 403 | Light source (certain luminance) |
| 404 | Infrared laser beam |
| 405 | Non-linear optical element |
| 406 | Polarization turning element |
| 41 | Filter |
| 410 | Rotary filter |
| 411 | Central axis |
| 412 | Optical shutter |
| 413 | Transparent substrate |
| 4131 | Transparent substrate |
| 4132 | Transparent substrate |
| 414 | Transparent electrode |
| 4141 | Transparent electrode |
| 4142 | Transparent electrode |
| 415 | Liquid crystal |
| 416 | Drive power source |
| 417 | Polarizing film |
| 4171 | Polarizing film |
| 4172 | Polarizing film |
| 45 | Beam polarizing splitter |
| 450 | Bundle of batch-modulated rays |
| 500 | Two-dimensional light modulation means |
| 501 | Reflective liquid crystal light valve |
| 502 | Spontaneous light type spatial light modulator element |
| 5131 | Transparent substrate |
| 5132 | Transparent substrate |
| 5141 | Transparent electrode |
| 5142 | Transparent electrode |
| 5172 | Polarizing film |
| 530 | Light valve drive circuit |
| 541 | DMD |
| 540 | DMD drive circuit |
| 550 | Bundle of separately-modulated-and-output rays |
| 552 | Micro miller |
| 554 | Transmitted light |
| 60 | Lens |
| 61 | Projection lens |
| 70 | Screen |

## DESCRIPTION OF THE PREFERRED EMBODIMENTS

The present invention will be described with reference to embodiments and illustrative examples.

(First embodiment)

As the present invention relates to a relatively new technology, the description on the principles of the underlying gray scale display will be given first, prior to the concrete description on the entirety of the display device as an embodiment of the invention.

(Example 1-1)

(It is to be noted here that "1-1" means a first example of the first embodiment. It follows from this that "2-2" means a second example of the second embodiment.)

This example is an example using a two-valued logic (or an example using a digital gray scale display according to the binary number).

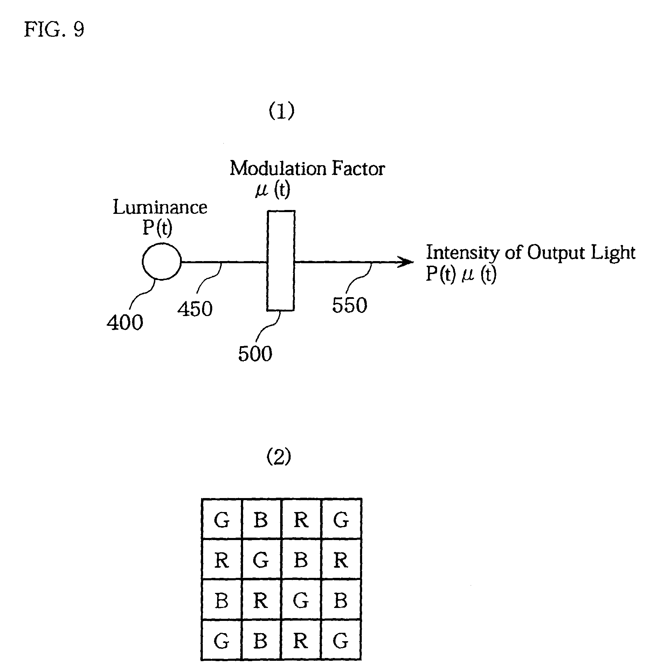

Now, as an example of this, let us consider the optical system as shown in FIG. 9(1) in which light 450 from a light batch modulating means 400 is output 550 through a two-dimensional light modulation means 500. The light batch modulating means is intended to mean a light projecting object that can en bloc modulate the total intensity of a bundle of rays over the substantially entire display surface as a function of time t and output it. Specifically, cited as examples are the one, such as a laser and a light emitting diode, that can be electrically controlled to vary the luminance and the one in which an object variable in transmittance is placed before a light source of constant luminance so that the intensity of the transmitted light can be controlled.

The two-dimensional light modulation means is intended to mean an object that can secondarily or two-dimensionally modulate the bundle of rays projected from the light batch modulating means (which is called a bundle of batch-modulated rays 450) as a function of time t for each section or for each of the pixels arrayed in the display surface and output it. Cited as the most typical example is a liquid crystal panel and equivalent. The light transmitted through the two-dimensional light modulation means (which is called a bundle of separately-modulated-and-output rays 550) ends up as an image or a series of successively varied images to be successively displayed and thus it is observed as the light of individual pixels of an action/movement recognizable image. Accordingly, in the two-dimensional light modulation means 500 (or respective elements forming this means) of the actual display device, the display element (or rather, the main component part of the display device) includes specified color pixels which are arrayed vertically and horizontally (e.g. in the case of mosaic) in many rows and columns in accordance with the pixels, as shown in FIG. 9(2). The color pixels are sometimes arrayed in plane layers (multilayered) along the light travelling direction, depend on the types of the display devices, such as G. H. cell type display device and super fine display device.

In general, a moving image or an image is produced by a series of successively varied, static images being displayed successively. The time by which each one of the static images is displayed is called a single display period (which is also called a single frame or a single field). The intensity of the output light of the light batch modulating means and the modulation factor of the light intensity of a certain part of the two-dimensional light modulation means, such as a certain pixel, are expressed by $P(t)$ and $\mu(t)$, respectively, supposing that both of them vary within the single display period as a function of time. Then, the intensity of a certain part of the bundle of separately-modulated-and-output rays can be expressed by $CP(t)\,\mu(t)$ (C is a certain constant).

Now, supposing that the single display period is divided into the N number of unit sections of equal intervals (N is an integer of 2 or more) and letting the time interval of each display period be T, the interval of the each unit section is given by T/N. Then, supposing that in the k-th unit section $I_k$ (where k is an integer that can satisfy $0\leqq k\leqq N-1$)(the $I_k$ is not necessarily lined in the ascending sequence or descending sequence in time series with respect to k.), intensity of the output light of the light batch modulating means 400 is expressed by $P_0 2^k$ ($P_0$ is a certain constant) and the modulation factor of the light intensity of the two-dimensional light modulation means 500 is taken to have either zero (equivalent to the OFF state) or a finite value $\mu_0$ (equivalent to the ON state). In other words, it can be expressed by the following equation (Equation 4).

$$【\text{Equation 4}】$$

$$\text{Where } t \in I_k\ , P(t) = P_0 2^k,\ \mu(t) = \mu_0 b_k$$

$$(k = 0, 1, \cdots, N-1)$$

where $b_k$ is a value to express the state of the two-dimensional light modulation means, the state in which the modulation factor of the light intensity is zero is expressed by $b_k=0$, and the state in which the modulation factor of the light intensity is a finite value $\mu_0$ is expressed by $b_k=1$. It follows that the modulation factor of the light intensity (or gray scale of luminance) has $2^N$ patterns in the single display period, which can be assigned to a binary number of $[b_{N-1}, b_{N-2}, b_{N-3}, ... b_1, b_0]$. Then, the total output light energy E in the single display period is calculated as the time integration of $CP(t)\mu(t)$ using the following Equation 5, and it follows that it is very proportional to the binary number $[b_{N-1}, b_{N-2}, b_{N-3}, ... b_1, b_0]$, as is the case with Equation 3 of the prior art.

【Equation 5】

$$E = \int_0^T CP(t)\mu(t)dt = \sum_{k=0}^{N-1} \int_{I_k} CP(t)\mu(t)dt =$$
$$= \frac{CP_0\mu_0 T}{N} \sum_{k=0}^{N-1} 2^k b_k$$

From the foregoing, it can be seen that $2^N$ gray scales are realized.

In this case, if the modulation factors P(t) of the intensity of the output light of the light batch modulating means are equaled for every unit section in each display period and only the signals $[b_{N-1}, b_{N-2}, b_{N-3}, b_1, b_0]$ of the modulation factor of the light intensity of the two-dimensional light modulation means are varied in accordance with the gray scale of the image, the moving image having gray scale for every display period can be obtained.

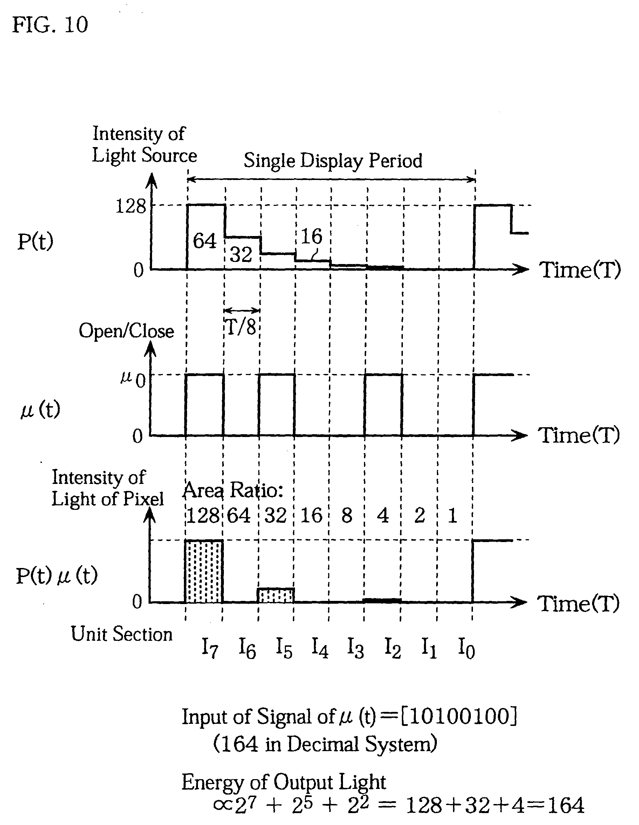

Shown in FIG. 10 is an example of the time variations of P(t), $\mu(t)$ and P(t) $\mu(t)$ for the case of N=8. Shown in the top of the diagram is the intensity of the output light of the light batch modulating means in the unit sections. Shown in the middle of the diagram is $b_k=1$ or 0, in other words, ON or OFF state (open or close), of light transmission of the two-dimensional light modulation means. Shown in the bottom of the diagram is the total hatched area of P(t) $\mu(t)$ which is the output light energy corresponding to the pattern of $\mu(t)$, which is expressed in the form of 164 (gray scales) in a decimal system. The axes of ordinate of the same diagram have arbitrary units.

The relation between the output light energy and the binary number $[b_7 b_6 b_5 b_4 b_3 b_2 b_1 b_0]$ is represented with an exact linearity, as shown in the graph of FIG. 7, as is the case with the prior art.

In the prior art, the minimum interval of the unit section is in the order of $T/2^N$, whereas, in the present invention, the minimum interval of the unit section is T/N. Thus, the present invention can provide a considerably large value, as compared with the prior art. For example, letting N=8 or 256 gray scale levels, the prior art takes T=16.7msec at the frame frequency of 60Hz and, thus, the minimum interval of the each unit section is $T/256 \fallingdotseq 65\mu sec$. In contrast to this, this Example takes $T/8 \fallingdotseq 2msec$. Therefore, for example when liquid crystal is used as the two-dimensional light modulation means, the liquid crystal can provide adequate gray scale display, even if the response speed is in the order of several msec (preferably, in the order of tens of $10\mu sec$ to 2msec, of course).

(Example 1-2)

This example is an example using a somewhat generalized two-valued logic of the above-mentioned Example 1-1.

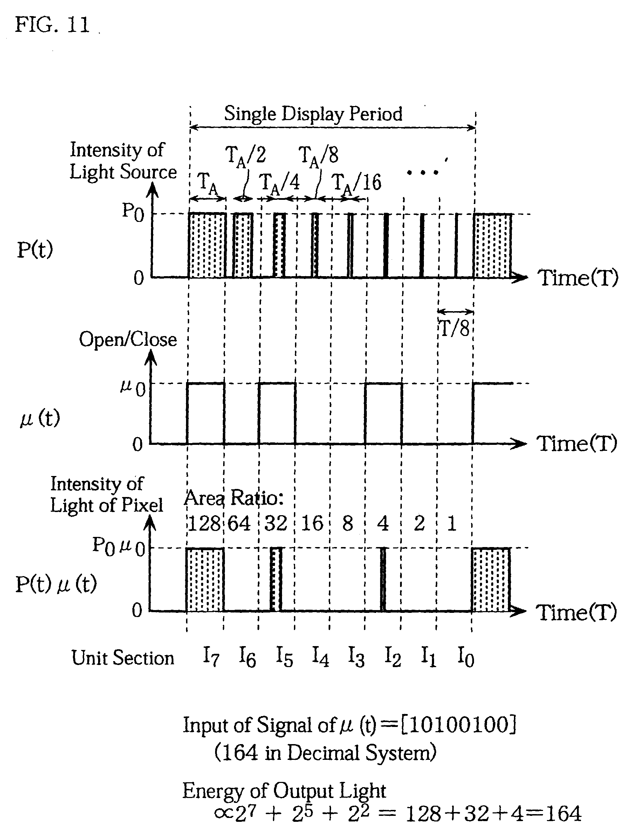

This example uses a similar optical system to that of the above-mentioned example 1-1 using the two-valued logic. Although the output light of the light batch modulating means 400 used as the light source has a constant intense in each unit section, as shown in the top of FIG. 11, the light intensity in an angular unit section itself varies inversely as 2.

Now, the intensity of the output light of the light batch modulating means in the unit section $I_k$ is taken as $P_k(t)$ (in the generalized case, the unit section is not necessarily equal in interval (width)). Also, in this unit section the two-dimensional light modulation means is supposed to have $M_k$ patterns of time variation of the modulation factor $\mu(t)$ of the light intensity of the two-dimensional light modulation means (each pattern is called a unit light modulation factor waveform)($M_k$ is an integer of 2 or more, except $M_k$ of 2 of FIG. 11). They are expressed by $\mu_k$ and $m_k(t)$, respectively ($m_k$ is an integer that can satisfy $0 \leq mk \leq Mk-1$). It is also supposed that one waveform of $\mu(t)$ in the single display period is selected from $M_k$ patterns of unit light modulation factor waveforms in each unit section. This means that when viewing the single display period as a whole, the waveform of $\mu(t)$ has L patterns in total as expressed by the following Equation 6. The waveform of $\mu(t)$ is then expressed by a group of N integers of $[m_{N-1}, m_{N-2}, m_{N-3}, ... m_1, m_0]$.

【Equation 6】

$$L = \prod_{k=0}^{N-1} M_k$$

Where the light output energy corresponding to the waveform $\mu_k$, $m_k$ (t) in the unit section $I_k$ is expressed by $E_k(m_k)$, it follows Equation 7 and the total light output energy $E[m_{N-1}, m_{N-2}, m_{N-3}, \ldots m_1, m_0]$ in the single display period is expressed by the following Equation 8. C in the Equation 7 is a certain constant as noted above.

【Equation 7】

$$E_k(m_k) = C \int_{I_k} P_k(t) \mu_{k, m_k}(t) dt \quad .$$

【Equation 8】

$$E[m_{N-1} \; m_{N-2} \; m_{N-3} \cdots m_1 \; m_0] = \sum_{k=0}^{N-1} E_k(m_k)$$

This indicates that the output energy that is determined by Equation 8 in accordance with the signals $[m_{N-1}, m_{N-2}, m_{N-3}, \ldots m_1, m_0]$ fed to the two-dimensional light modulation means can be obtained.

Now, supposing that the $E_k(m_k)$ in particular is numbered in the ascending sequence with respect to $m_k$ in the unit section $I_k$ (the generality will then not be lost), let us consider the cases having the relations expressed by Equation 1 and Equation 9.

【Equation 1】

$$T_{0N} \propto \sum_{k=0}^{7} 2^k b_k$$

【Equation 9】

$$E_k(m_k) = \varepsilon_k \times m_k$$
$$(k=0, 1, \cdots, N-2, \quad m_k = 0, 1, \cdots, M_k - 1)$$

where $\varepsilon_k$ is a certain constant that is determined by k. Equation 9 shows that in the unit section $I_k$, the respective levels are arrayed in linear in proportion as the integer $m_k$. Equation 1 shows that the energy increases by $M_k$-fold with each increase of k. As a matter of fact, this fact can be understood from the relationship equation of Equation 10 obtained when Equation 9 is substituted into Equation 1.

【Equation 10】

$$\varepsilon_{k+1} \diagup \varepsilon_k = M_k$$

From Equation 10 it follows that $\varepsilon_k$ is decreasingly given by the following Equation 11 (k=1, 2, ..., N-1).

【Equation 11】

$$\varepsilon_k = \varepsilon_0 \prod_{h=0}^{k-1} M_h$$

Then, E of Equation 8 is given by the following Equation 12.

【Equation 12】

$$E[m_{N-1}\ m_{N-2}\ m_{N-3}\ \cdots\ m_1\ m_0] = \sum_{k=0}^{N-1} \varepsilon_k m_k$$

Equations 11 and 12 show that the gray scale of the number of levels given by Equation 6 is obtained. This fact will be explained here by taking a simple case as an example.

Now, for example when letting N=3; considering the unit sections $I_0$, $I_1$ and $I_2$; and letting the number of unit modulation factor waveforms belonging to their respective unit sections be $M_0$=2, $M_1$=4 and $M_2$=3, the signal waveforms in the unit sections are given by $m_0$=0, 1 ($\mu_{0,0}(t)$ and $\mu_{0,1}(t)$) in $I_0$, $m_1$=0, 1, 2, 3 ($\mu_{1,0}(t)$, $\mu_{1,1}(t)$, $\mu_{1,2}(t)$ and $\mu_{1,3}(t)$,) in $I_1$, and $m_2$=0, 1, 2 ($\mu_{2,0}(t)$, $\mu_{2,1}(t)$, and $\mu_{2,2}(t)$) in $I_2$. Then, the number of waveforms of $\mu(t)$ or the number of signals given from external is given L=2 $\times$ 4 $\times$ 3=24 by Equation 6. Since $\varepsilon_1$=2$\varepsilon_0$ and $\varepsilon_2$=8$\varepsilon_0$ are given by Equation 11, Equation 12 can be rewritten as in Equation 13.

【Equation 13】

$$E_k[m_2 m_1 m_0] = (8m_2 + 2m_1 + m_0)\varepsilon_0$$

Now, the values of Equation 13 calculated for all the groups of 24 patterns of $[m_2, m_1, m_0]$ are shown in TABLE 1.

[TABLE 1]

| $m_2$ | $m_1$ | $m_0$ | $E / \varepsilon_0$ |
|---|---|---|---|
| 0 | 0 | 0 | 0 |
| 0 | 0 | 1 | 1 |
| 0 | 1 | 0 | 2 |
| 0 | 1 | 1 | 3 |
| 0 | 2 | 0 | 4 |
| 0 | 2 | 1 | 5 |
| 0 | 3 | 0 | 6 |
| 0 | 3 | 1 | 7 |
| 1 | 0 | 0 | 8 |
| 1 | 0 | 1 | 9 |
| 1 | 1 | 0 | 10 |
| 1 | 1 | 1 | 11 |
| 1 | 2 | 0 | 12 |
| 1 | 2 | 1 | 13 |
| 1 | 3 | 0 | 14 |
| 1 | 3 | 1 | 15 |
| 2 | 0 | 0 | 16 |
| 2 | 0 | 1 | 17 |
| 2 | 1 | 0 | 18 |
| 2 | 1 | 1 | 19 |
| 2 | 2 | 0 | 20 |
| 2 | 2 | 1 | 21 |
| 2 | 3 | 0 | 22 |
| 2 | 3 | 1 | 23 |

$$E[m_2 m_1 m_0] = (8m_2 + 2m_1 + m_0) \, \varepsilon_0$$

This shows that $E/\varepsilon_0$ takes all integers from 0 to 23, from which it can be seen that 24 gray scales of regular intervals can be obtained depending on the way of taking $[m_2, m_1, m_0]$.

It is shown that the gray scale of the regular intervals can be obtained regardless of the way of taking N and $M_k$, which does not apply only to the above example.

Incidentally, if the time intervals of the unit section $I_k$ are equal for all k's; the values of $M_k$ are also equal (which are taken as M); and the sets of unit light modulation factor waveforms belonging to that unit section are equal, then Equations 11 and 12 will be nothing but numeric representations in M-al number systems. As a matter of fact, when the two-dimensional light modulation, means is designed to be driven with the specific pattern that the exact same process (i.e., the process that one unit light modulation factor waveform is selected and taken from a fixed set of unit light modulation factor waveforms) is repeatedly performed, the circuit can be simplified, thus presenting realistic possibility. Among others, for the case of M=2, that will be equivalent to the binary system and thus optimum for the digital signal processing under the two-valued logic. This case is just equivalent to the aforesaid example using the two-valued logic.

(Example 1-3)

This example is an example using the light output waveform of the light batch modulating means.

$P_k(t)$ and $\mu(k)$, $m_k(t)$ appearing in the $E_k(m_k)$ of Equation 7 of the above-noted Example must satisfy Equations 1 and 9. For the case of M=2, they can for example be written as in Equation 14 (the respective $I_k$ are equal in interval, which is nothing but Equation 4 of the case using the two-valued logic).

## 【Equation 14】

For t that satisfies $t \in I_k$,

$P_k(t) = P_0 2^k$    (A Fixed Value in Unit Section $I_k$)

$\mu_{k,\,mk}(t) = \mu_k\, m_k$    (A Fixed Value in

Unit Section $I_{k,}$ $m_k = 0$ or 1)

(Example 1-4)

This example is also an example using the light output waveform of the light batch modulating means.

A pulse waveform can be used as one possible way of assigning $P_k(t)$ in the respective unit sections. For example, when the start time of the unit section $I_k$ is taken as $t_{k1}$ and the end time of the same is taken as $t_{k2}$ (the unit section $I_k$ is expressed by $t_{k1} \leqq t \leqq t_{k2}$), they can be written as in Equation 15 (letting M=2), considering the time $t_{kA}$ and time interval $T_A$ to satisfy $t_{k1} \leqq t_{kA} < t_{KA} \leqq t_{KA} + T_A \leqq t_{k2}$. In other words, only a part of the time interval $2^k/2^N \times T_A$ of the unit section $I_k$ has the intensity of $P_0$.

## 【Equation 15】

For t that satisfies $t \in I_k$,

$P_k(t) = P_0$    $(t_{kA} \leqq t \leqq t_{kA} + (2^k / 2^N)T_A)$

       $0$    $(t_{k1} \leqq t \leqq t_{kA},\ t_{kA} + (2^k / 2^N)T_A <$

$t \leqq t_{k2})$

$\mu_{k,\,mk}(t) = \mu_0\, m_k$    (A Fixed Value in

Unit Section $I_{k,}$ $m_k = 0$ or 1)

where $P_0$ is a certain constant. This corresponds to a rectangular pulse wave that takes a certain finite value only at the time that is in proportion to $2^k$ in the unit section $I_k$ and takes zero at all times but that time. This can satisfy Equations 1 and 9. Shown in FIG. 11 is an example for the case of N=8. It is shown that the continuous time of the pulse waveform is reduced to 1/2 at each unit section. In this mode, the light batch modulating means is also controlled on a binary basis, so this example is suitable for the digital signal processing. If the light batch modulating means has binary stability in itself, then this mode is of preferable.

The pulse waveform is not necessarily limited to the rectangular pulse waveform, in so far as they satisfy Equations 1 and 9. The pulse waveforms include, for example, triangular waveform, serrate waveform, sinusoidal waveform, Gaussian distribution waveform, Lorentz distribution waveform, sinc type waveform, exp type waveform or very sharp impulse waveform.

(Example 1-5)

This example is also an example using the light output waveform of the light batch modulating means.

It can be used as another possible way of assigning $P_k(t)$ that $P_k(t)$ is taken to vary in increments of a certain basic waveform and the unit section $I_k$ is made to include the basic waveform units by the number proportional to $2^k$. The preferable basic waveforms include rectangular pulse waveform, triangular waveform, serrate waveform, sinusoidal waveform, Gaussian distribution waveform, Lorentz distribution waveform, sinc type waveform, exp type waveform or very sharp impulse waveform.

(Example 1-6)

This example is also an example using the light output waveform of the light batch modulating means.
The way of assigning $P_k(t)$ in series throughout the respective unit sections by use of exponential function (of increasing type) can also be used as a further possible way of assigning $P_k(t)$. For example, N unit sections are supposed to have an equal interval T/N and the unit sections $I_k$ (k=0, 1, ... N-1) are expressed by the time range of $(k/N)T \leq t \leq [(k+1)/N]T$ (the respective unit sections $I_k$ are lined in the in the ascending sequence with respect to the time t). Then, the $P_k(t)$ is written as in Equation 16.

【Equation 16】

$$P_k(t) = P_0 \exp(t / \tau)$$
$$\tau = (T/N) / \ell n\, 2 \quad (\ell\, n \text{ is Natural Logarithm})$$
$$\mu_{k,\, mk}((t) = \mu_0\, m_k \quad \begin{array}{l}\text{(A Fixed Value in}\\ \text{Unit Section } I_{k,}\, m_k = 0 \text{ or 1)}\end{array}$$

where $P_0$ is a certain constant and 1n represents natural logarithm. In practice, when calculation is performed by substituting Equation 16 into Equation 7, the equation of Equation 17 is obtained, from which it can be seen that it satisfies Equations 1 and 9.

【Equation 17】

$$E_k(m_k) = C \mu_0 P_0 \tau \times 2^k m_k$$

(Example 1-7)

This example is also an example using the light output waveform of the light batch modulating means.
The way of assigning $P_k(t)$ by use of a decreasing exponential function, which is opposite to that of the above-noted case, can also be used as a still further possible way of assigning $P_k(t)$. For example, N unit sections are all supposed to have an equal interval T/N and the unit sections $I_k$ (k=0, 1, ... N-1) are expressed by the time range $[(N-k-1)/N]T \leq t \leq [(N-k)/N]T$ (the respective unit sections $I_k$ are arrayed in the in the descending sequence with respect to the time t). Then, the $P_k(t)$ is written as in Equation 18.

【Equation 18】

$$P_k(t) = P_0 \exp(-t / \tau)$$
$$\tau = (T/N) / \ell n\, 2 \quad (\ell\, n \text{ is Natural Logarithm})$$
$$\mu_{k,\, mk}(t) = \mu_0\, m_k \quad \begin{array}{l}\text{(A Fixed Value in}\\ \text{Unit Section } I_{k,}\, m_k = 0 \text{ or 1)}\end{array}$$

where $P_0$ is a certain constant. In practice, when calculation is performed by substituting Equation 18 into Equation 7, the equation of Equation 19 is obtained, from which it can be seen that it satisfies Equations 1 and 9.

〔Equation 19〕

$$E_k(m_k) = C\mu_0 P_0 \tau / 2^N \times 2^k m_k$$

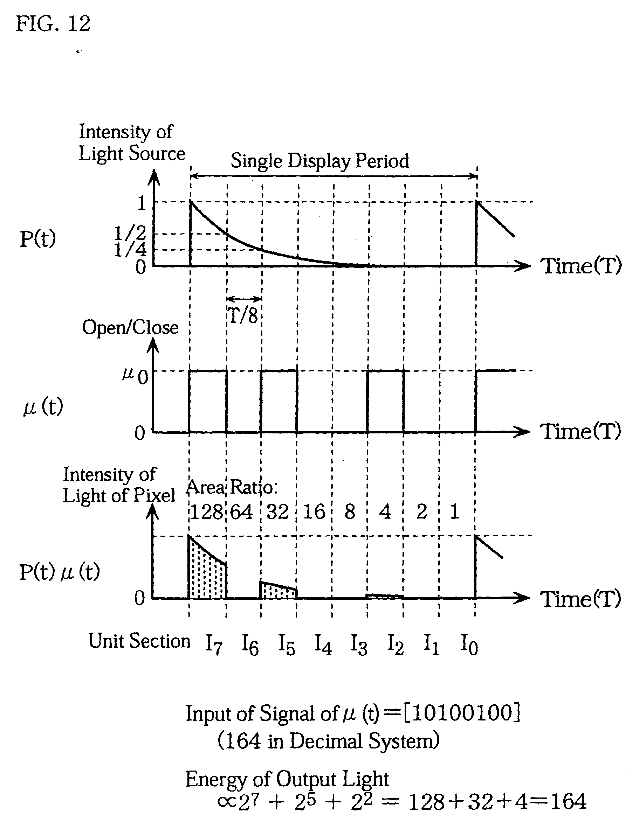

Shown in FIG. 12 is the variation of P(t) and μ(t) in this mode (an example for the case of N=8). For luminescent material or electro-luminescent material used for CRT (cathode ray tube) or for luminescence originating from electric discharge from a condenser or like phenomenon, variation of the intensity $P_k(t)$ of the light source is virtually expressed in the form of Equation 18, so that this way is effective for those materials. Reduction of the light intensity from a specified daylight luminance to even zero in the single display period can be effected by adjusting an applied voltage and a capacity of the light source. Further, for the so-called hold type display device, a black display part (interval) can be inserted in between its respective display periods as a countermeasure to deterioration of sharpness of a moving image due to integration effect. Length of the black display part may be adjusted to take measures to the attenuation of light. It is noted that the meanings and contents of the middle and bottom of the same diagram are the same as those of FIGS. 10 and 11.

In addition, in Equation 16 of the above-noted Example 1-6, the luminance of FIG. 12 is symmetric with respect to time base (it increases with time).

(Example 1-8)

This example is also an example using the light output waveform of the light batch modulating means.

It is also possible, of course, that the way of rendering the intervals of the unit sections generally equal as mentioned above to vary the light intensity modulation factor of the light batch modulating means can be used in combination with the way of varying the intervals of the unit sections as in the prior art. For example, supposing that the N number of unit sections are included in the single display period; the $N_1$ number of unit sections are subjected to the latter modulation (which are called the unit sections of the first kind) ($N_1$ is an integer that satisfies $1 \leqq N_1 \leqq N-1$); and the N- $N_1$ number of unit sections are subjected to the former modulation (which are called the unit sections of the second kind). Then, the light intensity modulation factor of the light batch modulating means are made regular in the unit sections of the first kind so that the intervals of the unit sections can be in proportion as $2^k$, while also the light intensity modulation factor of the light batch modulating means are made to vary with time in the unit sections of the second kind. It is then preferable that the N- $N_1$ unit sections of the second kind are made equal in interval and the set of the unit light modulation factor waveforms used are also made equal. Then, the overall unit sections of the first and second kinds are made to satisfy Equations 1 and 9 when $E_k(m_k)$ of Equation 7 is calculated.

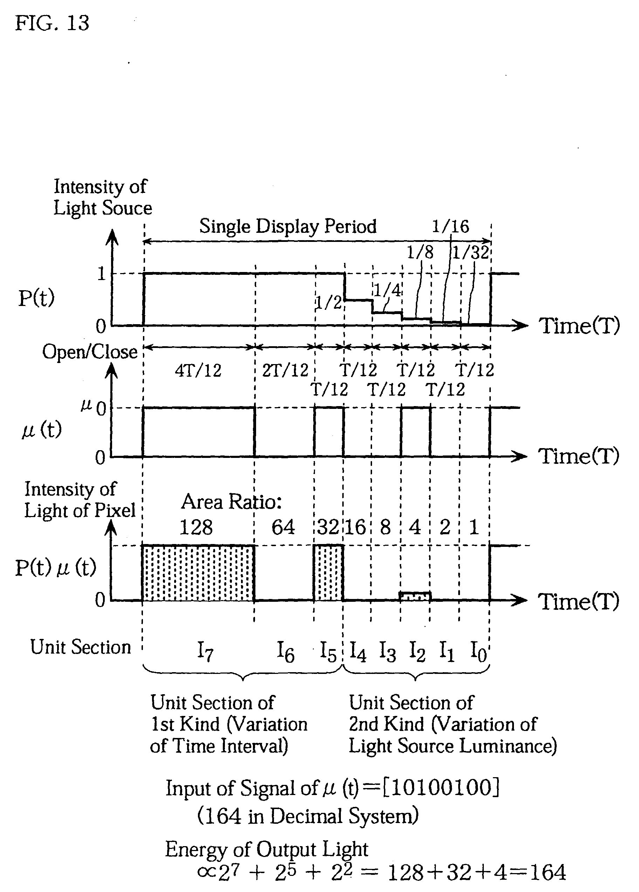

Shown in the top, middle and bottom of FIG. 13 are examples of the time variations of P(t), μ(t) and P(t) μ(t) in each display period when this mode is used. These are the examples for the case of M=2, N=8 and $N_1$=3. The section intervals are in the ratios 4:2:1 in the unit sections of the first kind; the section intervals are all made equal in the unit sections of the second kind; and only the light intensity modulation factors of the light batch modulating means are made to vary in proportion as the powers of 2. Thus, 256 gray scales are obtained as a whole. In the bottom of the diagram 164 appears in a decimal system.

(Second Embodiment)

This embodiment is a complement of the aforesaid first embodiment (on the principle of the present invention).

In the description so far, the light batch modulating means and the two-dimensional light modulation means both use the modulation under light intensity. These are unnecessarily limited to the use of the modulation of intensity. Other suitable means may be used, including modulation of light polarization condition, modulation of polarizing direction, phase modulation, frequency modulation (including modulation of wavelength spectrum distribution) and modulation of optical coherence or quantum mechanical coherence under a future technical development. Or, for example for a laser beam or equivalent, change of light oscillation mode may be used. In short, it is important that Equation 1 or Equation 9 is satisfied as light energy (brightness) at the stage at which light is eventually observed as a screen image or a pictorial image.

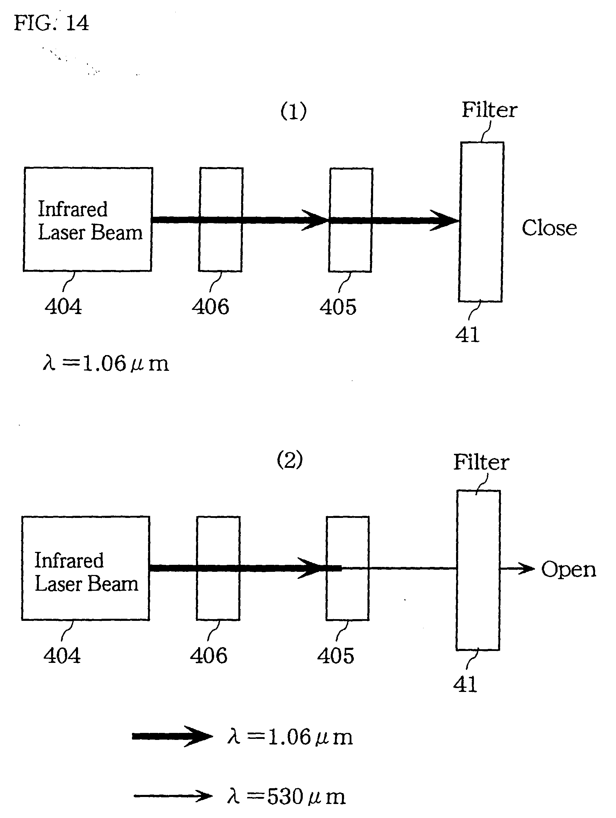

For example, the case shown in FIG. 14, in which an infrared laser 404 that oscillates at a wavelength of 1.06μm is used as a light source and a non-linear optical element 405 used as the light batch modulating means and is mechanically turned (vibrated) to adjust the phase matching condition so as to control presence or absence of generation of secondary harmonic of the wavelength 530nm, is a sort of the modulation of wavelength spectrum distribution as mentioned above. When the laser beam is made to pass through an infrared rays cut filter 41 after passing through the non-linear optical element, the P(t) can be obtained in the form of ON/OFF of light of 530nm. Shown in (1) of the same diagram is the case where the phase matching condition is not satisfied. Shown in (2) of the same diagram is the case where the phase matching condition is satisfied due to the crystal axis and the light travelling direction making a specified angle and the light of wavelength of 530nm is in the ON state. 406 designates a polarization turning element.

For example when liquid crystal is used as the two-dimensional light modulation means, although the liquid crystal itself presents the modulation of light polarization condition when viewing only the liquid crystal (except a dichroic liquid crystal and a polymer dispersed liquid crystal of scattering mode), since the liquid crystal is usually used in combination with a light polarizer, an analyzer or a beam polarizing splitter, such modulation of the light polarization condition can be considered as intensity modulation.

While in the system shown in FIG. 9 the light intensity is modulated by varying the transmittance when light transmits through the two-dimensional light modulation means 500, the light intensity may be modulated by using other proper means, such as reflectance and diffraction efficiency. Further, modulation of diffraction efficiency using, for example, an acousto-optic effect and a photo-refractive effect is also conceivable. In the following, the concrete construction examples of this Embodiment will be discussed.

(Example 2-1)

This example relates to the construction and operation of the display device.

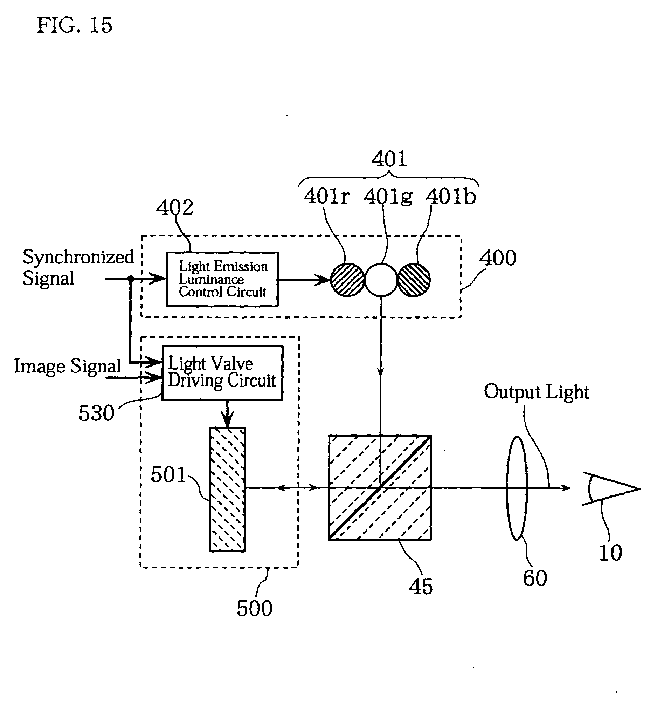

Shown in FIG. 15 is a construction example focusing on the principle of the display device of this Embodiment. This is the construction of a micro display in which a bundle of rays, emitted from light emitting diodes 401r, 401g and 401b that emit light in red, green and blue, is reflected by the beam polarizing splitter 45 and then is incident on a reflective liquid crystal light valve 501, so that the reflected light is allowed to pass through the beam polarizing splitter 45 again and is magnified by a lens 60 before reaching an observer 10 (Thus, the observer 10 observes an image of the reflective liquid crystal light valve 501).

The beam polarizing splitter 45 permits only S polarized light components (polarized light components vertical to paper) of the light emitted from the light emitting diodes 401r, 401g, 401b to reflect on it and also permits P polarized light components (polarized light components parallel to paper) to pass through it. Thus, the light incident on the reflective liquid crystal light valve 501 is only the S polarized light components. The reflective liquid crystal light valve 501 is a sort of active type space light modulation element (which does not emit light by itself but enables an optical condition of the light input from the external to be modulated for each point on a plane). It is so designed that the polarization condition of the incident light is modulated under picture signals for each of the pixels arrayed on a plane, and only the P polarized light components of the incident light converted are allowed to pass through the beam polarizing splitter 45 again and further pass through the lens 60 so that a magnified image is observed.

With this construction, the picture signals and the concomitant synchronized signals are supplied from external. The picture signals are sent to the reflective liquid crystal light valve 501 and the synchronized signals are supplied to a light valve drive circuit 530 for driving the reflective liquid crystal light valve and to a light emission luminance control circuit 402 for controlling the luminance of the light emitting diodes 401r, 401g, 401b.

In this system, the combination of the light emitting diode 401 and the light emission luminance control circuit 402 can be regarded as the light batch modulating means 400, and the combination of the reflective liquid crystal light valve 501 and a light valve drive circuit 530 can be regarded as the two-dimensional light modulation means 500.

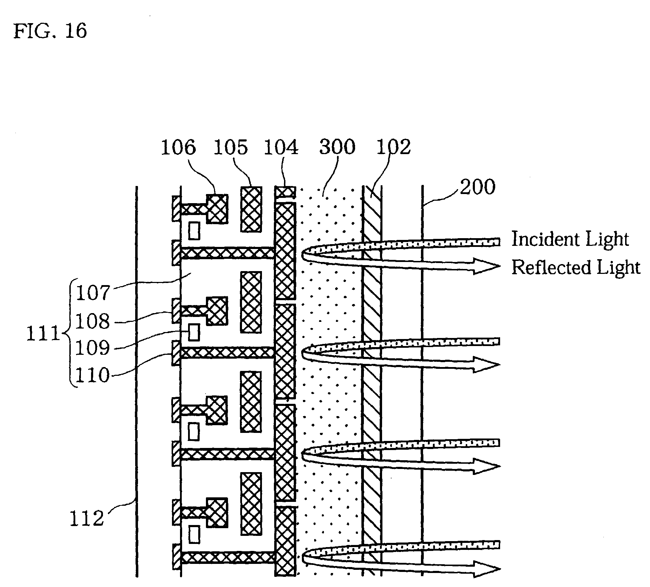

In the following, the reflective liquid crystal light valve will be described in some detail. Referring to FIG. 16, which shows a sectional view of the same, the reflective liquid crystal light valve has the structure in which a liquid crystal layer 300 having VA (vertical aligned) liquid crystal as the main component is sandwiched between an opposite substrate 200 made of glass, plastics, quartz and the like and forming thereon a transparent electrode 102 of ITO (indium tin oxide), ZnO and the like and a Si substrate 112 (which is equivalent to the second substrate) incorporating in its surface matrix-like (grid-like) MOS transistors 111, pixel electrodes 104 and light blocking layers 105 or inner layer insulating layers 107.

The MOS transistors 111 and others incorporated in the Si substrate 112 has, as shown in FIG. 4, the circuitry in which scanning lines 121 and signal wires 106 are arrayed in a matrix form and the MOS transistors 111 are located near the intersecting points. Gates 109 of the MOS transistors 111 are connected to the scanning lines 121; drains 108 are connected to the signal wires 106; and sources 110 are connected to the pixel electrodes 104.

Under this structure, the voltage signals can be written in the pixels in a series of processes as mentioned in the column of Prior Art.

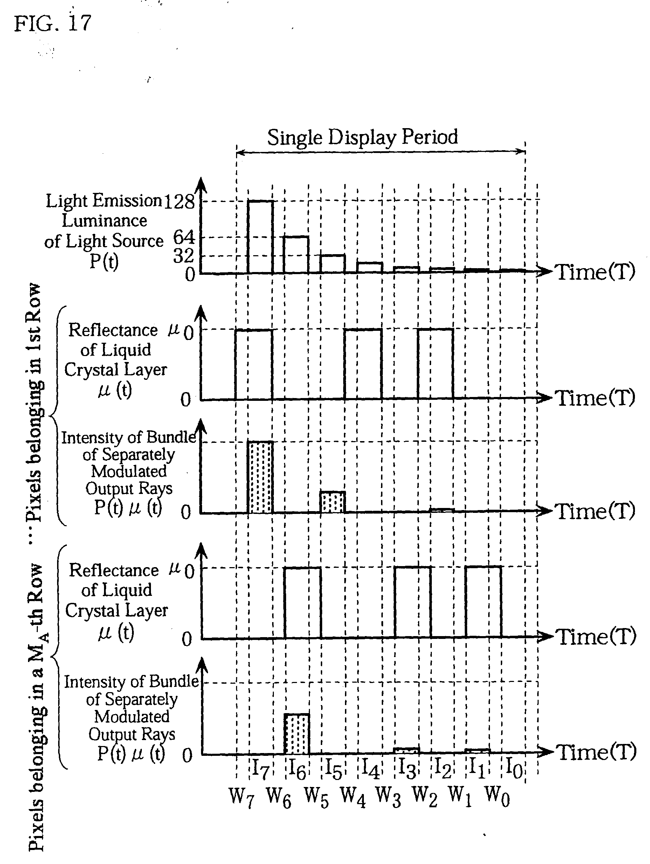

Under this structure, stable operation can be achieved as described in the aforesaid first embodiment. When a further detailed and concrete timing is shown in consideration of the timing of the writing of information to the pixels of the reflective liquid crystal light valve, that will be as shown in FIG. 17, for example. Shown in the same diagram is the case where [10100100] (the decimal number 164) is written to the pixels in the first row and [01001010] (the decimal number 74) is written to the pixels in the $M_A$-th row. It should be noted that the response time of the liquid crystal layer is excluded. In the diagram, the reflective liquid crystal light valve comprises the pixel array of $M_A$ row × $N_A$ column. Likewise, the single display period has eight equally spaced unit sections ($I_0$-$I_7$), but writing sections (intervals) ($W_0$-$W_7$) for signals to be written over the entire reflective liquid crystal light valve are provided between their respective adjoining unit sections.

The writing is performed from the row in the top (1st row) to the row in the bottom ($M_A$-th row) in every writing section. As the 1st row is the foremost and the $M_A$-th row is the rearmost, the variation of the respective reflectance of the liquid crystal layer (which is equivalent to the light intensity modulation factor of the two-dimensional light modulation means) is as shown in the diagram. Since the luminance of the light source (which is equivalent to the output light intensity of the light batch modulating means)(it is assumed here that only one of the three color light sources 401r, 401g, 401b shown in FIG. 15 emits light) has a finite value only within each unit section, it follows that the intensity $P(t)\mu(t)$ of the bundle of separately-modulated-and-output rays is as shown in the diagram. As a result, the output light energies corresponding to the signals written in the single display period are obtained in the pixels.

It should be noted that while it was supposed in the above that the luminance of the light source had a finite value only within each unit section, it can take a finite value even within any writing interval. Also, while it was supposed in the above that the unit section started at the end time of the writing section, the unit section and the writing section can be overlapped with each other or a finite time interval can be left therebetween.

A technique that the timing of incidence of the light from the light source onto the reflective liquid crystal light valve 501 is shifted for each row in correspondence with the phenomenon that variation of reflectance of liquid crystal slightly shifts row by row and a like technique can be adopted. This makes no difference in that the light source is modulated substantially entirely.

While the description was given in the above, based on the two-valued logic of the first embodiment, the construction of this example can be applied to general cases (which include [Example 1 of the light output waveform of the light batch modulating means (Example 1-3)] to [Example 6 of the light output waveform of the light batch modulating means (Example 1-8)].

Incidentally, the construction of the display device shown in FIG. 15 features that the light batch modulating means modulates light emission luminance of the light source itself (generally its optical condition). This has the following advantages, when comparing with the construction that intensity of the light source that emits light with a constant luminance and the intensity of the light from that light source is modulated (e.g. the construction in which light of a backlight is modulated by the liquid crystal layer) to performing the batch modulation. In both methods, the intensity of the bundle of batch-modulated rays varies with time within one display period in a similar fashion. However, in the latter case, the bundle of batch-modulated rays is obtained as a result of the intensity of the light from the light source being reduced due to the intensity modulation. The intensity modulation factor will not exceed 1 unless energy is not supplied to the intensity modulation means from external. In contrast to this, the former case includes no process of reducing the intensity of light. In the latter case, power consumption of the light source is constant in time, while however, in the former case, power consumption of the light source varies with the luminance within the single display period, so that a quantity of power consumption (power consumption integrated with time) decreases.

(Description on the way of applying voltage to liquid crystal layer)

Now, the way of applying voltage to the liquid crystal layer to obtain the waveform of $\mu(t)$ shown in FIG. 17 will be described here.

As seen from Equation 4 also, the reflectance of the liquid crystal layer is zero (corresponding to $b_k$=0) or a certain constant $\mu_0$ (corresponding to $b_7$=1). The voltage-reflectance characteristics ($\gamma$ characteristics) of the VA liquid crystal is generally expressed as in FIG. 3(1) or FIG. 3(2). The voltage $V_{OFF}$ that satisfies $|V_{OFF}| \leqq Vth$ can be selected as the voltage $V_{OFF}$ to attain zero of the two values. The Vth is a voltage at which the reflectance starts to rise and is called a switching threshold voltage. The voltage $V_{ON}$ to attain the liquid crystal reflectance $\mu_0$ is preferably of substantially large in reflectance and of small in reflectance variation with respect to voltage variation. For example in the case where the transmittance has an extreme value Tmax as shown in FIG. 3(1), a value that satisfies $|V_{ON}| \geqq V_M$ can be set: where the voltage VM showing 90% of the transmittance 9Tmax/10 is defined as the minimum modulation voltage.

In the case of the $\tau$ characteristics as shown in FIG. 3(2), a value that satisfies $|V_{ON}| \geqq V_M$ can similarly be set: where the reflectance obtained when a substantially large voltage (e.g. 10V) is applied is taken as Tmax and the voltage $V_M$ showing 90% of the transmittance is still defined as the minimum modulation voltage.

This setting way can allow the linearity of gray scale to be held, for the reasons mentioned in the section of Prior art, to produce an image excellent in gray scale reproducibility and color reproducibility.

Further, when the liquid crystal layer having the $\gamma$ characteristics of Normally-On type (having a nearly maximum transmittance at zero voltage) as TN liquid crystal is used, $V_{ON}$ can be set to satisfy $|V_{ON}| \leqq Vth$ with respect to the voltage Vth at which the reflectance starts to decrease (which voltage is called the switching threshold voltage). $V_{OFF}$ can be set to satisfy $|V_{OFF}| \cong V_M$: where the voltage $V_M$ showing 10% of transmittance with respect to the maximum transmittance Tmax is defined as a minimum modulation voltage. This setting way can also allow the linearity of gray scale to be held, for the same reason as that in the Normally-Off type one such as the VA liquid crystal, to produce an image excellent in gray scale reproducibility and color reproducibility.

As to the way of applying voltage to those liquid crystals: the exact same voltage can be applied to the liquid crystals in every display period and every unit section. Alternatively, as far as the reflectance as a result of application of voltage is generally or substantially the same, different voltages can be applied therein. For example, in FIG. 3(1) or FIG. 3(2), as long as $V_{OFF}$ is in the range of $|V_{OFF}| \leqq$ Vth, the reflectance is virtually zero, so that different voltages can be applied in the unit sections within this range.

As a matter of fact, it is preferable that in order to avoid the charge-up, the voltage applied to the liquid crystal layer has the direct current component of substantially zero from a long time view not less than some seconds. Accordingly, it is preferable that polarity of the applied voltage is reversed for each display period. Take the $\gamma$ characteristics of Normally-Off type for instance. Supposing that in a certain display period, the voltage values $V_0$, $V_1$ are selected to satisfy $|V_0| \leqq$ Vth, $V_1 \geqq V_M$, so as to let $V_{OFF} = V_0$ and $V_{ON} = V_1$, the voltages of reversed polarity $V_{OFF} = -V_0$, $V_{ON} = -V_1$ can be applied in the next display period. The substantially same applies to the case of Normally-On type. The polarity may, of course, be revered for each unit section, rather than for each display period. Also, the polarity may generally be reverted for each q unit section (q is a natural integer).

Those voltages can be applied to the liquid crystal by the electric potential of the transparent electrodes formed on the opposite substrate being fixed to zero and the electric potential of the pixel electrodes being set to $V_{OFF}$ or $V_{ON}$. Alternatively, the voltages may be applied to the liquid crystal by controlling both electric potentials of the pixel electrodes and the transparent electrodes.

Now, taking the $\gamma$ characteristics of Normally-Off type as an example, this will be explained with reference to FIGS. 1, 2, 3 and TABLE 2 in addition to FIG. 16.

【TABLE 2】

| Display Period | Desired Reflectance | Potential ① of Transparent Electrode 102 | Potential of ② Pixel Electrode 104 | Applied Voltage to Liquid Crystal (②−①) |
|---|---|---|---|---|
| (Odd Number)-th | 0 | $-V_0$ | 0 | $V_0$ |
| | $\mu_0$ | | $V_1 - V_0$ | $V_1$ |
| (Even Number)-th | 0 | $V_1$ | $V_1 - V_0$ | $-V_0$ |
| | $\mu_0$ | | 0 | $-V_1$ |

$$|V_0| \leqq \text{Vth}, \ V_M \leqq V_1$$

For example, $V_0$ and $V_1$ are set to certain voltage values that satisfy $|V_0| \leqq$ Vth, $V_M \geqq V_1$ and the electric potentials of the transparent electrodes 102 are set to be $-V_0$. When the reflectance is intended to attain to zero (which is equivalent to $V_{OFF}$), the electric potentials of the pixel electrodes 104 are set to zero, while on the other hand, when the reflectance $\mu_0$ is intended to be attained (which is equivalent to $V_{ON}$), they are set to $V_1 - V_0$. It follows from this that the voltages applied to the liquid crystal are set to $V_{OFF} = V_0$ and $V_{ON} = V_1$, respectively. In the next display period, the electric potentials of the transparent electrodes 102 are set to be $V_1$. When the reflectance is intended to attain to zero, the electric potentials of the pixel electrodes 104 are set to $V_1 - V_0$, while on the other hand, when the reflectance $\mu_0$ is intended to be attained, they are set to zero. It still follows that the voltages applied to the liquid crystal are set to $V_{OFF} = -V_0$ and $V_{ON} = -V_1$, respectively.

Thus, when the electric potentials of the pixel electrodes 102 are also allowed to vary, 0 or $V_1 - V_0$ are only required for the voltage applied to the pixel electrodes 104. Besides, since the polarity reversal drive can be effected, the drive under the two-valued logic can be performed while avoiding the charge-up on the Si substrate 112 side, as shown in FIG. 16. In addition, since the driving voltage range on the Si substrate side is in minimum of $V_M$-Vth as shown in FIG. 3 (in the case where the electric potentials of the opposite electrodes are fixed, the $2V_M$ range is required at minimum), the low voltage drive can be effected to provide advantages of increase in miniature of the circuitry on the Si substrate side and saving of electric power.

The substantially same as the above applies to the Normally-On type liquid crystal. The polarity can be reversed for every q unit sections, rather than for every display period (q is a natural integer).

While the description was given in the above, with reference to the case using the two-valued logic of the principle of the present invention (Example 1-1), this can be applied to general cases of the principle of the present invention (which include Example 1-2, further [Example 1 of the light output waveform of the light batch modulating means (Example 1-3)] to [Example 6 of the light output waveform of the light batch modulating means (Example 1-8)]. Among others, the matters on the application of voltage to the liquid crystal can be effectively applied to the case of M=2 (two-valued logic).

(Description on response speed of liquid crystal)

In the description so far, it is supposed that the response speed of the liquid crystal layer is so small, as compared with the interval of the unit section, that the liquid crystal layer responds instantaneously at a transition from one unit section to another. There are some cases that the response time may not be negligible when compared with the interval of unit section. Here, consideration will be made of such a case.

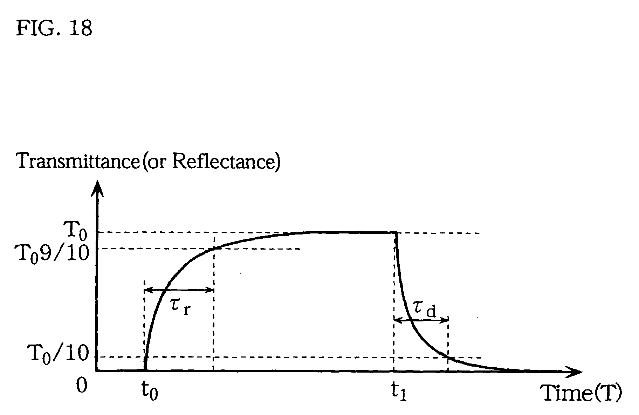

Referring to FIG. 18, there is shown a graph showing the temporal response state of the liquid crystal when the voltage applied to the liquid crystal is changed drastically. Now, it is assumed that a voltage that can allow the transmittance (or reflectance) of the liquid crystal to become zero is being applied to the liquid crystal till the time $t_0$ at which the transmittance sharply becomes $T_0$. Then, the transmittance of the liquid crystal gradually increases as indicated by a curved line at a left side of the graph and comes to be fixed at $T_0$ after some time passes. After that, when the voltage is drastically returned to the voltage that can allow the transmittance of the liquid crystal to become zero again at $t_1$, the transmittance gradually decreases and comes to be zero similarly after some time passes. The time required for the transmittance to reach 90% of $T_0$ with the time $t_0$ as a base point is called as a rising time (expressed by $\tau_r$ in the graph) and the time required for the transmittance to reach 10% of $T_0$ with the time $t_1$ as a base point is called as a falling time (expressed by $\tau_d$ in the graph).

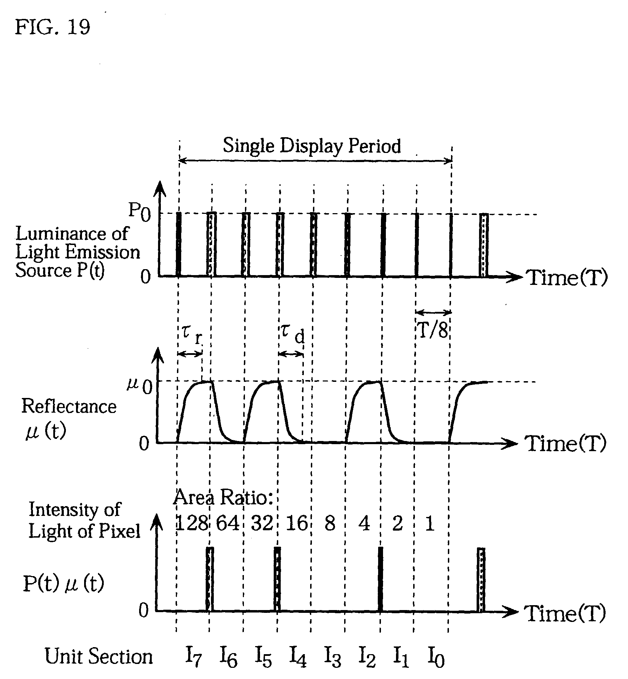

Now, for simplicity purposes, when supposing that the intervals of the unit sections are equaled; letting M=2 (two-valued logic); and considering the rising time and falling time of the reflectance of the liquid crystal mentioned above, the reflectance $\mu(t)$ is represented as shown in the middle of FIG. 19. In this graph also, gray scale of the input signals is 164 in the decimal system and luminance of an arbitrary unit is plotted in the ordinate axis. In the case where the reflectance of the liquid crystal layer which is $\mu_0$ in a certain unit section (e.g. $I_5$) must become zero in the next unit section ($I_4$), the voltage signals for allowing the reflectance to become zero are preferably applied to the liquid crystal at the base point of the section unit $I_4$ so that the reflectance of the liquid crystal can fully decrease to zero by the end of the unit section $I_4$.

In the case where the reflectance decreases to zero at the end of $I_4$ at latest, when the light source is made to emit light in an impulse fashion like P(t) as shown in the top of the diagram, the intensity of the bundle of separately-modulated-and-output rays comes to have an impulse form that reflects on only the reflectance at the end of $I_4$, as shown in the bottom of the diagram, so that the output becomes zero as desired (which is equivalent to E4(0) in Equation 7; P4(t) may be considered as the Dirac $\delta$ function). Accordingly, the falling time $\tau_d$ is preferably not over the interval of the unit section. When thinking of the case of the reflectance rising from zero to $\mu_0$ along the same line, the rising time $\tau_r$ is also preferably not over the interval of the unit section. When the unit sections are not uniform in interval, both $\tau_r$ and $\tau_d$ may be not over an interval of the shortest unit section (which condition is called as the response time condition).

It should be noted that this embodiment can significantly enlarge the shortest interval of the unit section, as compared to the prior art. Take the case (N=8) as discussed in the section of the two-valued logic of the principle of the present invention as an example. According to prior art, the shortest interval of the unit section is 65μsec, whereas, according to the present invention, that is 2msec. Consequently, the response time condition mentioned above can be relaxed significantly.

In general, the response time is said to be in proportion to the square of thickness of liquid crystal layer. For the reflective liquid crystal light valve as shown in FIG. 16, the light moves back and forth through the liquid crystal layer. For this, even if the liquid crystal layer of the reflective is reduced to half in thickness, as compared to that of the transparent type, that will be subjected to the same light modulation. Consequently, the response time of the reflective one is shortened to one quarter of the transparent type one and, accordingly, the response time conditions can be satisfied further easily.

Then, the measurement was made of the $\tau_r$ and $\tau_d$ by use of the reflective liquid crystal light valve and VA liquid crystal (MJ951152 available from Merck Japan Limited was used) with a layer thickness of 2μm. The both were found to be 2.0msec. The interval of the unit section in the example (N=8) discussed on the two-valued logic of the principle of the present invention is just 2msec. It is found from this that the response speed condition is satisfied. Considering the response speed in proportion to the square of thickness of the liquid crystal layer, the response speed condition will be satisfied for the thickness of layer of 2μm or less. Thus, the significant effects of linearity, stability and uniformity of gray scale can be obtained.

The above facts can be established in a general condition as well as in the case of M=2.

The light source is not necessarily limited to the one that emits light in a impulse fashion. For example, when the light source emits light with generally uniform intensity in the unit section, as shown in FIG. 10, the linearity of gray scale may be somewhat distorted but can obtain some effect in its own way.

(Complement)

In FIG. 15, the light source having three colors of red, green and blue preferably emit light of these colors in sequence for each display period in a time-sharing manner (in this case also, variation with time of light emission luminance in each display period is generally equal in terms of each color). However, the driving way that the unit sections in the single display period are temporally disordered for three colors is, of course, conceivable.

The time sharing for each color may not be necessary, depending on the optical system. For example, by providing the color filters of red, blue and green for each pixel of the reflective liquid crystal light valve, colored images can be observed without the time sharing for color.

Also, the present invention may comprise another optical system including color separation/combination system as shown in FIG. 4 of Japanese Patent Application No. Hei 09-292160. This system has three lines of reflective liquid crystal light valves for each color, so that the two-dimensional light modulation of each color component may separately be performed in each of them.

While the light emitting diode is used as the light source in the display device of FIG. 15, different light sources than that may be used, including a laser (a semiconductor laser is preferably low in power consumption, small in size and low in cost), an electro-luminescence light source and luminescent material. These are swift to respond luminance variation and accordingly are ideal light sources for the driving method of the present invention. These light sources enable a light emission luminance control circuit to be formed easily.

The light emission luminance control circuit is a circuit for electrically controlling the light emission luminance of the light source. However, it is not necessarily electrically controlled, but may be controlled optically, thermally, magnetically, chemically and mechanically.

The VA liquid crystal which is relatively swift to respond and can produce high contrast is most preferably used for the liquid crystal layer, but any kind of liquid crystals may be used. The liquid crystals existing at the time of filing of this application which may be used include, for example, TN (twisted nematic) liquid crystal, STN (super twisted nematic) liquid crystal, VA liquid crystal (vertically aligned liquid crystal or homeotropic liquid crystal), ECB (electric field controlling birefringence) type liquid crystal including homogeneous alignment liquid crystal, Bent liquid crystal, IPS (In-Plane-Switching) liquid crystal, GH (Guest/Host) liquid crystal, Polymer dispersed liquid crystal, Ferroelectric liquid crystal, Antiferroelectric liquid crystal, OCB liquid crystal, Discotic liquid crystal and other various modes.

In addition to the liquid crystals, any material whose optical characteristics are varied by an applied voltage may be used. For example, electro-optic crystals, such as BSO (bismuth silicon oxide) can be cited. The liquid crystal, which is lowest in price at the time of filing this application, is preferably used.

Likewise, the liquid crystals having no spontaneous polarization and particularly showing nematic phase (including VA liquid crystal and TN liquid crystal) are preferably used as the liquid crystal layer. This is because the liquid crystals having spontaneous polarization, such as ferroelectric liquid crystal and antiferroelectric liquid crystal, are somewhat hard to use at the time of filing this application in that they are uniformly aligned with difficulties or are not resistant to impact.

The two-dimensional light modulation means are not limited to the reflective liquid crystal light valve using the Si substrate. Any type can be used, as far as it is passive type spatial light modulation element. For example, polycrystal Si based or SOI (silicon on insulator) based reflective light valve and the same based transparent liquid crystal panels may be used. Further, a light writable type light valve as disclosed by Japanese patent application Laying open No. Hei 07-013188 may also be used.

In place of the beam polarizing splitter, a set of a usual beam splitter and a polarizer/analyzer may be used. Or, in order to obtain reduced volume, a hologram polarization splitting element and the like may be used. An oblique incidence ( ) optical system may alternatively be used so that reflectance of the reflective liquid crystal light valve can be controlled only by the polarizer/analyzer without using any beam splitter.

MOS transistors of p type, rather than n type, may be used as pixel switching elements of the reflective liquid crystal light valve. Also, the n type and the p type may both be used, as disclosed, for example, by Japanese patent application Laying Open No. Hei 10-327770. Alternatively, TFT (thin film transistor) may be used. In order to keep the electric potential of the pixel electrodes, those transistors may have an auxiliary capacity.

Also, projectors and equivalent as well as micro displays may be used as the display device.

(Example 2-2)

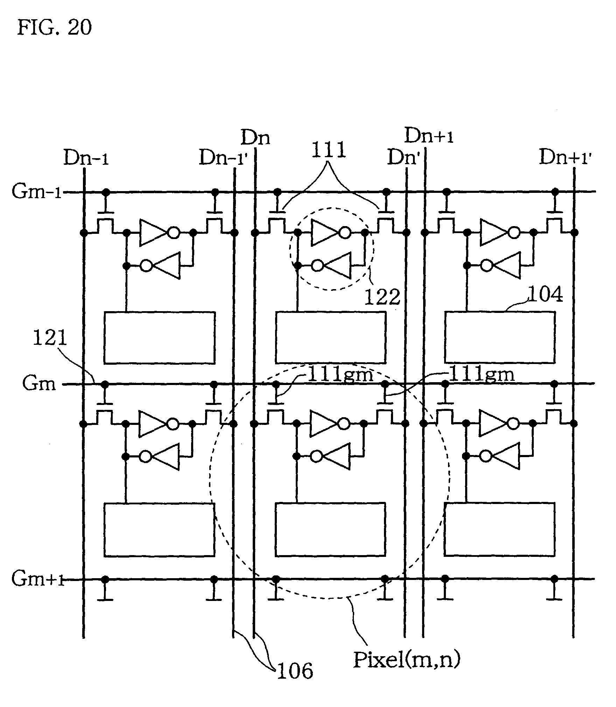

The display device of this Example is substantially identical to the display device of Example 2-1 shown in FIG. 15 but is different therefrom in that the electric circuit part of the reflective liquid crystal light valve on the Si substrate side is of a SRAM (static random access memory) type as shown in FIG. 20.

In this Example, the pixel switching elements (MOS transistors) 111 and bistable elements 122 comprising double inverters are formed in a matrix form in correspondence with the matrix arrangement of the pixel electrodes 104 and are connected to the scanning lines 121 extending in the row direction and to the signal wires 106 extending in the column direction. In this arrangement, the way of applying the voltage signals to the pixel electrodes and the operating timing are the same as those of the structure shown in FIG. 4, but the provision of the bistable elements provides the two-valued logic (digital) driving mode. In other words, the voltage signals comes to be either high voltage (which is expressed by HI) or low voltage (which is expressed by LO).

The pixel switching elements 111 of the diagram are switched to the ON state or the OFF state in accordance with HI or LO in the voltage applied to the scanning lines 121. Specifically, when the scanning line 121 designated by Gm in the diagram is supposed to be selected and lead to HI, the pixel switching elements 111 connected to the scanning line Gm is switched to the ON state, so that the bistable elements (m, n) belonging to the pixels (m, n) are brought into connection with the signal wires Dn and Dn' and the bistable elements (m, n) are transited to either of the two stable states HI or LO in accordance with a value of the signal wire Dn or Dn' (Letting Dn=HI and Dn'=LO leads the bistable elements (m, n) to the HI state, and letting Dn=LO and Dn'=HI leads the bistable elements (m, n) to the LO state).

It should be noted that negative phase signals are definitely input to the signal wires Dn and Dn'. When the scanning line Gm leads to LO and is put to the non-selective state, the pixel switching elements 111 of the pixels (m, n) are switched to the OFF state and the bistable elements (m, n) are separated from the signal wires Dn and Dn' to maintain the either state of HI or LO. Then, the pixel electrodes connected to the bistable elements are set to two different voltage values in accordance with the two states of the bistable elements.

These operations are repeated for all scanning lines, whereby the voltage signals of HI or LO can be written to all the pixels.

This enables the exact same timing operations as those shown in FIG. 17, so that nearly all of the matters explained in the above-mentioned Example 2-1 apply to this Example. Particularly, as discussed on the method of applying voltage to liquid crystal, the low voltage drive under the two-valued logic can be performed while avoiding the charge-up, which in turn can provide the advantages of increase in miniature of the circuitry on the Si substrate, saving of electric power and reducing the cost.

It should be noted that the circuitry of this example is so formed that the pixel electrodes are not electrically isolated but connected to the bistable elements even when the pixels are in the non-selective state, differently from the circuit shown in FIG. 4. In other words, the pixel electrodes are connected to power supply lines (not shown in FIG. 20) to the biatable elements and thus are less subject to the cross-talk, so that an image of less noise is obtained.

It is to be noted that the circuit shown in FIG. 20 is given only as an example. All the matters discussed above apply to any circuit that operates SRAM and equivalent. For example when the inverters are inserted in between the bistable elements and the pixel electrodes, as shown in FIG. 7 of Japanese Patent Application No. Hei 09-190837, such stays essentially the same.

It is needless to say that the method as explained so far is applicable to the others.

(Example 2-3)

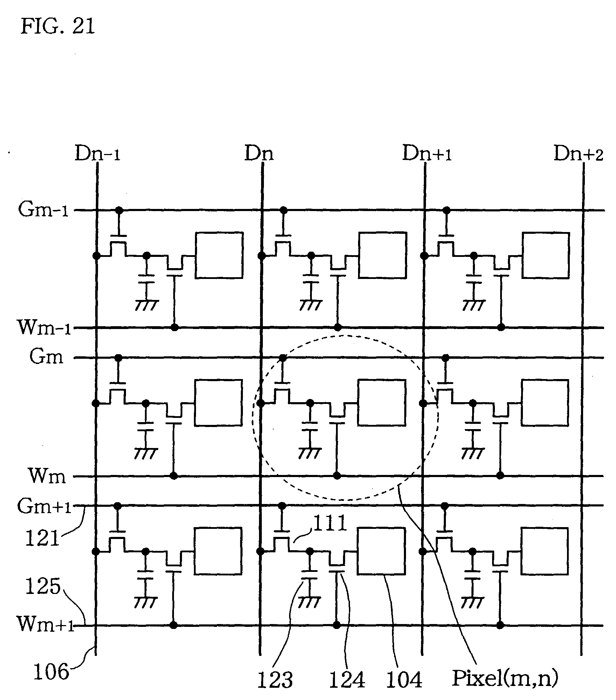

The display device of this Example is basically the same in construction as that of Example 2-1 shown in FIG. 15. The characteristic feature of this Example resides in an electric circuit part of the Si substrate of the reflective liquid crystal light valve. This circuit part is shown in FIG. 21. This pixel switching elements (MOS transistors) 111, memory circuits comprising capacities, and liquid crystal writing switching elements 124 are formed in the matrix form in correspondence with pixel electrodes 104 arrayed in the matrix form. These are connected to the scanning lines 121 and batch writing lines 1257 extending in the row direction (in the horizontal direction as viewed in the diagram) and the signal wires 106 extending in the column direction (in the vertical direction as viewed in the diagram). In this Example, since there are provided the memory circuits, the liquid crystal writing switching elements and the batch writing lines, somewhat different operation from that of FIG. 4 is produced.

First, let us consider that in the diagram shown in FIG. 21, the batch writing lines 125 are in the low electric potential state and all the liquid crystal writing switching elements 124 are in the OFF state. In this case, when the right-hand side from the liquid crystal switching elements 124 is supposed to be separated, the memory circuits 123 come to be equivalent to the pixel electrodes 111 of FIG. 4, so that the voltage signals can be written on the memory circuits of all pixels in the exact same processes as is the case with FIG. 4.

On the other hand, the pixel electrodes 104 separated by the liquid crystal writing switching elements 124 are all in the electrically isolated condition and thus are not affected even in the course of operation to write to the memory circuits 123, so that the accumulated electric charges are stored and the voltages applied to the liquid crystal layer are held.

Then, supposing that after the operation to write to the memory circuits 123 is completed, the liquid crystal writing switching elements 124 are concurrently switched to the ON state for all pixels, the electric charges accumulated in the memory circuits 123 of the respective pixels are fed into the pixel electrodes 104 and the pixel electrodes 104 are charged up to a certain potential corresponding to an original potential of the memory circuits 123. Since this operation is concurrently performed for all pixels, the applied voltage to the liquid crystal can be varied concurrently for all pixels so that the state of the liquid crystals can be changed over the entire display screen substantially instantly.

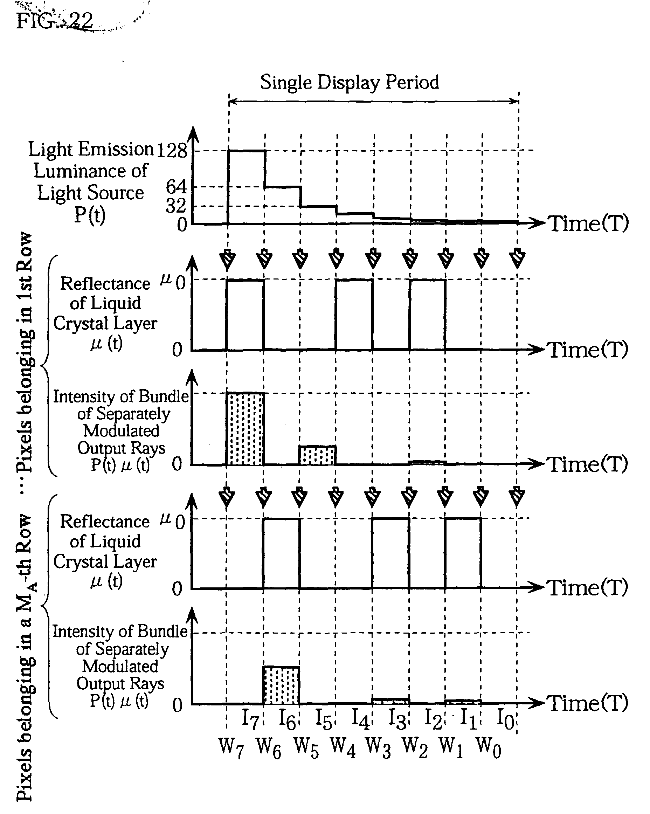

As seen from the explanation above, the characteristic feature of this Example resides in that after the writings to the memory circuits are performed in sequence for a while, the information is written en bloc to the pixel electrodes. Although the operation timing as shown in FIG. 17 needs the writing section $W_k$ separate from the unit section $I_k$, the construction of this Example does not need such a section for the operation with the timing as shown in FIG. 22. In other words, while the reading out (modulation of light) is being performed in the unit section $I_k$, the next voltage information for the unit sections $I_k$-1 is written on the memory circuits 123 (in other words, it can be seen that the unit section $I_k$ and the writing section $W_k$-1 overlap with each other temporally). Then, at a moment of the transition from the unit section $I_k$ to the writing section $I_k$-1, the liquid crystal writing switching element 124 is switched to ON to perform the writing to the liquid crystals. The time (timing) at which the liquid crystal writing switching elements are instantly switched to ON is indicated by downward arrows (triangle) on the top of the vertical line showing the respective sections on the reflectance $\mu(t)$ of the liquid crystal layer shown in the middle and bottom of the diagram. Shown in the middle of the diagram is the gray scale which will be 164 in decimal system and shown in the bottom of the diagram is the gray scale which will be 74 in the decimal system.

This construction enables the unit section $I_k$ to be extended, as compared with the case of FIG. 17, thus enabling the response time condition of the liquid crystal as previously discussed on the section of response speed of the liquid crystal (Example 2-1) to be relaxed further. In addition, since the writing to the liquid crystal is performed for the entire display screen at the same timing, the uniformity in the surface is further improved than the case of FIG. 4.

(Example 2-4)

This Example is devised to prevent generation of a residual image in the previous Example.

In the construction shown in FIG. 21, in the case where when the liquid crystal writing switching elements 124 are switched to ON and the electric charges accumulated in the memory circuits 123 are fed into the pixel electrodes 104, the capacities of the memory circuits 123 are substantially large, as compared with the capabilities of the pixel electrodes 104 (which have the capabilities for an opposite substrate across the liquid crystal and for surrounding lines), the electric potential at which the electric charges in the memory circuits 123 and the electric charges in the pixel electrodes 104 are balanced with each other is substantially the same as the original potential of the memory circuit 123. On the other hand, in the case where the capabilities of the pixel electrodes 104 are not negligible, the electric potential for the both to be balanced is affected by the electric charges that still remain in the pixel electrodes 104, and as such may contribute to the residual image and the like.

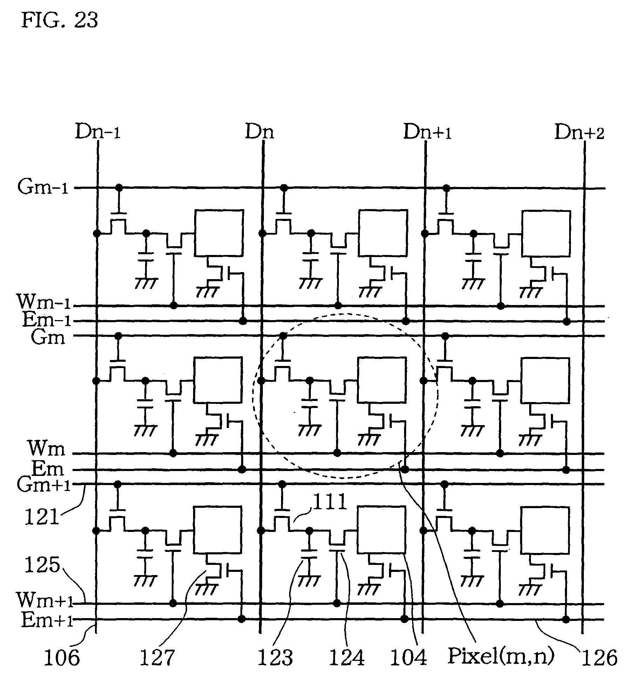

In order to avoid this, this Example uses the circuitry as shown in FIG. 23. Specifically, the construction of FIG. 21 is so modified that batch erasing switching elements 127 are provided between the pixel electrodes 104 and constant potential supply lines (having an earth potential for the case of FIG. 23) so that they can be controlled by use of the potential of batch erasing lines 126. In the actual operation, immediately before the batch writing to the pixel electrodes 104, the potential of the batch erasing lines 126 is increased to high potential to switch all the batch erasing switching elements 127 to ON so that the electric charges stored in the pixel electrodes 104 can be flushed to reset the pixel electrodes to a certain potential. This can prevent a next batch writing from being affected by the previous potentials of the pixel electrodes, thus producing an image with no residual image.

The batch erasing switching element may be replaced with e.g. diode and the like. For example, the pixel electrodes and certain lines can be interconnected through the diodes to control the voltages of the lines so that the voltages of those lines can be brought into the forward the offset state at the erasing timing only and the reverse offset state at the remaining timings. This enables the reset and holing of the electric charge.

While the one end of the memory circuit is made to have the earth potential in FIGS. 21 and 23, it may be allowed to have any constant voltage without limiting to the earth potential. While the memory circuit comprises the capacity in FIGS. 21 and 23, it may be replaced with e.g. the bistable element (latch circuit) using the inverter.

Additionally, the methods and construction previously discussed in the Embodiments and Examples are of course applicable to this Example.

(Example 2-5)

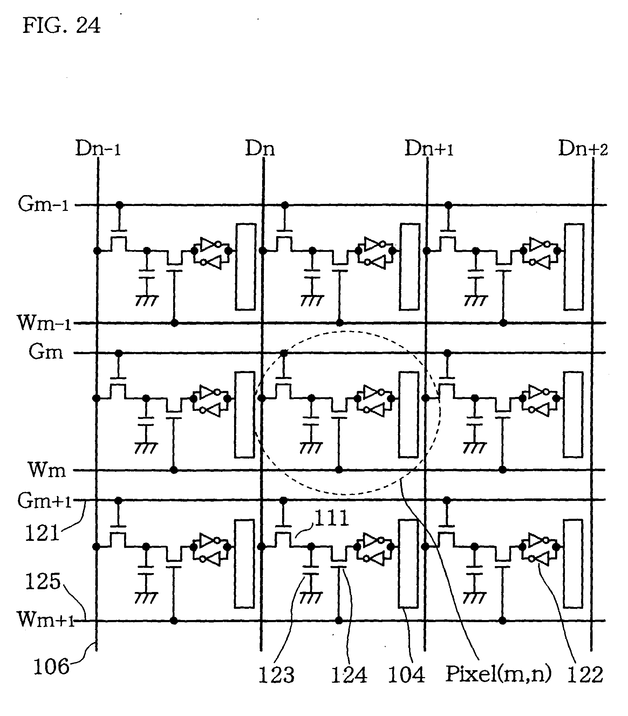

Shown in FIG. 24 is the circuitry of this Example. This example is fundamentally the incorporation of the feature of Example 2-2 in Examples 2-3 and 2-4. The bistable elements 122 are inserted between the liquid crystal writing switching elements 124 and the pixel electrodes 104. The provision of the bistable elements 122 provides the two-valued logic (digital) driving mode. The voltage signals comes into either a high voltage (HI) state or a low voltage (LO) state.

The operation provided by this construction is basically identical to that of Example 2-2. The writings to the memory circuits 123 are performed in sequence and then the liquid crystal writing switching elements 124 are switched to ON by one operation, to put the bistable element 122 into the HI state or the LO state in accordance with the information of the voltages written on the memory circuits 123. Then, while the liquid crystal writing switching elements 124 are in the OFF state, the potentials of the pixel electrodes 104 are given a certain voltage value corresponding to the state of the bistable elements 122.

This enables the drive at the timing as shown in FIG. 22, as is the case with Examples 2-3 and 2-4 as previously mentioned, thus enabling the response time condition of the liquid crystal to be relaxed further, as explained in the previous examples and also enabling the uniformity in the surface to be further improved.

In addition, as discussed in the previous Example 2-2, since the pixel electrodes are connected to the bistable elements 122 even when the pixels are in the non-selective state, an image of less noise is obtained.

While the one end of the memory circuit 123 is made to have the earth potential in FIG. 24, it may of course be allowed to have any constant voltage without limiting to the earth potential.

While it is explained that the memory circuit comprises the capacity, the memory circuit may be replaced with e.g. the bistable element (latch circuit) using the inverter.

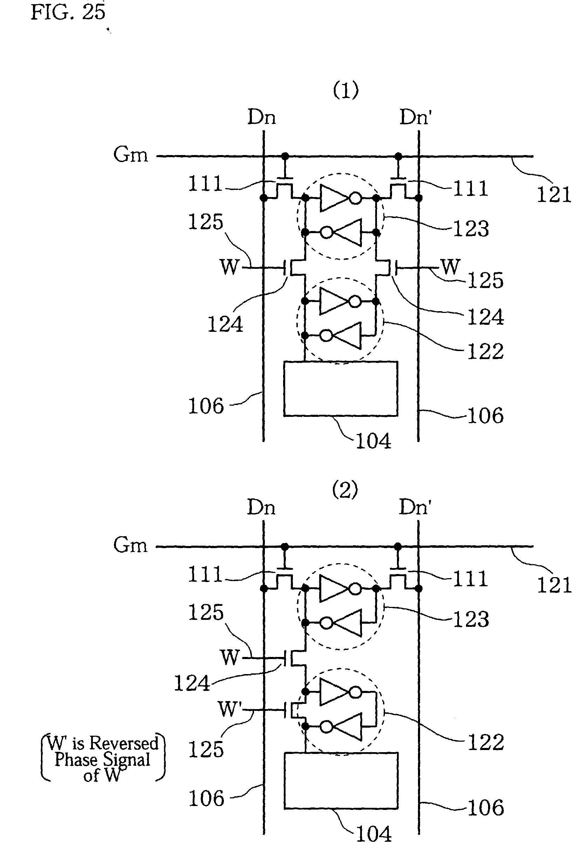

As shown in FIG. 20, two signal wires Dn and Dn' may be arranged so that negative phase signals can be input to these signal wires. For example, one pixel may be so designed as shown in FIG. 25(1), (2). The pixels thus designed provide essentially the same operation as in the circuitry of FIG. 24.

Further, there may be provided the batch erasing switching elements, as shown in FIG. 23.

Additionally, the methods previously discussed in the Embodiments and Examples are of course applicable to this Example.

(Example 2-6)

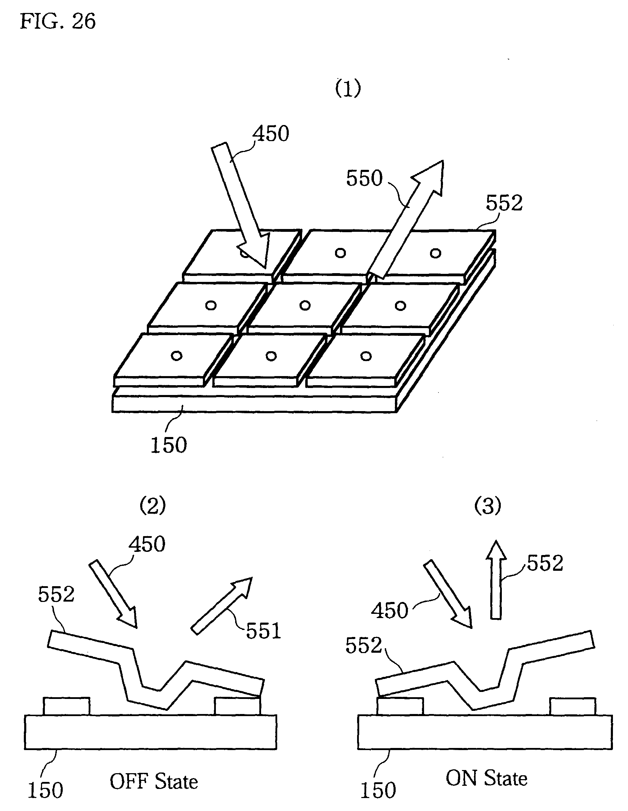

This embodiment is an example using an element having a moving micro mirror surface. This is the mode used, for example, in the DMDTM (digital micro mirror device) available from Texas Instruments, Inc.. DMD is an element in which micro mirrors 552 are arrayed on the Si substrate 150 in the matrix form, as shown in FIG. 26(1). Generally, each micro mirror corresponds to each pixel.

The micro mirrors are movable and have two stable conditions (OFF and ON) so that either of these two conditions can be selectively taken under the driving signals from external, as shown in FIG. 26(2) or (3). The direction of reflected light 550 against the incident light 450 varies depending on the condition of ON and OFF. The micro mirrors adopt such an optical system that the reflected light 551 in the OFF condition is prevented from coming in sight of the observer or is thrown out and only the reflected light in the ON condition comes in sight of the observer or is picked up. As a result of this, the light modulation for the incident light can be performed at an intensity modulation factor (reflectance) of zero or a certain finite value $\mu_0$ in a two-valued logic fashion.

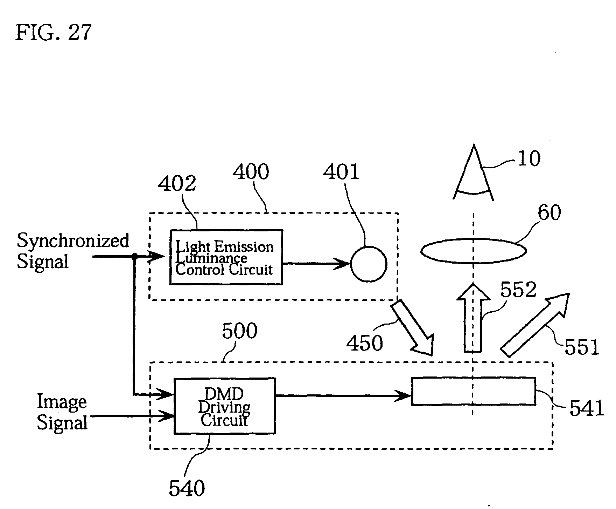

In the following, one example of the construction of the display device using the DMD is shown in FIG. 27. In this display device, the light emitting diode 401 is used as the light source and the light emitted therefrom is made to be incident on the DMD 551 so that only the reflected light 552 in the ON condition can be led to the observer's eyes through the lens 60 so that the observer 105 can observe an image of the DMD 551. On the other hand, the reflected light 551 in the OFF condition is not made to pass through the lens 60 so that it cannot be led to the observer's eyes 10. The luminance of the light emitting diode 401 is controlled by the light emission luminance control circuit 402, and the condition of the DMD 541 is controlled by the DMD drive circuit 540.

In this system, the combination of the light emitting diode 401 and the light emission luminance control circuit 402 is equivalent to the light batch modulating means 400 of FIG. 9, and the combination of the DMD 541 and the DMD drive circuit 540 is equivalent to the two-dimensional light modulation means 500. The incident light 450 on the DMD 541 is equivalent to the bundle of batch-modulated rays. The reflected light 552 in the ON condition is equivalent to the bundle of separately-modulated-and-output rays 550.

Where the reflective liquid crystal light valve is concerned, the electric circuit of DMD formed on the Si substrate 150 is the circuitry of the SRAM type as shown in FIG. 20 or 24 and can be allowed to operate with the timing as shown in FIG. 17 or 22 (however, $\mu(t)$ is the reflectance of DMD, rather than the reflectance of liquid crystal layer). Then, the linearity of the gray scale is held so that an image good in gray scale reproducibility is obtained, as is the case with the reflective liquid crystal light valve.

In general, the DMD also obtains the gray scale by varying the interval of the unit section in the ratio of involution of 2, as discussed on the prior art (Cf. for example, Larry J. Hornbeck: Digital Light Processing and MEMS: Timely Convergence for a Bright Future (MICROMACHINING AND MICRO-FABRICATION '95 Part of SPIE's Thematic Applied Science and Engineering Series Plenary Session Paper). The driving method of this Example enables the minimum interval of the unit section to increase to provide facilitated control and reliable operation without any need to increase the operation speed of the drive circuit.

As to the light output waveform of the light batch modulating means, the methods discussed so far are of course applicable.

(Example 2-7)

This example relates to a projection type display device.

While the Examples of the second Embodiment are designed to modulate the luminance of the light source itself (generally optically), this Example is designed to control en bloc the light from the light source of generally constant luminance.

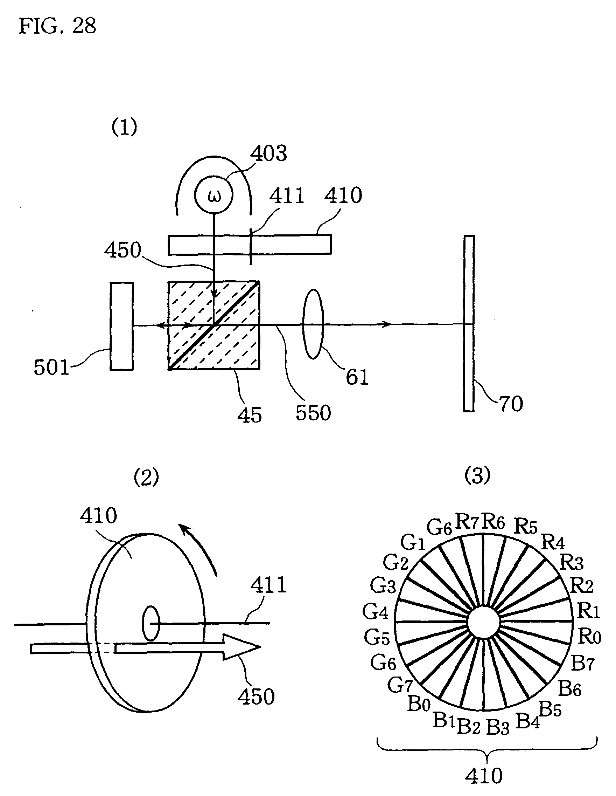

The display device of this Example is shown in FIG. 28(1). In this display device, the light from the light source 403 that emits light with a generally constant intensity (including a metal halide lamp, a halogen lamp, a UHP lamp, a xe lamp, an incandescent lamp, a fluorescent lamp, a ligh emitting diode, a laser beam and an electro-luminescence light source) is allowed to pass through a rotary filter 410 and be incident on the reflective liquid crystal light valve 501 through the beam polarizing splitter 45, so that the light reflected at that time is projected on a screen 70 through a projection lens 61. Thus, the image of the reflective liquid crystal light valve 501 is formed on the screen 70. The beam polarizing splitter is the same as that shown in FIG. 15.

In this Example, the rotary filter (and the electric circuit part for controlling the same, not shown in FIG. 28(1)) is equivalent to the light batch modulating means, and the reflective liquid crystal light valve (and the electric circuit part for controlling the same, not shown in FIG. 28(1)) is equivalent to the two-dimensional light modulation means 500. The light output from the rotary filter 411 is equivalent to the bundle of batch-modulated rays 450, and the light output from the reflective liquid crystal light valve 501 and passing through the polarizing beam splitter 45 is equivalent to the bundle of rays as separately modulated and out 550

The rotary filter 410 has the structure as shown in FIG. 28(2). Specifically, a disk-like filter 410 is designed to rotate around its axis 411 and also designed to permit light to pass through only a part of the disk. The details are shown in FIG. 28(3). The disk-like filter is divided into three segments of a center angle of 120° centering on the center axis 411 or forming the so-called knot. The segments are formed as filters for permitting the components of light of red (R), green (G) and blue (B) to pass through them. Further, each segment is equally divided into eight to form Rk, Gk, Bk (k=0, 1, ..., 7) and has transmittance proportional as $2^k$ for each color. Thus, the segments each have a center angle 15°.

In the actual driving, the rotary filter 410 rotates 360° while the reflective liquid crystal light valve 501 operates for three display periods. Thus, every color of red, green and blue passes through the filter for each display period. Now, let us consider the display period of green, for example. The light passes through the parts of G7, G6, G5, ... , G0 of the rotary filter 410 in sequence. When considering the interval for the light to pass through the Gk as the unit section $I_k$, the intensity of the bundle of batch-modulated rays 450 in the single display period varies just as P(t) as shown in FIG. 22. Accordingly, when the operation of the reflective liquid crystal light valve 501 is also controlled to be μ(t) of FIG. 22 in conformity with the variation of intensity, the 256 gray scales having good linearity is obtained for green. The same applies to red and blue. As a result, the image having excellent color reproducibility can be obtained.

If spatiality is large for light to pass through the rotary filter, then the time response of the bundle of batch-modulated rays 450, when passing through the boundaries of the segments, may not take a definite step form as P(t) of FIG. 22 and may deviate therefrom. In that case, the incident light from the light source can be allowed to focus on the rotary filter by use of the lens, though omitted in FIG. 28.

To achieve the timing shown in FIG. 22, the electric circuit part (not shown in FIG. 28) of the reflective liquid crystal light valve 501 is preferably provided with a liquid crystal writing switching element for the batch writing on the liquid crystal, as shown in FIG. 21, 23 or 24.

As shown in FIG. 17, there may be provided a dark space for the drive. For this case, for example, a light blocking part may be formed at the boundaries of the segments of the rotary filter. This is feasible in the circuit of FIG. 4 or 20 (this is of course applicable to the circuit of FIG. 21, 23 or 24).

To obtain the transmittance distribution of the ratio of $2^k$ by use of the rotary filter, a predetermined number of plates of the transmittance of 1/2 may be prepared and stacked. For example, when h plates are stacked, the transmittance of *h*th power of 1/2 is obtained.

The segments on the rotary filter are necessarily identical in arrangement to those as shown in FIG. 28(3).

The color segments may be arranged in random, as with the arrangement B3, G4, R0, G2, B6 ... .

The rotary filter may be rotated in either a clockwise direction or a counterclockwise direction when viewed from the light source. The rotary filter may be monochromatic. For example, a ND filter may be used. In this case, to obtain a color image, color filters of red, green and blue are attached to the individual pixels of the reflective liquid crystal light valve or the light as passed through the rotary filter is resolved into the three colors by use of a color resolving element (e.g. a dichroic mirror), is modulated by use of three separate reflective liquid crystal light valves, and is synthesized again by use of a color synthesizing prism (e.g. the optical system of FIG. 4 of Japanese Patent Application Hei 09-292160 is used).

The number of N of the unit sections are not necessarily limited to 8 or to 256 gray scales.

While the description was given in the above on the cases using the two-valued logic, this example can be applied to general cases.

Also, this example is applicable to any of Example 1-3 through Example 1-8. For example, if distribution of the transmittance of the rotary filter varies exponentially with rotation angle, then that would be Example 1-6 or 1-7.

The description on the reflective liquid crystal light valve of Example 2-1 applies to the reflective liquid crystal light valve of this Example. Particularly, the description on the way of applying voltage to the liquid crystal and the description on the response speed of the liquid crystal apply to the liquid crystal used for the reflective liquid crystal light valve.

Also, the description above is applicable to general passive type spatial light modulation element as well as to the reflective liquid crystal light valve. For example, the DMD shown in FIG. 26 may be used as the two-dimensional light modulation means. This will then present an optical system in which the light emitting diode is replaced with the lamp of FIG. 28 and rotary filter.

Also, the description above may also be applied, for example, to the micro display as shown in FIG. 15, rather than to the projector mentioned above.

In FIG. 28, the light may be allowed to pass through the rotary filter after it passed through the reflective liquid crystal light valve.

In order to prevent deflection due to high velocity revolution of the rotary filter, a weight or equivalent for balancing the respective segments in weight and mass may be attached to the rotary filter.

(Description on luminous efficiency)

As mentioned in the description on the construction and operation of the previous Example 2-1, when comparison is made between the case of controlling the light emission luminance of the light source itself and the case of making the luminance of the light source constant and modulating the intensity of the light emitted therefrom, as in this Example, the former is obviously lower in power consumption. As a matter of fact, when considering only the single color of green and also taking the transmittance of G7, G6, G5, ... as 1, 1/2, 1/4, ... , respectively in the construction, for the sake of simplicity, it follows from Equation 20 that the time-average transmittance Pay of the rotary filter 2102 is about 0.25.

【Equation 20】

$$P_{av} = 1/8 \times (1 + 1/2 + 1/4 + 1/8 + 1/16 + 1/32 + 1/64 + 1/128)$$
$$= 255/1024 \fallingdotseq 0.25$$

This indicates that the former can only use 25% of light of the light source at most, so that the former needs electric power of about 4 times as much as that of Example 2-1.

Cited as a method for improving this power loss is the method of dividing the single display period into a part (a unit section of first kind) for allowing the interval of the unit section to vary and a part (a unit section of second kind) for allowing the luminance of the light batch modulating means to vary, as in Example 1-8 shown in FIG. 13. This method is called a combination drive method and the former drive method is called a single drive method. Now, supposing that the transmittance distribution of the rotary filter gives P(t) as in FIG. 13 (which corresponds to the total number of the unit sections N=8 and the number of the unit sections of first kind N1=3), the time-average transmittance Pav is actually calculated. It follows from Equation 21 that the Pav is about 0.66.

【Equation 21】

$$P_{av}=4／12×1+2／12×1+1／12×1+1／12×$$
$$(1／2+1／4+1／8+1／16+1／32)$$
$$=255／384≒0.66$$

However, calculation is made with standardization such that the brightest part of the transmittance can be set to be 1. Accordingly, only the 25% luminous efficiency in the single drive method is increased up to 66% in the combination drive method. On the other hand, while the interval of the shortest unit section is 1/8 of the single display period in the single drive method, it decreases to 1/12 in the combination drive method but, nevertheless, it is far larger, as compared with 1/256 in the prior art. Thus, the restriction on the response time condition is still far smaller, as compared with the prior art, and no practical problem is presented.

When similar calculation is made of the case of N=8, N1=5 by the combination drive method, Pav=255/272≒ 0.938 is obtained and the interval of the shortest unit section is 1/34 of the single display period. This causes reduction of the luminous efficiency by only about 6%, as compared with the case having no rotary filter, thus presenting substantially no problem on efficiency loss. On the other hand, the interval of the shortest unit section is increased about 8 times as large as that of the prior art, in the case of which little practical problem is also presented to the restriction on the response time.

The description is given in the above, taking the case of N=8 and N1=3 or 5 as an example. In other cases than that, the substantially same effect of improving luminous efficiency is produced.

(Example 2-8)

This example relates to the use of an optical shutter.

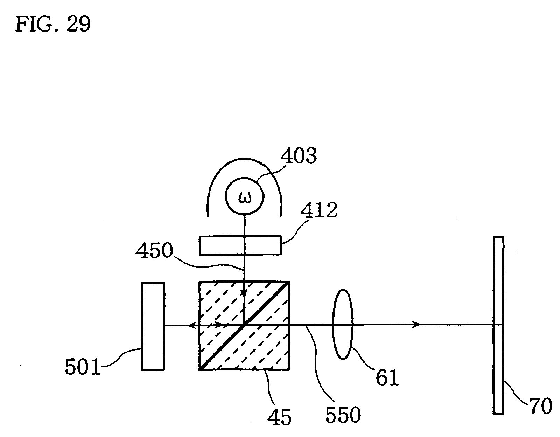

The construction of the display device of this example is shown in FIG. 29. As shown in the same diagram, this display device is basically similar to that of FIG. 28 but is quite different therefrom in that an optical shutter 412 is used as the light batch modulating means. The optical shutter which may be used include, for example, a mechanical shutter and a liquid crystal panel. In the case of the liquid crystal panel being variable in transmittance, the 256 gray scales having good linearity can be obtained in the same principle as that of the above-mentioned Example 2-7, apart from the color resolve of red, green and blue. Further, the matters described in that example are substantially applicable to this Example as well.

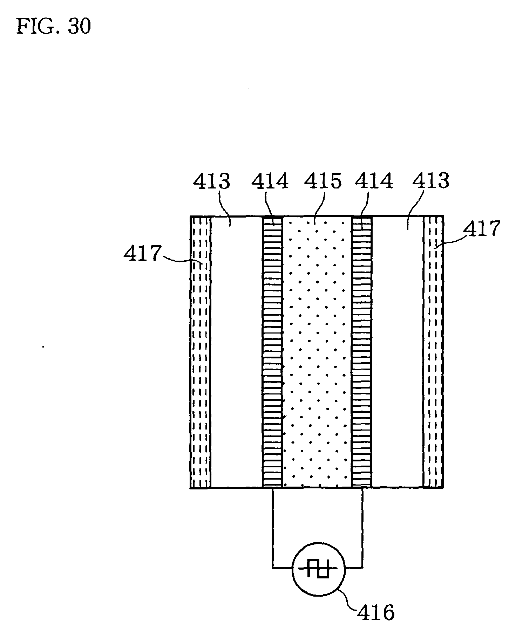

The structure of the liquid crystal panel used as the optical shutter in this Example is shown in section in FIG. 30. This liquid crystal panel has the structure in which a liquid crystal layer 415 is sandwiched between two transparent substrates 413 made of e.g. glass, quartz, plastics and forming thereon transparent electrodes 414 such as ITO. The operation of the liquid crystal is controlled by applying voltage across the two transparent electrodes 414 via the drive power source 416. In order for variation of the liquid crystal's condition to be taken out in the form of variation of transmittance, polarizing films 417 are bonded on both outside surfaces of the transparent substrates 413.

The VA liquid crystal which is relatively swift to respond and can produce high contrast may be used as the liquid crystal and other types of liquid crystals may be used. The liquid crystals which may be used include, for example, TN (twisted nematic) liquid crystal, STN (super twisted nematic) liquid crystal, VA liquid crystal (vertically aligned liquid crystal or homeotropic liquid crystal), ECB (electric field controlling birefringence) type liquid crystal including homogeneous alignment liquid crystal, Bent liquid crystal, IPS (In-Plane-Switching) liquid crystal, GH (Guest/Host) liquid crystal, Polymer dispersed liquid crystal, Ferroelectric liquid crystal, Antiferroelectric liquid crystal, OCB liquid crystal, Discotic liquid crystal and other various modes. In addition to the liquid crystals, any material whose optical characteristics are varied by an applied voltage may be used. For example, electro-optic crystals, such as BSO (bismuth silicon oxide), can be cited. The liquid crystal, which is lowest in price at the time of filing this application, is preferably used.

As seen from P(t) of FIGS. 10-13, for example, the liquid crystal must respond swiftly in the single display period. Accordingly, ferroelectric liquid crystal and antiferroelectric liquid crystal that can respond at very high speed are most desirable at the time of filing of the application. However, the ferroelectric liquid crystal operates on a binary (ON or OFF) basis, so that it is preferably driven on a time interval modulating basis, as shown in FIG. 12, for example.

(Example 2-9)

This Example is so designed that the light from a spontaneous light type spatial light modulator element can be modulated by use of the light batch modulating means.

Of the examples of the second embodiment, the examples 2-1 through 2-6 are designed to modulate the luminance of the light source itself (generally optically) and the examples 2-7 and 2-8 are designed to modulate the light from the light source of generally constant luminance. This Example is different in construction from these Examples.

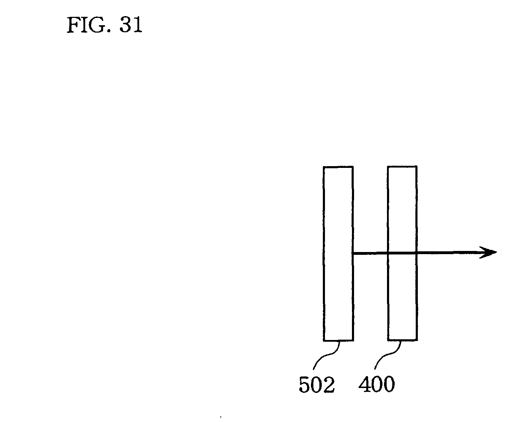

Illustrated in FIG. 31 is the principle of this Example. This display device comprises the spontaneous light type spatial light modulator element 502 combined with the light batch modulating means 40. Take FIG. 10 for instance, the spontaneous light type spatial light modulator element 502, which is equivalent to the two-dimensional light modulation means, varies in light emission luminance as expressed by the $\mu(t)$ at the parts thereof, and the light batch modulating means 400 placed in front of it on the user's side varies in transmittance as expressed the by $P(t)$. As a result of this, the output light is expressed by the $P(t)\mu(t)$, so that the good gray scale having good linearity is obtained without narrowing the intervals of the unit sections, as is the case with the previous Examples. The same applies to not only the case of FIG. 10 but also the cases of FIGS. 11, 12, 13, 17 and 22.

Now, reference will be given to concrete construction of the spontaneous light type spatial light modulator element. The spontaneous light type spatial light modulator elements that may be used include electro-luminescence element (including an organic EL element) a plasma display panel, a field emission type display, a cathode ray tube, a laser diode array, a light emitting diode array and a scanned laser light source.

The light batch modulating means that may be used include the rotary filter as described in Example 2-8 and the optical shutter as described in Example 2-9.

The spontaneous light type spatial light modulator element may be the one that generates a spatial distribution of luminance, the one that provides in-plane distribution, such as a polarization condition, a polarization direction, a phase, a wavelength spectrum, an optical coherence, and further a quantal coherence for the future, or the one that generates a distribution of light oscillation mode for a laser array. It is only required that Equation 9 or Equation 10 is satisfied as light energy (brightness) at the stage at which light is eventually observed as a projected image.

(Example 2-10)

This Example is an example in which liquid crystal panels are laminated.

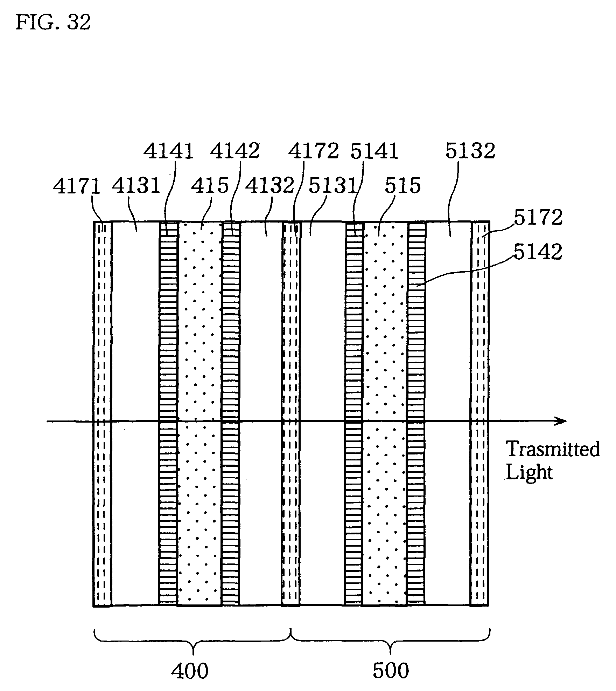

The display device of this Example is shown in section in FIG. 32. As shown in this diagram, this display device comprises two bonded transparent liquid crystal panels. These two panels correspond to the light batch modulating portion and the two-dimensional light modulation portion, respectively.

The light batch modulating portion 400 has the structure that the first liquid crystal layer 415 is sandwiched between the two transparent substrates 4131, 4132 attaching thereto the transparent electrodes 4141, 4142, respectively. Likewise, the two-dimensional light modulation portion 500 has the structure that the second liquid crystal layer 515 is sandwiched between the two transparent substrates 5131, 5132 attaching thereto the transparent electrodes 5141, 5142, respectively. The transparent substrate 5132 is divided for every pixel so that the every pixel can separately be driven for every pixel electrode. Though the transparent substrate 5132 includes the active matrix drive circuit comprising TFT and the like formed thereon, since it is an obvious matter, the illustration is omitted for the sake of simplicity of illustration. Polarizing films 4171, 5172 and 4172 are bonded to the light batch modulating portion 400 at the input side thereof, to the boundary between the light batch modulating portion 400 and the two-dimensional light modulation portion 500, and to the two-dimensional light modulation portion 500 at the output side thereof, respectively.

The light batch modulating portion 400 is the exact same in construction as the light batch modulating means shown in FIG. 30. Also, the two-dimensional light modulation portion 500 is a sort of the passive type spatial light modulation element. Accordingly, when light is incident from left side of the diagram and the respective portions are driven under the principle of the present invention, the gray scale having good linearity can be obtained, thus enabling the similar drive to those of FIGS. 10, 11, 12, 13 17 and 22. This element may be used as a projector or a micro display. It may also be used to a direct view liquid crystal panel.

The first liquid crystal layer may use similar liquid crystal to the optical shutter used in Example 2-8. Further, ferroelectric liquid crystal and antiferroelectric liquid crystal that can respond at high speed are most suitable for this construction at the time of filing of the application. Various types of liquid crystals including the VA liquid crystal may be used to the second liquid crystal layer.

While the transparent liquid crystal is shown in FIG. 32, it may of course be replaced with another type, such as the reflective liquid crystal.

This element enables light to be input from the right side and output from the left side.

This element may be combined with the light source to form a light source having a light control capability.

This image display device may be provided with a phase difference compensating film, for improvement of a viewing angle. When the liquid crystals are driven on a binary basis, in particular, there are virtually provided only two stable alignment conditions of the liquid crystals, so it is only necessary to consider the phase difference compensating effect particularly when an optimum retardation is designed (when the liquid crystals are driven in an analogous fashion, consideration must be taken of their all continuous alignment conditions). This provides an enhanced degree of freedom of design. In addition, since no intermediate condition is used, the reversal of gray scale which occurs when viewed obliquely in the analogous drive (as is discussed by C. Heinmullse et. al., SID 99 DIGEST, p90-93 (1999)) is improved.

Also, combination with a capacitive coupling drive method (as is discussed by Asada et. al., a Scholarly Journal published by Institute of Image Information and Television Engineers, vol. 52, No. 7,99.992-995 (1998)) is of course feasible. This method enables a voltage applied to the liquid crystal to be controlled in the exact same manner as in TABLE 3 by, for example, varying the compensation voltage in the capacitive coupling drive, instead of varying the potential of ITO by the method as shown in TABLE 3. This can provide the advantage of reduction of voltage of the driver IC.

In the case where the device is always driven in this manner, the original image signals are processed into digital signals, first, and then fed to the two-dimensional modulation means. For example, it is supposed that the original image signals for one frame (($M_A \times N_A$) pixels, N bits of gray scale) are arranged in the following order: [signal for pixel (1, 1)], [signal for pixel (1, 2)], [signal for pixel (1, 3)], ... [signal for pixel ($M_A$, $N_A$)] on a time-series basis (where the phase in parentheses [ ] expresses N bits of image signal, in other words, the signal of ($M_A \times N_A \times N$) zeros or ones arranged in series, apart from parity or equivalent).

Before these signals are fed to the two-dimensional light modulation means, they must be rearranged in the following order: [{N-th digit of bits for signal of pixel (1, 1)}], [{N-th digit of bits of signal for pixel (1, 2)}], [{N-th digit of bits of signal for pixel (1, 3)}], ..., [{N-th digit of bits of signal for pixel ($M_A$, $N_A$)}, {(N-1)-th digit of bits of signal for pixel (1, 1)}, {(N-1)-th digit of bits of signal for pixel (1, 2)}, {(N-1)-th digit of bits of signal for pixel (1, 3)}, ..., {(N-1)-th digit of bits of signal for pixel ($M_A$, $N_A$)}], ... [{unit digit of bits of signal for pixel (1, 1)), {unit digit of bits of signal for pixel (1, 2)}, {unit digit of bits of signal for pixel (1, 3)}, ... and {unit digit of bits of signal for pixel ($M_A$, $N_A$)}]. For performing a series of operations like this, the device is preferably provided with a digital signal processing memory.

(Third Embodiment)

This embodiment is designed to geometrically divide the respective pixels.

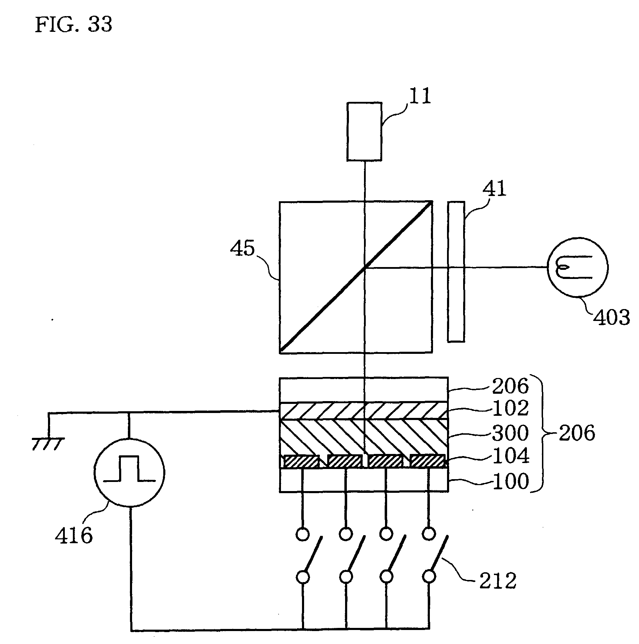

The construction of the display device of this embodiment is shown in FIG. 33.

In this embodiment, reference is first made to a sample panel 206 having 16 electrodes (4 rows × 4 columns) in total, for the sake of simplicity.

The sample panel 206 is the one in which (i) a first glass substrate 100, on which 16 Al electrodes 1041 are formed in 4 rows and 4 columns and an alignment layer (not shown) is coated thereon for alignment layer treatment, and (ii) a second glass substrate 200, on which ITO 102 is formed and an alignment layer (not shown) is likewise coated thereon for alignment layer treatment, are bonded to each other with a given gap and the VA liquid crystal 300 is injected in the space therebetween. It is noted here that the sample plate having the cell gap of d=1.3μm and the VA liquid crystal of Δn=-0.12 was used. The 16 Al electrodes each house therein wiring (not shown) so that voltage can separately be applied to the respective electrodes and switches 212 are attached to the wiring. The sample panel 206 thus constructed is connected to the drive power source 416. The light from the light source 403 is incident on the sample panel 206 through the filter 41 and the polarizing beam splitter 45 and the reflected light is observed by use of the photo detector 11. A halogen lamp is used as the light source 403 and the filter 41 of a center wavelength of λ =540nm is used.

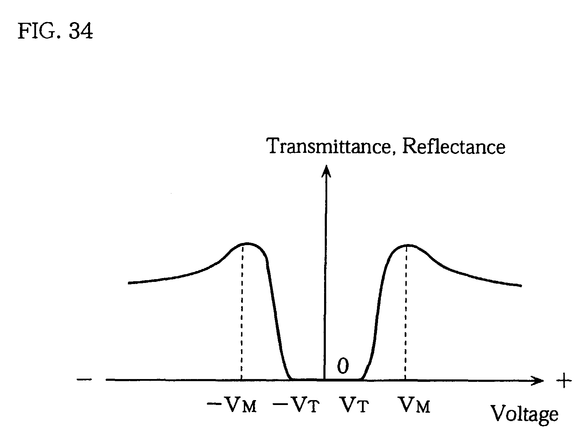

First, the 16 Al electrodes of the sample panel were concurrently driven by use of voltage signals of triangular wave of very low frequency (not more than 0.1Hz). Shown in FIG. 34 is the relation between the driving voltage and the intensity of the reflective light. In the same diagram, the driving voltage is plotted along the X axis and the intensity of the reflected light observed by the photo detector 211 is plotted along the Y axis. As a result of this, a graphic form symmetry in positive and negative with respect to the Y axis (voltage) was obtained. At this time, the voltage at which the intensity of reflected light starts to rise (threshold voltage) was $V_T$=1.9V and the voltage at which it becomes maximum was $V_M$=7.0V.

Then, when the response speed of the liquid crystal (the time for the intensity of the reflected light to rise and fall when voltage is varied from $V_T$ to $V_M$ and vice versa) was measured, it was about 0.5msec. This response speed is very fast, as compared with that of the typical TN liquid crystal (some msecs to 10msec). This may probably be because the cell gap is too small.

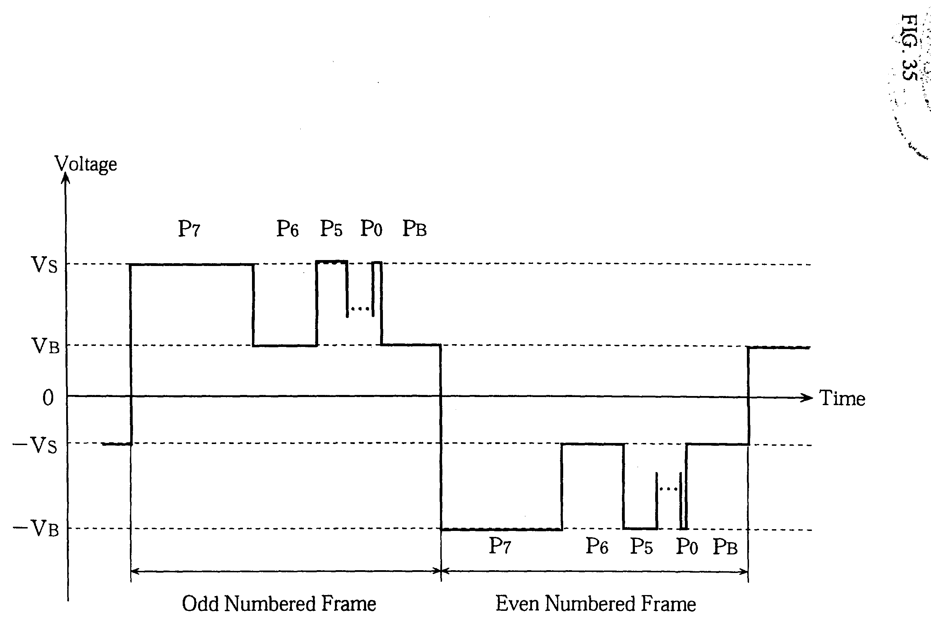

Next, let us consider the voltage waveform, reversed in positive and negative for each frame as shown in FIG. 35, for driving the sample panel. The voltage waveform takes 16.6667 msec. (=1/60 sec.) as one unit, which corresponds to the single display period (the single frame) of the image display device. Each frame comprises 8 voltage modulation terms $P_7$, $P_6$, ... $P_1$, $P_0$ and one auxiliary term (blanking) $P_B$. The intervals of the 8 voltage modulation terms are 8 msec., 4 msec., 2 msec., 1 msec., 0.5 msec., 0.25 msec., 0.125 msec., and 0.0625 msec. in the decreasing order from $P_7$, with an arithmetic progression of a common ratio of 1/2. The interval of the auxiliary term is 0.7292 msec..

In the odd numbered frames, the voltage of each voltage modulation term is $V_S$ or $V_B$ ($V_S > V_B \cong 0$). In the even numbered frames, it is $-V_S$ or $-V_B$. As to the voltage of the auxiliary term, it is $V_B$ in the odd numbered frames and $-V_B$ in the even numbered frames. This specific voltage waveform that reverses on an even-odd numbered frame basis enables the direct current component to have a value of nearly zero, from a substantially long time (e.g. 1 second) view for the single frame and, as a result, the charge-up of the liquid crystal with time is prevented. It is to be noted that while this example takes the completely symmetrical form in positive and negative, such as the $V_S$ and $-V_S$ or the $V_B$ and $-V_B$, only the reversal of sign in the even numbered frame and the odd numbered frame (even when an absolute value is different) provides certain degree of effect.

Incidentally, the voltage-reflectance characteristics (the $\gamma$ characteristics) is symmetrical in positive and negative, as shown in FIG. 34. This provides the result that the optical condition of the liquid crystal produced when $V_S$ is applied thereto in the odd numbered frames is exactly identical to that produced when $-V_S$ is applied thereto in the even numbered frame, thus producing the same intensity of the reflected light. The same applies to the $V_B$ and $-V_B$. Thus, making the optical condition of the liquid crystal in the even numbered frames equal to that in the odd numbered frames enables flicker of the display to be eliminated.

There are $2^8=256$ number of these voltage waveforms (for each odd numbered frame and each even numbered frame). For each digit of 8 digit binary numbers of j (j=0, 1, ..., 255), the voltage waveform obtained by the following setting is taken as $V_j$: when a figure of the $2^K$-th digit is 1, the voltage in the voltage modulation term $P_k$ is set to $V_S$ (or $-V_S$), and when a figure of the $2^K$-th digit is zero, the voltage in the voltage modulation ter $P_k$ is set to $V_B$ (or $-V_B$).

As a practical matter, 16 Al electrodes were driven at a time to measure the output $I_j$ (which corresponds to an integrated value of the intensity of the reflected light throughout the single frame) for each of the 256 voltage waveforms $V_j$: where $V_S=7.0V$, $V_B=1.5V$. The relation between j and $I_j$ obtained is shown in FIG. 8. It is seen from this that the relation close to linearity was generally obtained in the range except a low gray scale level.

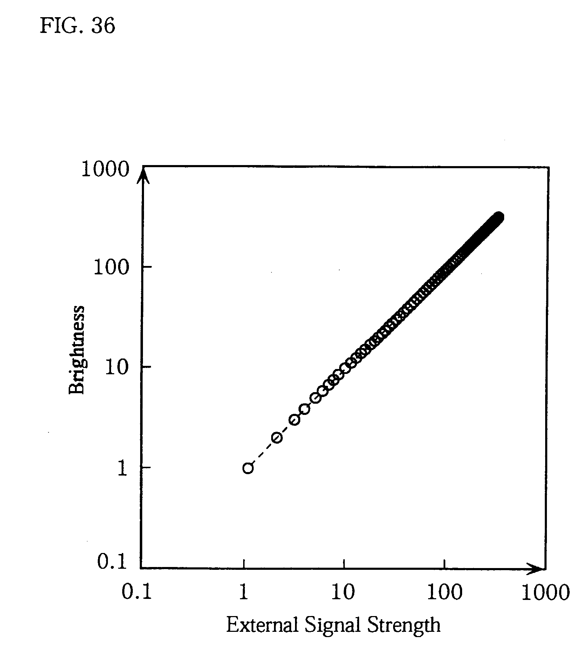

Then, for 16 or more gray scales, the driving method of 16 electrodes being driven at a time was used, while on the other hand, for 15 or less gray scales, the same driving method as that for 16 or more gray scales was used but the number of pixels were varied. For example, in the case of 1, only one of the pixels is driven and the remaining pixels are put in the non-display state. In the case of 2, only two of the pixels are driven; in the case of 3, only three of the pixels, ... . Like this, the number of pixels to be displayed are varied. This enables the reflectance to vary linearly in accordance with the area of the pixels displayed. As a result of this, the gray scale reproducibility with linearity is obtained in the whole range, as shown in FIG. 36.

When the relation between j and $I_j$ was repeatedly measured, the exact same results were obtained. Even when the measurement was made with the temperature of the sample panel being varied in the range of -20°C to 70°C, little difference originating from temperature was found. Also, when the measurement was made in various points in the plane of the sample panel, the exact same characteristics were obtained. This is probably because since this driving method essentially uses only two modes of the liquid crystal, i.e., a complete ON made (which corresponds to $\pm V_S$) and a complete OFF mode (which corresponds to $\pm V_B$), even if a half tone of the $\gamma$ characteristics varies (due to temperature, charge-up, non-uniformity in plane, etc.), the driving method is resistant to take the effect, as compared with the conventional analogous driving method.

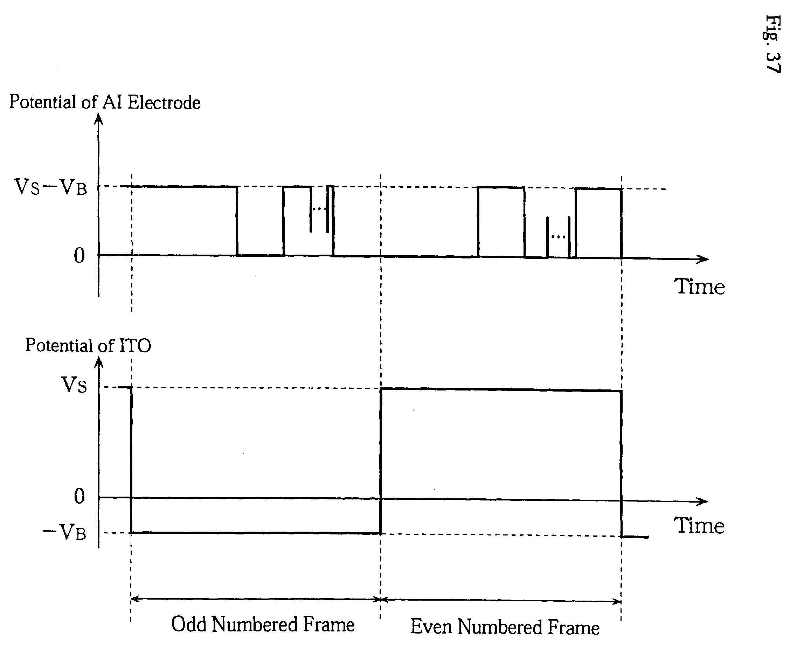

Now, let us consider the case where the potential of the Al electrode 104 of the sample panel 206 shown in FIG. 33 and the potential of ITO 102 are separately varied with reference to the earth potential. An example of the variation is shown in TABLE 3 and the actual waveform diagram is shown in FIG. 37.

【TABLE 3】

| Frame | Odd Number | | Even Number | |
|---|---|---|---|---|
| Signal Output | 0 | 1 | 0 | 1 |
| Potential of Al Electrode | 0 | $V_S - V_B$ | $V_S - V_B$ | 0 |
| Potential of ITO | $-V_B$ | $-V_B$ | $V_S$ | $V_S$ |
| Potential Difference | $V_B$ | $V_S$ | $-V_B$ | $-V_S$ |

It can be seen from this that when the differences between the potential of the Al electrode and the potential of the ITO are taken, the waveform shown in FIG. 34 is formed, and as such can need only two potentials of zero and $V_S$-$V_B$ for the Al electrodes. This enables the peripheral driver circuits to be simplified when actually driven with the active matrix substrate. Also, since the potential of only two values is needed, conformity with the digital circuit can be improved, and as such can be effective particularly for the use of a SRAM substrate (as mentioned later).

In the experiments so far, the voltages $V_B$ and $V_S$ are not necessarily fixed; | $V_B$ | may be close to 0V to the threshold voltage $V_T$; and $V_S$ may be close to the maximum voltage $V_M$. In some cases, the $\gamma$ characteristic curve does not necessarily have any maximum value. In such a case, the voltage $V_S$ may be so set as so produce an adequate reflectance.

While the 8-bit gray scale was herein taken as an example, the present invention is not particularly limited to the 8-bit gray scale. Any bits may be used, if only 2 bits or more.

Also, while the time of the single frame is herein set to 16.6667 msec. to meet with the current television broadcasting, this is not necessarily limited to this value.

The voltage modulation term in the single frame is not necessarily arrayed in the order of decreasing interval. It may be arrayed, for example, in the order of increasing interval, or may alternatively be randomly arrayed, though the control is complicated.

While in the experiments so far, any adjoining voltage modulation terms in the single frame are temporally in contact with each other, a proper auxiliary term (non-modulation term; blanking) or a black display term for preventing deterioration of sharpness of a moving image due to integration effect may be provided therebetween. For preventing the integration effect, the unit section to form a small gray scale unit is preferably allow to fall behind the single display period.

While in the experiments, the voltage modulation terms in the single frame are all made equal in height, they are not necessarily made equal, though the circuitry of the peripheral driver circuits of the active matrix is somewhat complicated.

In addition, the fixed voltage is not necessarily applied in every voltage modulation term, though the circuitry is somewhat complicated (in the strict sense, some variation in voltage may of course occur in the voltage modulation term due to the parasite capability of the transistors and the leak current, but such variation is of negligible).

While the experiments mentioned above were made under the conditions of cell gap d=1.3μm; birefringence $\Delta$ n=-0.12; and wavelength of light λ=540 nm, the conditions are not necessarily limited to those values. For example, the cell gap d may be in the range of 0.05μm to 50μm.

While the experiments mentioned above were all made to the VA light crystal, the same applies to the nematic phase liquid crystals, including TN liquid crystal, STN (super twisted nematic) liquid crystal, IPS (In-Plane-Switching) liquid crystal, GH (Guest/Host) liquid crystal, Polymer dispersed liquid crystal, homogeneous liquid crystal, hybrid liquid crystal, OCB liquid crystal and Discotic liquid crystal. Although having some difficulties in impact stability and alignment stability at the time of filing of the application, the non-nematic liquid crystals, such as ferroelectric liquid crystal and antiferroelectric liquid crystal, can produce the effects of the present invention. Accordingly, the non-nematic liquid crystals may possibly be adopted under the future technical development.

While the experiments mentioned above were carried out with the reflective display device, the exact same experiments can also be carried out with the transparent display device. In the latter case, with the Al electrodes of the sample panel being replaced with ITO and the sample panel with ITO being sandwiched between two polarizing plates, the intensity of the transmitted light may be measured. It should be noted, however, that the transparent display device reduces the modulation factor to half than the reflective display device when the birefringence effect is used as in the VA liquid crystal, so that there is the possibility that the efficiency may reduce. From the viewpoint of this, the reflective display device is preferable.

While in the above illustration, selection is made in a two-valued logic manner from two unit voltage waveforms within each voltage modulation term (except the reversal in the even/odd numbered frames), the selection may dare to be made from a plurality of unit voltage waveforms in a three-valued logic or four-valued logic manner.

While the number of Al electrodes are set to 16 (4 rows × 4 columns), this is not of restrictive. For example, the number of Al electrodes may be set to 4 (2 rows × 2 columns). While the minimum pixels preferably have an identical area, this is not necessarily of restrictive.

While in this Embodiment, the gray scale display method using the variation in area is used for the 15 or less gray scales, this is not of restrictive. It may be feasible to combine the gray scale method using the area (4 bits in this Embodiment) and the gray scale method using the pulse width (e.g. 4 bits). For example, the gray scale method using the area for 4 bits as in this Embodiment and the gray scale method using the pulse width for e.g. 4 bits may be combined to display 8 bits (256 gray scales).

(Fourth Embodiment)

This embodiment relates to a liquid crystal panel in which the element of the third embodiment is actually used to the active matrix substrate.

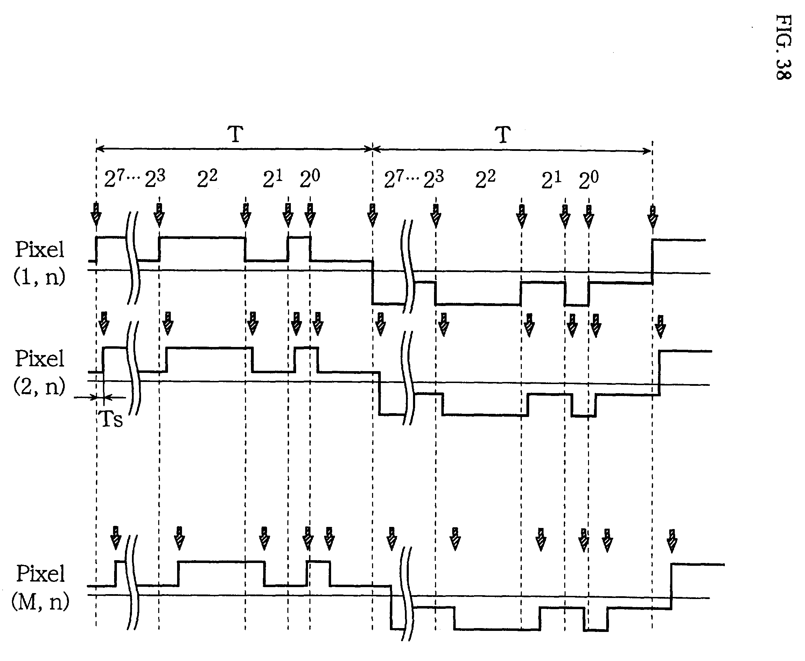

Now, in the case where the image signals input comprise A × B number of display pixel signals, four time of A is taken as M and four times of B is taken as N. In this case, the 256 gray scales (8 bits) in total can be displayed by using the area of 1-16 (4 bits) and the time gray scale (pulse width) for the remaining 4 bits. The liquid crystal panel is formed by injecting the VA liquid crystal in between the M×N transparent active matrix substrate (which is formed of amorphous Si or polycrystal Si) and the transparent electrode (ITO) substrate, as shown in FIG. 4, and the respective pixels are driven with the voltage waveform as mentioned in the Embodiment above. An example of this drive timing chart is shown in FIG. 38.

This is a waveform showing the voltage applied to the liquid crystal in the (1, n)-th pixel, the (2, n)-th pixel, ..., the (M, n)-th pixel (where n=1, 2, ..., N) in descendent order from the top. Illustrated therein is the state in which the voltage waveform in the single frame (indicated by T) comprising 8 voltage modulation terms operates with a time lag Ts as mentioned in the above-noted Embodiment (for the sake of simplicity, the voltage waveforms are each depicted in the form of 1xxx0101 in a binary system). Indicated by downward arrows on the top of broken lines of each stage are the moments at which gate lines belonging to the related pixels are selected. This shows that the n-th data line takes a voltage value ($\pm V_B$ or $\pm V_S$) corresponding to a value (0 or 1) of the related digits value, when appearing in the binary system, of voltage waveform numbers (15-255) to be generated in each pixel per time Ts.

Further, 0-14 gray scales are displayed by using a display area of $4 \times 4$ pixels (the number of display pixels).

The following conditions must be satisfied to effect this drive with efficiency.

[1] that the charge to every pixel is substantially completed within the time $T_S$ (not including the response time of the liquid crystal molecules);

[2] that the signals (0 or 1) to be fed to N number of data lines within the time $T_S$ is determined and the voltage can be set to a value ($\pm V_B$ or $\pm V_S$) corresponding thereto; and

[3] that M · $T_S$ is shorter than the minimum voltage modulation term (P0).

As M, N become larger in number, it becomes more difficult to satisfy these conditions. Even for the large number of M, N, the conditions can be satisfied by increasing the number of parallel processing bits of a data processing shift register or increasing charging capacities of the transistors themselves (i.e., increasing mobility and decreasing RC time constant). Preferably, M, N are in the range of the order of 4-40,000.

It is needless to say that when some sets of display units of M×N pixels are two-dimensionally arranged, the display of a further large number of pixels can be made.

Now, when an image of 256 gray scales was actually displayed for the case of M=N=64 (using a three color (R, G, B) arrangement), the image was found to have good uniformity and little irregular color, as compared with the conventional analog gray scale. Also, even in a long-term operation, no variation was found in coloration and gray scale characteristics and the significantly stable image was obtained.

All matters mentioned in the above-noted embodiment apply to the panel using the active matrix substrate as well, when actually driven on a pixel-to-pixel basis.

(Fifth Embodiment)

This embodiment is so constructed that instead of the active matrix substrate comprising one transistor per pixel, a SRAM array substrate using CMOS formed on the crystal Si substrate is used to form a pixel pattern.

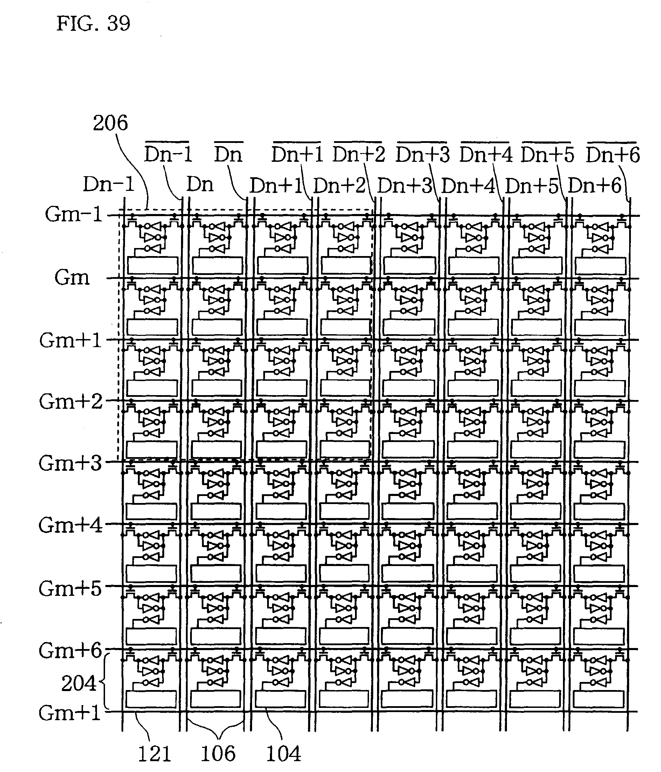

An example of the circuit of this embodiment is shown in FIG. 39. As shown in the diagram, this circuit is so designed that a logic value (0 or 1) of the data lines 106 at the moment at which the gate line 121 is selected can be set to the logic value of the pixel electrodes 104 as it is. The fundamental operation is the same as in the active matrix substrate of the above-noted embodiment. Also, the effects resulting from the adoption of the SRAM are essentially the same as those described in the Examples 2-2 through 2-5.

In the example of FIG. 39, a pixel 206 over the image input signals is formed by 16 (4×4) partial pixels in total, as indicated by a dotted line surrounding in square a left top part of this diagram, to display a correct gray scale. 204 designates a CMOS circuit.

This circuit is different from the active matrix in the following points.

[1] This is essentially the digital circuit, so that the pixel electrode potential has only two values (e.g. 0V and 5V);

[2] This is the circuit using a large crystal Si as the semiconductor element, so that the mobility is so large, as compared with the semiconductor element made of amorphous Si and polycrystal Si, that high speed switching response can be performed;

[3] In the case of active matrix, in the non-selective term of the gate line, the pixel electrodes are electrically isolated to hold the electric charge and thereby the potential is kept constant. In contrast to this, in the case of SRAM, even in the non-selective term of the gate line, they are always in connection with either of binary power supply lines to hold the potential. This means that the active matrix requires that the liquid crystal charges through transistor channels within the selective term of the gate lines, while on the other hand, the SRAM requires that if only the switching of the CMOS circuit 204 of the pixels is completed within the selective term of the gate lines, the remaining liquid crystal can be allowed to continuously charge even after the selective term is ended, so that the selective term can be shortened;

[4] This circuit is formed on the Si substrate, so that it generally results in the reflective type unless a special process is performed; and

[5] This circuit is large in number of transistors per pixel and is complicated in construction, so that it is inferior to the active matrix in terms of correspondence to increase in miniature of the circuitry and improvement of process yield.

Of these, the limitation [1] can be solved by adopting the method of separately controlling the potential on the Al electrode side (SRAM substrate side) and the potential on the ITO side

Thus, except some limitations of [4], [5], almost all matters aforementioned in the third and fourth embodiments are further advantageously applicable to this Embodiment. Particularly, since this embodiment has the advantages of [2], [3], the need to satisfy the condition [1] of the three conditions described in the above-noted embodiment can be eliminated, then enabling this embodiment to correspond to the large number of pixels.

In practice, this SRAM substrate (e.g. 1,280×1,024 pixels) and the VA liquid crystal are combined to thereby produce the liquid crystal light valve. When the liquid crystal light valve thus formed is driven by use of the voltage waveform of FIG. 38, incorporating it in the projector, for projection of an image, the image having good uniformity, little irregular color and little deterioration of gray scale and showing good stability with time was obtained.

As mentioned at the last in Example 2-10, this Embodiment can also be provided with a phase difference compensating film, for improvement of a viewing angle. Also, combination with the capacitive coupling drive method is of course feasible.

(Sixth Embodiment)

This embodiment relates to a transparent liquid crystal panel.

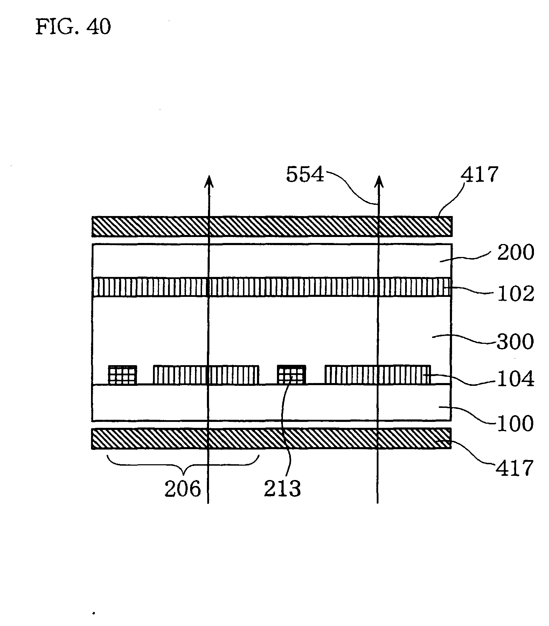

The image display device of this embodiment is shown in section in FIG. 40. In this embodiment, a liquid crystal layer 300 is formed between a first transparent substrate 100 forming thereon the pixel electrodes 104 and a second transparent substrate 200 forming thereon the opposite electrodes 102 to thereby produce the liquid crystal panel. Each pixel 206 has therein the pixel electrode 104 and an associated display-controlling unit circuit 213, so that the voltage applied to the pixel electrode 104 is controlled by the display-controlling unit circuit 213. When the liquid crystal panel is sandwiched between two polarizing plates 300, the transmitted light 554 shows different intensity (transmittance) in accordance with the voltage applied to the liquid crystal layer 300 (i.e., difference between the applied voltage to the pixel electrode 104 and the applied voltage to the opposite electrode 102)

It is to be noted that the second transparent substrate forming thereon the opposite electrode, the pixel electrode, the display-controlling unit circuit and their interconnecting wiring (not shown in FIG. 40) are collectively called "display control means". Also, the liquid crystal layer can generally be called "light modulation layer".

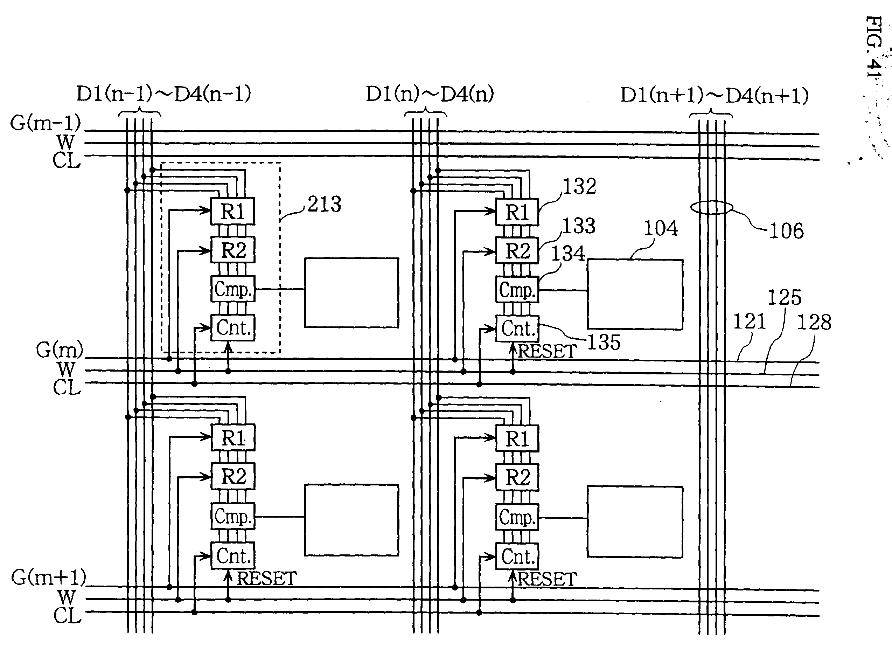

The pixel electrodes formed on the first transparent substrate and the substrate forming thereon the display-controlling unit circuit are shown in plan in FIG. 41. As shown in the same diagram, in the substrate, the image input signal supply lines 106 are wired in the vertical (above and below) direction and a line selection line 121, a writing signal wire 125 and a clock signal wire 128 are wired in the horizontal (right and left) direction, to thereby produce the matrix. The pixel electrode 104 and the display-controlling unit circuit 213 are formed in each of the spaces of the matrix. In the diagram, the image input signal is set to 4 bits. Thus, the gray scale of image is expressed by 16 levels of zero (which appears in the form of 0000 in the binary system) to 15 (which appears in the form of 1111 in the binary system).

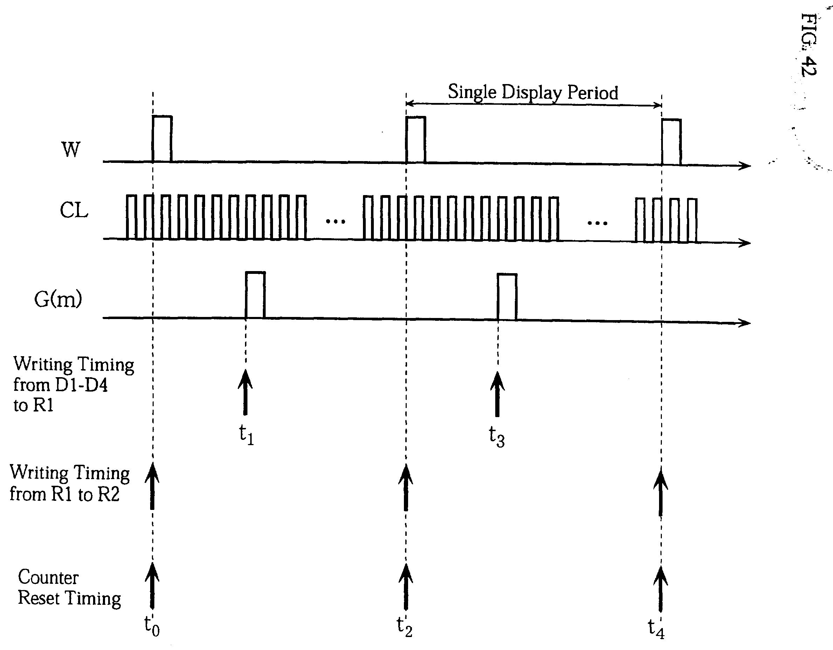

Shown in FIG. 42 is a timing chart of the respective signals.

(Timing t1) The line selection lines 121 are selected in sequence within the single display period. At the moment at which a m-th line G(m) is selected, signal values (0 or 1) of the image input signal supply lines D1 (n), D2 (n), D3 (n) and D4 (n) are stored in a first register 132 of the pixel (m, n). The same applies to the signal supply lines D1 (n-1), D 2 (n-1), D 3 (n-1), and D4 (n-1).

(Timing t2) When the selection of all line selection lines 121 is completed and the writing of the signals to the first register 132 is completed throughout the whole display region, the single display period is ended. Then, the signals are applied all together to all the writing signal wires 125 and the signals stored in the first register 132 are sent all together to the second register 133 throughout the full screen. The writing signal wires 125 are connected to reset terminals of the counters 135 as well, so that the counters 135 are concurrently reset (the indicated value is reset to zero).

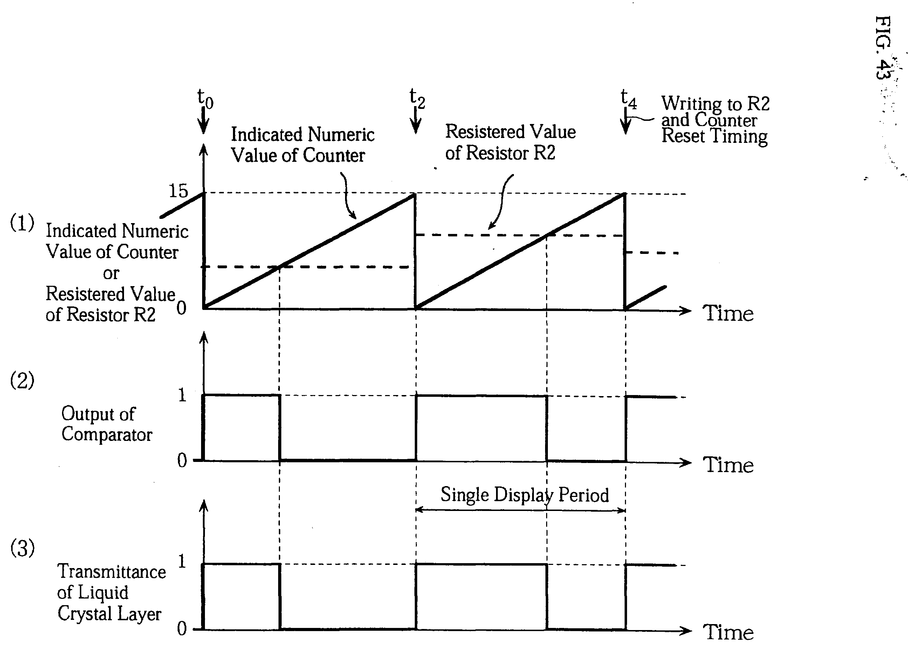

Clock pulses are always applied to clock signal wires 128 and the counters 135 count up, such that the indicated value increases like 0, 1, 2, 3, ... modulo 16 (actually like 0, 1, 10, 11 because of a binary number of 4 bits). The time variation of the indicated value is indicated by a solid line in the graph of FIG. 43(1). On the other hand, the signals are written all together to the second register 133 at the timing t2, which is indicated by a broken line in the same graph. A Comparator 134 compares a numeric value (an output value) of the second register 133 with the indicated numeric value of the counter 135 and output 1 when former is larger and output zero when the latter is larger. Thus, while the indicated numeric value of the counter 135 is smaller than the numeric value of the second register 133 in the initial stage of the single display period, 1 is output and zero is not output until while the indicated numeric value of the counter becomes equal to the numeric value of the second register 133. Thus, the output shown in FIG. 43(2) is obtained.

The transmittance of the liquid crystal layer takes a value corresponding to the output of the comparators 134 (or the potential of the pixel electrodes 104). For example, supposing that when the output of the comparators 134 is zero, the transmittance of the liquid crystal layer is zero (darkness state = second optical state) and when the output is 1, the transmittance is 1 (brightness state = first optical state), the time variation of the transmittance of the liquid crystal layer takes the form as shown in FIG. 43(3). As seen from these diagrams, the time interval during which the liquid crystal layer is in ON is proportional to the numeric value of the second register (i.e., the input gray scale level). Thus, the integrated value of the transmittance time in the single display period (which value corresponds to brightness perceptible to an observer) is proportional to the numeric number of the second register. This enables the gray scale display.

While the discussion above was made on the 4-bits gray scale, for the sake of simplicity, it is needless to say that any other values, such as a 6-bits gray scale, a 7-bits gray scale, a 8-bits gray scale, a 10-bits gray scale, etc. may be used.

This driving mode is the digital mode in which only two optical states, brightness and darkness, are used to perform the gray scale display and, as far as this is concerned, this driving mode is similar to the one disclosed by Japanese Patent Application No. Hei 09-190837. Accordingly, the image good in gray scale reproducibility and color reproducibility and good in uniformity and small in cross-talk is obtained, as compared with the analogous drive.

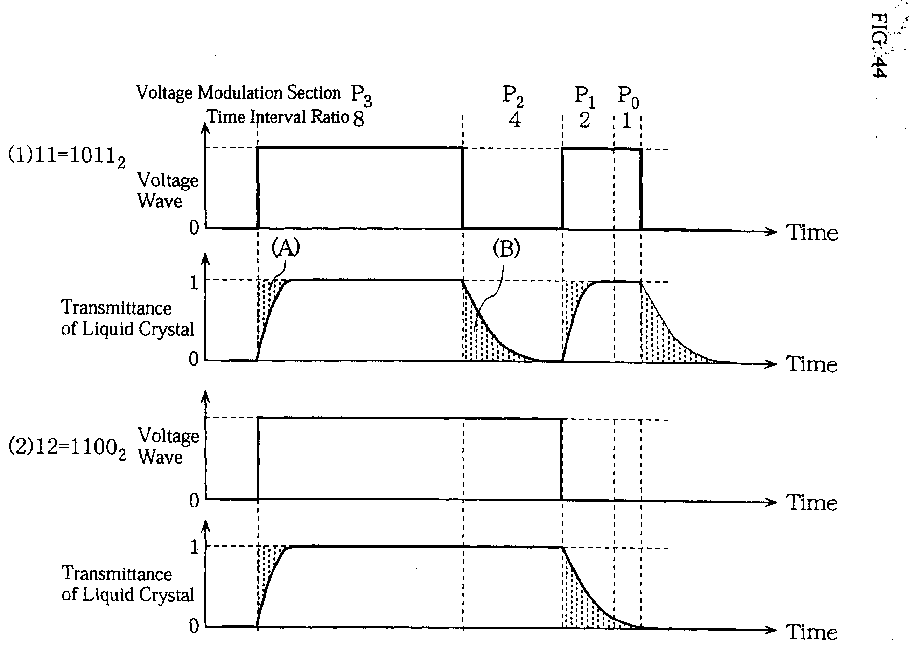

In the prior art, there arose the phenomenon that the gray scale level is reversed (Cf. FIG. 4(b) of Japanese Patent Application No. Hei 09-190837 using the 8-bits gray scale). This seems to be caused by the difference between the response time for the liquid crystal layer to rise and the response time for the liquid crystal to fall. For example, in Japanese Patent Application No. Hei 09-190837 (FIG. 4(b)), the reversal of the outputs with respect to the inputs of gray scale level, 11 and 12 occurs. Let us now consider this reversal, taking this case as an example. The numbers, 11 and 12, appear in the form of 00001011 and 00001100 in the binary system of 8 bits, respectively. The voltage waveforms for the last 4 digits (which correspond to the voltage modulation sections P0 to P3) take the forms as shown in the upper graphs of FIG. 44 (1) and (2). The transmittances of the liquid crystal layer respond to this voltage variation with retardation of a time constant, so that they take the response forms as shown in the lower graphs of the same.

It follows from this that for the case of 11 of FIG. 44(1), the output gray scale level, or the integrated value of the transmittance time in the single display period, is 11+2{(B)-(A)} and for the case of 12 of FIG. 44(2), it is 12+(B)-(A) , where (A) and (B) are hatched areas, respectively, which are calculated, taking the maximum value of the transmittance as 1 and taking the time interval of P0 as 1. If the response time for the rise and that for the fall are equal, then the area (A) and (B) will be substantially equal to each other and the output gray scale levels will be 11 and 12, respectively, so that the reversal of the gray scale will not occur. However, if the rise is swifter than the fall, then the area (A) comes to be smaller than (B), and as such may allow the reversal of the output gray scale to occur. For example, letting the area (A) be 0.5 and the area (B) be 2 leads to the following:

Input gray scale level of 11→Output gray scale level=11+2{(B)-(A)}=14;

Input gray scale level of 12→Output gray scale level=12+(B)-(A)=13.5,

from which it is understood that it is true that the reversal occur. In general, when the number of pulse peaks appearing in the voltage waveform (voltage level = a series of sections of 1) vary for each input gray scale level, the number of times of (A) and (B) appearing vary, so that the linearity of the gray scale deteriorates and, in some very extreme cases, the reversal of gray scale occurs, as mentioned above. In FIG. 4(b) of Japanese Patent Application No. Hei 09-190837, in addition to the example mentioned above, the reversal occurs at 23 (which appears in the form of 00010111 in the binary system) and 24 (00011000), or 27 (00011011) and 28 (00011100). Two peaks are formed at 23 and 27 and one peak is formed at 24 and 28. It can be understood from this that the reversal occurs thereat, as is the case with the above example.

On the other hand, in this embodiment, the voltage waveform has only one peak in any input gray scale level, except the gray scale level of zero, as seen from FIG. 43. Thus, in the response waveform of the transmittance, the retardation as shown by (A) and (B) occurs only once at any input gray scale level, so that the phenomenon that the number of times of occurrences of the retardation vary at adjoining input gray scale levels is not presented, except in the gray scale levels of 0 and 1. Hence, the reversal of gray scale never occurs.

As to the linearity, some improvement is provided but considerable improvement is not necessarily provided, as compared with the prior art. For example, when letting the area (A) be 0.5 and letting the area (B) be 2, as mentioned above, the output gray scale level is $y=x+(B)-(A)=x+1.5$ with respect to the input gray scale level x ($\geqq$1), so that an offset is always added (the output gray scale level is of course zero with respect to the input gray scale level of zero, and where (B) is smaller than (A), a negative offset is added).

However, this can be compensated easily, for example, by shifting the timing of resetting of the counter and the timing of writing to the second register from each other, by inserting a blank in the clock pulse for a while after the resetting of the counter or by inputting signals that are compensated for the offset at the state of inputting signals from the image input signal supply lines.

Alternatively, the comparator may have a capability of comparing a magnitude including an offset in such a manner as to output 1 when one signal is larger than the other signal by an extent larger than a certain value, rather than of simply comparing the magnitude. Or, the comparator may have a capability of outputting 1 when the indicated value of the counter is larger than the numeric value of the second register (reverse output pattern to those mentioned so far). In this case, 1 is output at the last half of the single display period. Accordingly, the offset can be compensated by varying the number of clock pulses in the single display period. The same effect can be produced by making the counter have a count down capability, instead of a count up capability.

Even when this compensation is made, it can practically consider that the time interval during which the liquid crystal layer is in ON is virtually generally proportional to the numeric value of the second register (i.e., the input gray scale level).

Further, as a practical matter, as long as the reversal of gray scale does not occur, even if some offset is added to the output gray scale, an unnatural image is not produced. Therefore, there is no need to consider this strictly.

In addition, it is required that when the comparator outputs zero, the liquid crystal layer is put into the darkness state. This requirement is intended for the improvement of the contrast, and the effect of the invention can be achieved even in the non-darkness state. It will then be unavoidable, however, that the output gray scale level will not be zero when the input gray scale level is zero and contrast will deteriorate.

(Seventh Embodiment)

This embodiment is so designed that the registers are reduced in number by one, as compared with the above-noted embodiment.

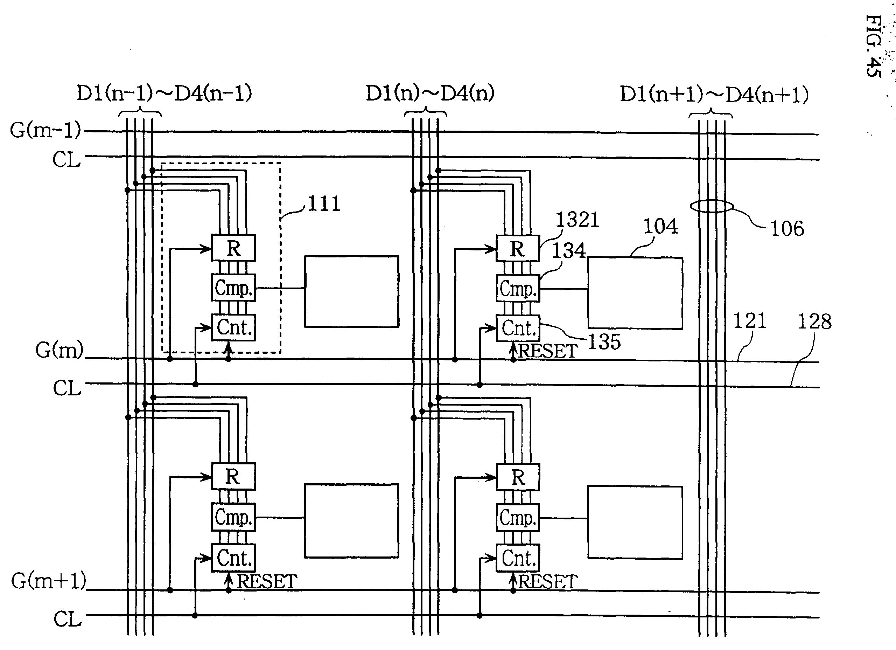

In the above-noted embodiment shown in FIG. 41, two registers are used for each pixel, for the purpose of harmonizing the display period over the entire screen. Only one register may be used for each pixel. Specifically, for example the circuit shown in FIG. 45 is conceivable. In this circuit, at the moment at which the lines are selected, the image input signals are written to the registers 1321 and at the same time the counters 135 are reset so that the count-up can begin at that moment. Differently from the circuit of FIG. 41, the starting points in the single display period vary for each line, but there is no difference in that the gray scale display can be performed for each pixel, as is the case with FIG. 41, and the substantially same effects can be obtained.

(Eighth Embodiment)

This embodiment is so designed that the counter are located at the outside of the display regions.

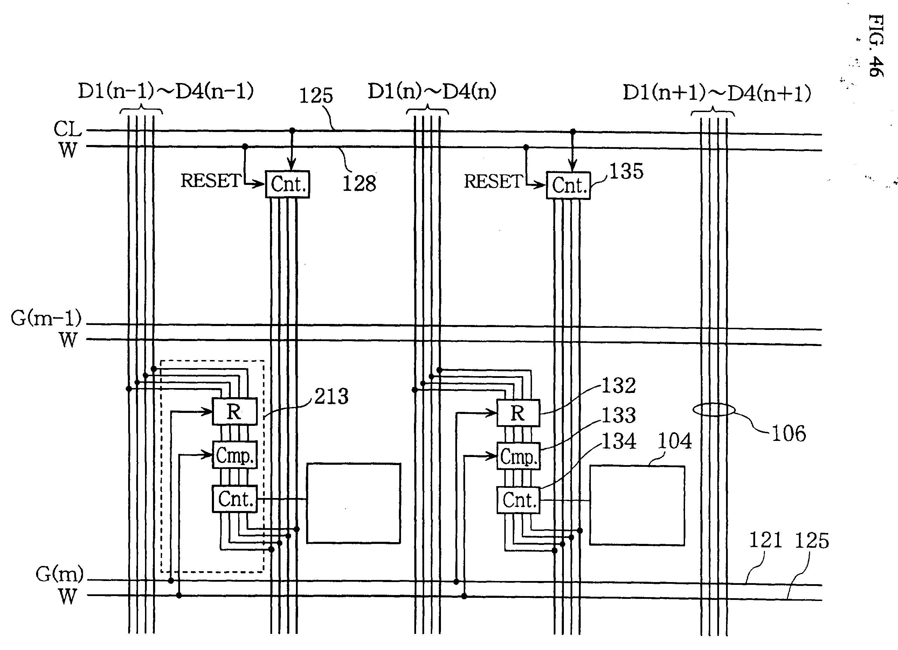

The image display device of this embodiment is identical in fundamental construction to the one shown in FIG. 40, but the pixel electrodes 104 formed on the transparent substrate and the display-controlling unit circuits 213 are constructed as shown in FIG. 46. As shown in the diagram, in the circuitry, the counters 135 are located at the outside of the display regions and the output signals are fed to the interiors of the display regions through wiring. In the display device shown in FIG. 41, the counter is disposed for every pixel and all the counters operate in phase. Due to this, the counters can be arranged with no inconvenience at the outside of the display regions, as shown in FIG. 46. This embodiment can also operate in the same manner and produce the exact same effects.

Further, with this construction, the circuit for use in the interior of each pixel can be cut with ease, which is of advantageous in terms of increase in miniature of the circuit.

(Ninth Embodiment)

This embodiment relates to an inversion of polarity of applied voltage to the liquid crystal layer. Accordingly, this embodiment has fundamentally the technical contents as mentioned in the aforesaid Example 2-1 (Description on the way of applying voltage to liquid crystal layer).

In this embodiment, two states, a zero transmittance state (darkness state = second optical state) and a 1 transmittance state (brightness state = first optical state), are used. To produce these states, the voltage of zero and the voltage of 1 are used (whose voltage values are just logic values that may be set to suitable values for the light modulation layer, such as 0→1V, 1→5V, etc.). As long as the optical states used are substantially two kinds, two or more kinds of voltages may be applied for their respective optical states. For example, the liquid crystal produces, in principle, the same optical state even when voltages of different polarity and identical magnitude are applied to the liquid crystal, with minor exception such as ferroelectric liquid crystal. Accordingly, it is conceivable to use, for example, two kinds of voltages of 5V and -5V for the brightness state = first optical state and two kinds of voltages of 1V and - 1V for the darkness state = second optical state. When the polarity is reversed for every display period in such a manner that two optical states can be produced by 5V and 1V in a display period and two optical states can be produced by -5V and - 1V in the next display period, the averaged (integrated) value of the voltage applied to the liquid crystal layer is substantially zero, so that the deterioration with time of the liquid crystal layer due to the charge-up can be suppressed.

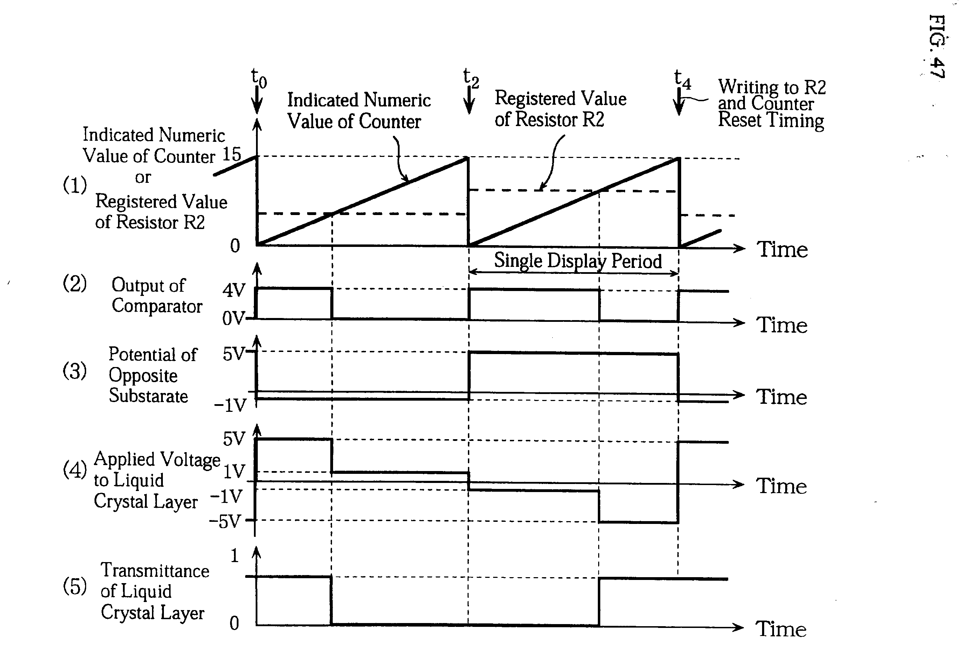

To realize this way of voltage application by use of the display control means, the display control means may be formed by a four-valued logic type circuit. However, even the conventional two-valued logic type circuit can realize it by controlling the potential of the opposite substrate in addition to the display-controlling unit circuit. This is illustrated with reference to FIG. 47.

This diagram is a waveform diagram of an example using the circuit shown in FIG. 4, 41 or 46 (an example of a 4-bits gray scale). Shown in FIG. 47(1) are an indicated numeric value of the counter and a numeric value of the register. Shown in FIG. 47(2) is an output of the comparator. These are the exact same as those of FIG. 42 (however, the output voltages are set to 0V and 4V with respect to the logic values, respectively). Shown in FIG. 47(3) is that the potential of the opposite substrate takes 5V and - 1V for each display period. In this case, the voltage applied to the liquid crystal layer is the difference between the output of the comparator and the potential of the opposite substrate, which is plotted as shown in FIG. 47(4). As seen from FIG. 47, in the first display period (the odd numbered display period, in general), the voltage takes 5V, first, and 1V on and after an indicated numeric value of the counter comes to match with the numeric value of the register. Then, in the second display period (the even numbered display period, in general), the voltage takes -1V, first, and -5V on and after the indicated numeric value of the counter comes to match with the numeric value of the register. The transmittance of the liquid crystal layer is plotted in correspondence with these voltage values, as shown in FIG. 47(5).

As seen from this, in the odd numbered display periods, the brightness state is presented in the initial stage thereof, and in the even numbered display periods, the brightness state is presented in the closing stage thereof. Thus, when the image input signals are reversed and input in the even numbered display periods {for example, 10 (1010 in the binary system) is input to the image input signal 5 (0101 in the binary system)}, the liquid crystal layer takes the brightness state only by the time corresponding to the image input signals, regardless of the even/odd numbered period, and as such can provide a desired gray scale display.

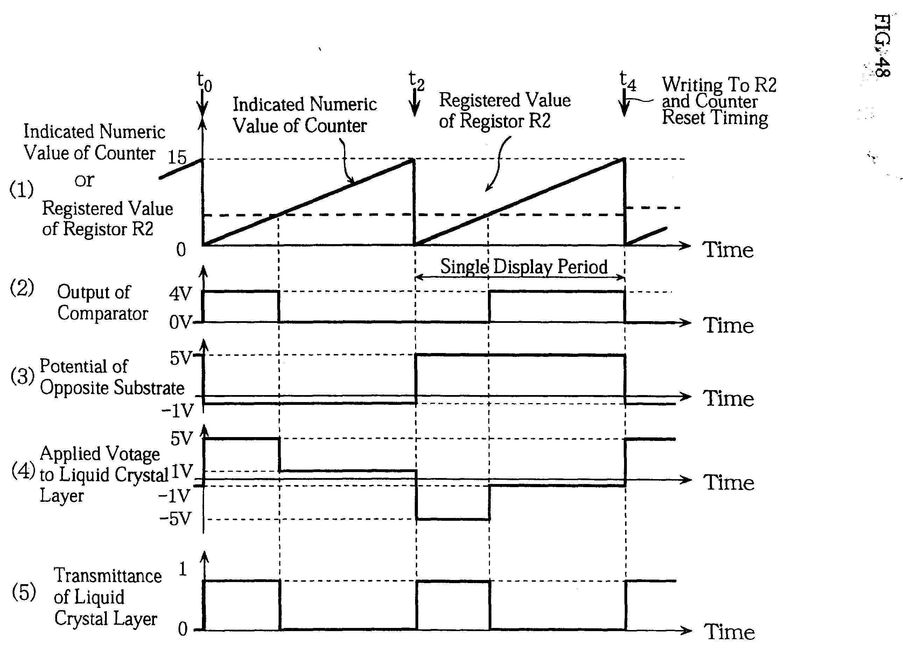

A further example is shown in FIG. 48. This example is the case where the output of the comparator is reversed for every display period in the circuit shown in FIG. 4, 41 or 46. In this case, the output of the comparator takes 1 at the initial stage of the odd numbered display period and takes 1 at the closing stage of the even numbered display period (FIG. 48(2)). When the potential of the opposite substrate is varied as is the case with FIG. 47 (FIG. 47(3)), the applied voltage to the liquid crystal layer and the transmittance are taken as shown in FIG. 47(4) and (5), and as such can still provide a desired gray scale display. These cases have the advantage that there is no need to reverse the image input signals, differently from the case of FIG. 47.

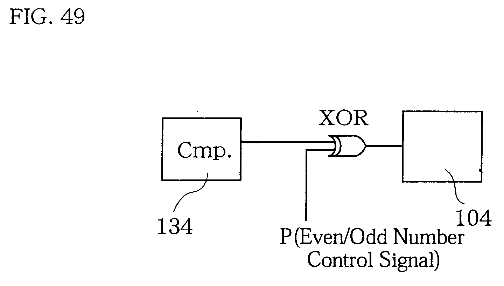

Further, in the case of FIG. 47, since the time during which the brightness state is kept within the single display period is biased toward the first half or the second half, apparent flicker is generated with ease. On the other hand, in the case of FIG. 48, such an offset is always in the first half of the single display period, this case has the advantage that the flicker is generated with difficulty (the same applies to the aforesaid case of FIG. 45). The methods of reversing the output of the comparator for every display period include, for example, the method shown in FIG. 49. In this method, a XOR (exclusive OR) gate is provided so that the output of the comparator 134 and the even/odd control signal P are input to it, and the output at that time is applied to the pixel electrode 104. When P=0 is input in the odd numbered display period and P=1 is input in the even numbered display period, the output of the comparator can be reversed and applied to the pixel electrodes in only the even numbered display periods, to provide a desired gray scale display. In this case, the voltage signal to be applied to the opposite electrodes and the even/odd control signal P will correspond to each other.

The two optical states of the liquid crystal layer are formed by using the varied transmittance. Other suitable means than varied transmittance may be used, including varied light polarization condition, varied polarizing direction, varied phase, varied frequency (including varied wavelength spectrum distribution), varied optical coherence, varied reflectance, varied diffraction efficiency and varied refraction index. Either the transparent type or the reflective type may be used as the image display device. In the case of using the reflective type one, it is conceivable that the circuit is incorporated for example in the Si substrate and the SOI substrate to form the pixel electrodes as the reflective pixel electrodes.

Also, the image display device may be provided with a phase difference compensating film, for improvement of a viewing angle. When the liquid crystals are driven on a binary basis, in particular, there are virtually provided only two stable alignment conditions of the liquid crystals, so it is only necessary to consider the phase difference compensating effect when an optimum retardation is designed

(Tenth Embodiment)

This embodiment relates to a method of producing method the image display device.

In general, when an image display device, such as a liquid crystal panel having a larger screen, is produced, the circuits formed of semiconductor elements using amorphous Si and polycrystal Si are often incorporated in a glass or quartz substrate. The semiconductors are not so large in mobility, so that it is difficult to form the display-controlling unit circuit comprising a complex circuit like that of the present invention in a limited pixel area.

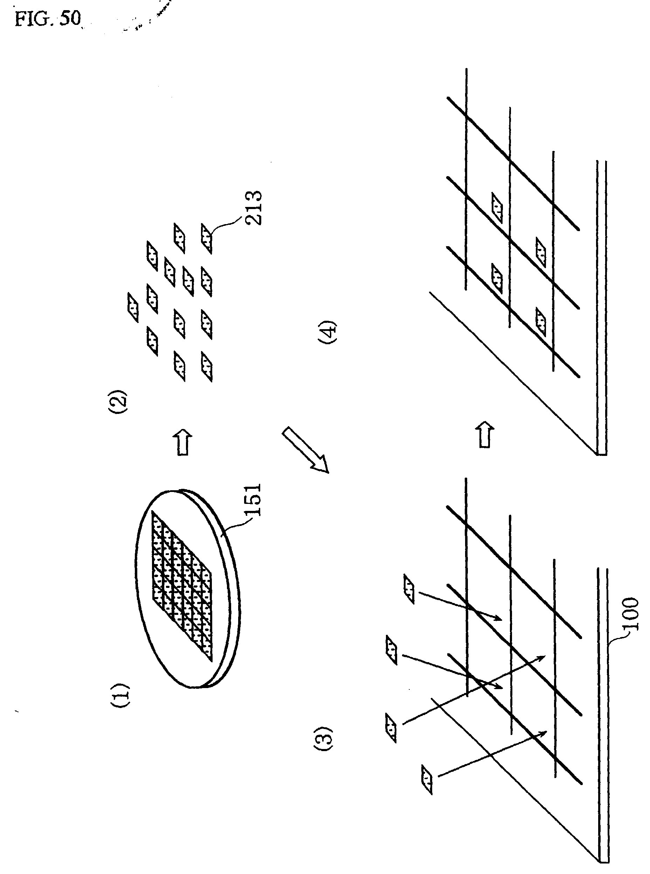

This embodiment is intended for solving this difficulty. As shown in FIG. 50, the producing method of this embodiment comprises the following steps:

(1) A large number of display-controlling unit circuits 213 are incorporated in a monocrystal Si semiconductor substrate 151, a SOS (silicon on sapphire) substrate, or a SOI (silicon on insulator) substrate in a common semiconductor element producing process. Any of these substrates is so large in mobility that the circuits complex in structure can be integrated to be formed in a limited area.

(2) These circuits are cut into separate display-controlling unit circuits 213. The cutting is not of restrictive. The circuits can be divided by another method that only a superficies portion of the substrate on which the circuits are formed is peeled by etching or equivalent and then is divided.

(3) The display-controlling unit circuits thus divided are bonded to a large separate substrate made of glass and the like (which corresponds to the transparent substrate 100 of FIG. 40) at necessary places thereof and with necessary orientations.

The bonding that may be used include an electrostatical bonding, a thermo compression bonding, an adhesion and an adhesive bonding.

(4) Required wiring is formed to thereby produce the substrate of the image display device having a large screen.

As to the wiring, before and after the display control circuits are formed, conductive material films are formed by CVD, evaporation, sputtering, and the like, followed by forming the wiring by photo lithography, etching and the like.

The substrate and the opposite substrate thus produced are bonded together to form a panel and then the liquid crystal is injected in between the substrates to thereby produce the image display device.

When partial pixels are formed, the procedures mentioned above are taken for every partial pixel.

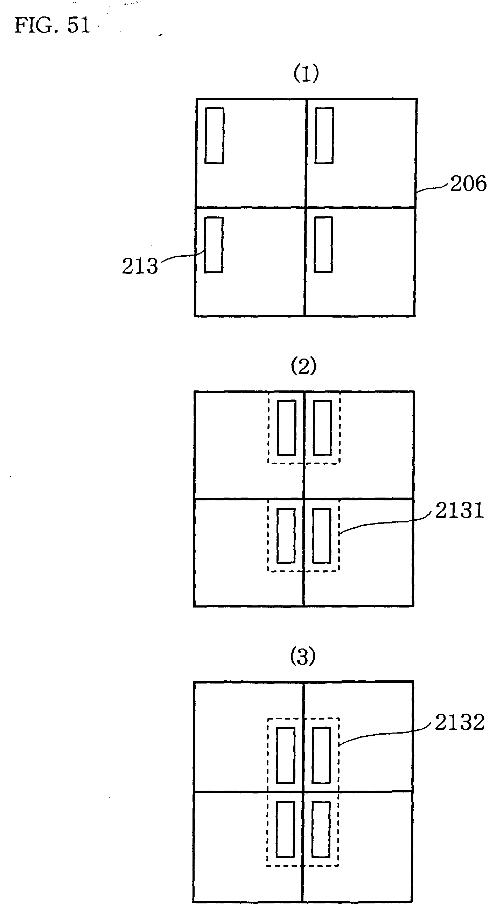

Further, as shown in FIG. 51, for example when the display control circuits for two pixels or four pixels are arranged in symmetry, the display control circuits for those pixels may be put together into one, for the production of them. Shown in the same diagram (1) is the case that one display-controlling unit circuit 213 is produced for each pixel 206. Shown in the same diagram (2) is the case that two adjoining display-controlling unit circuits 2131 are put together into one to be produced for every two adjoining pixels. Shown in the same diagram (3) is the case that four adjoining display-controlling unit circuits 2132 are put together into one to be produced for every four vertically and horizontally adjoining pixels.

(Other Embodiments and Examples)

While the present invention has been described so far with reference to several Embodiments and their related Examples, various modifications thereof may be made. In the following, those modifications will be roughly described.

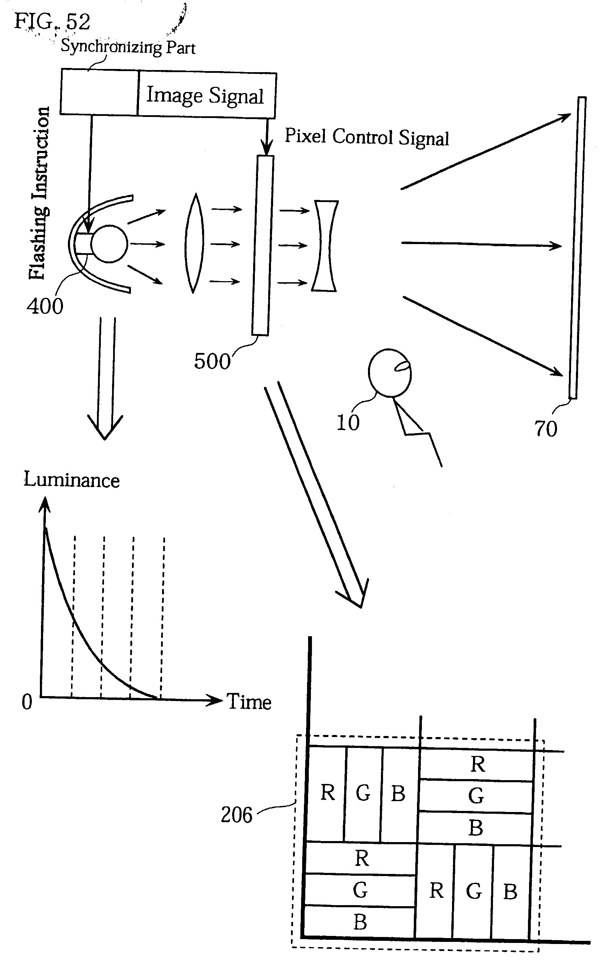

Illustrated in FIG. 52 is an arrangement for an image to be zoomed and displayed on the screen. In this arrangement, the light source 400 used as the batch modulation means flashes on and off for each display period, as is the case with that shown in FIG. 12 and is exponentially attenuated. The liquid crystal layer used as the two-dimensional light modulation means 500 can play a part as a film and the each pixel is divided into 12 partial pixels as shown in the same diagram and those small pixels, which are divided in groups of four, display red (R), green (G) and blue (B). The transmittance of the liquid crystal layer varies in four stages, e.g. 100% transmission, 67% transmission, 33% transmission and closed, with respect to the colored light corresponding in groups of four for every elementary color. This enables the pictorial image and projected image to be displayed with 64 gray scales when combined with the 4 stages of the light source. It is to be noted that a concave lens and a convex lens in the diagram are just conceptually illustrated as light diffusing means and parallel light rays producing means, which may actually be even more complex systems.

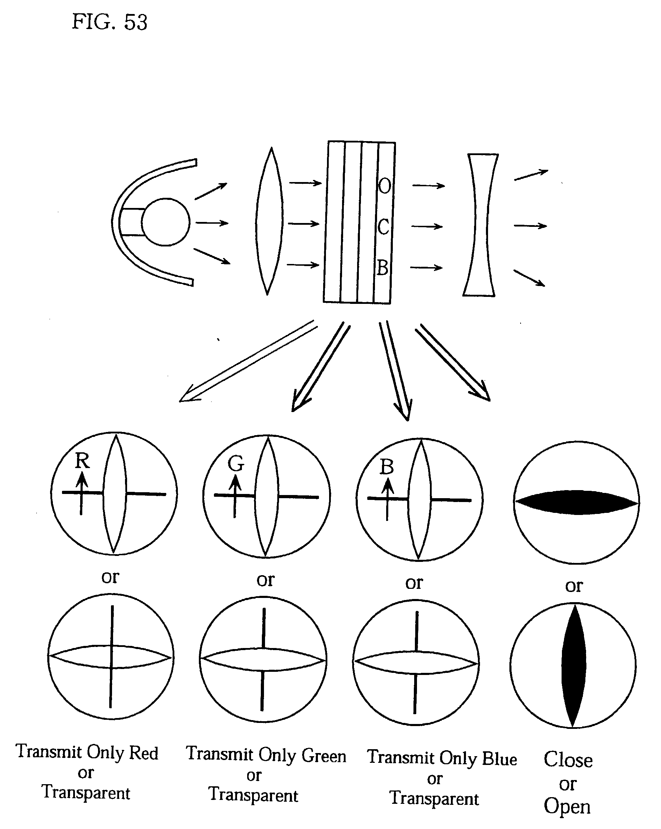

Illustrated in FIG. 53 is an arrangement in which four liquid crystal filters in total (i.e., three liquid-crystal-made filters in total that can allow either each colored light of red, green or blue light or every light to transmit and one liquid crystal filter that serves as a switch to open and close in several stages) are stacked and also the single display period is divided into several unit sections and further is time-shared for each elementary color so that the gray scale display can be provided for each color.

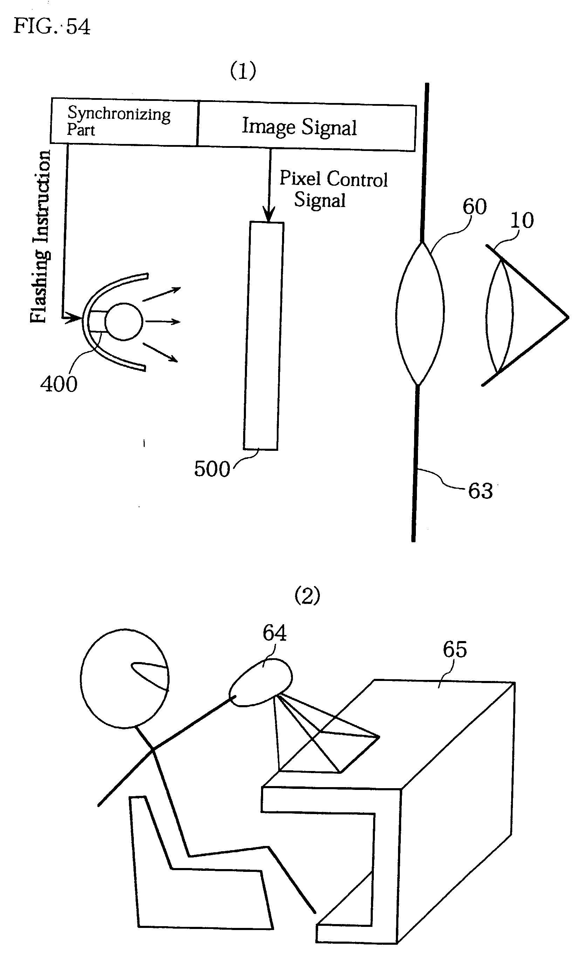

Shown in FIG. 54(1) is a portable device in which a display part is arranged and is so designed that a user can look an image through a lens 60. Shown in FIG. 54(2) is the variant which is so designed that the image can be projected on a white wall or paper near the user. In the diagram, 63 designates an outside wall, 64 designates the portable device and 65 designates a flat surface serving as the screen.

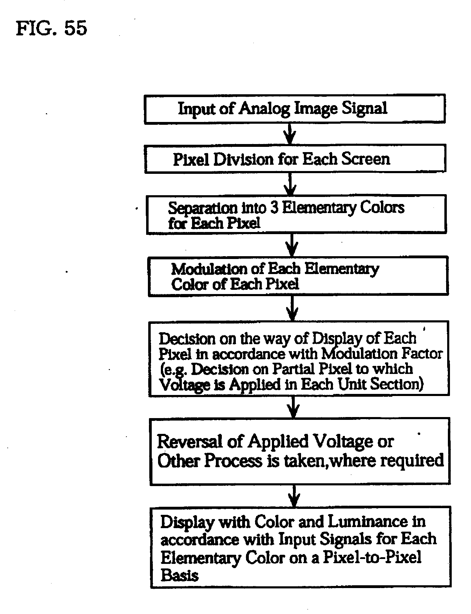

Shown in FIG. 55 is the outline of the process steps for accurately converting an analog image into a digital gray scale in the color and luminance related to the display for every pixel, for display of the digital image. The processes shown in the diagram is just the outline. The second process step from above and the third process step may be reversed, so that the analog image signals are divided into three elemental color signals for each screen and then the three elemental color signals are divided for each screen. Likewise, the third process step and the fourth processing step may of course be reversed.

While the present invention has been described so far with reference to several embodiments, examples, variants thereof, application thereof, referring to the accompanying drawings and tables, it is needless to say that the present invention is not limited thereto. For example, the present invention may be designed as follows:

(1) For displays on a building wall in a public gathering place, a plurality of light batch modulating means and two-dimensional light modulation means are physically used, for the manufacturing convenience and the like.

(2) In the above-noted (1) case, in particular, the light batch modulating means and the two-dimensional light modulation means are further arranged in two or more levels for a higher gray scale display.

(3) While active elements of the array substrate on which the liquid crystal display elements are formed are fundamentally made of polycrystal silicon, the substrate used may be made of quartz and the heat treatment temperature is set at about 800°C so that excellent response can be produced.

(4) Differently from CRT, when the hold-type display element such as liquid crystal is used, the deterioration of sharpness of the image due to the integration effect may occur in the moving image. As a measurement to meet this situation, it is effective to insert a black display interval between the images. Incidentally, in the gray scale display of the present invention, it is not so often to display an actual image with the gray scale of 100, so parts contributing to the high gray scale display (brightness parts), e.g. $I_5$-$I_7$ in FIG. 13, are arranged at the beginning parts of the respective display periods.

This is also intended to provide an extension of the black display interval (duration) to the maximum.

(5) The degree of gray scale is designed to vary in correspondence with locations in the screen. In general, the degree of gray scale is set to be large in a center part of the display screen and the degree of gray scale in a part drifting due to a case is designed to increase. The drifting part is recognized by using a proper technique diverting from the techniques of MPEG.

(6) The term of "matrix-like" array (of pixels) and a like term are intended to include a delta array, a stripe array and other arrays such as the array as shown in FIG. 52. Accordingly, the terms of "vertical direction" and "horizontal direction" of the signal wires are intended to include any directions corresponding to these pixel arrays.

(7) The switch is not designed to open and close but is designed to allow either only a specific colored light or all lights to transmit.

(8) The liquid crystal element is of a horizontal electric field system.

(9) The manufacturing of the bistable element, the comparator, etc. and the forming of the related wiring on the substrate may be made by any suitable method, such as the photo lithography, the etching and the like.

(10) Though depending on the contents of the invention, the uses of the liquid crystal display device are not limited to any specific one, such as reflective one, transparent one and combination thereof.

(11) Though depending on the types of the liquid crystal display device, the color filter that can only allow a specific color to transmit but allow other color to be reflected may be used.

(Effect of the Invention)

As seen from the foregoing, according to the present invention, the stable display having good linearity of the γ characteristics and showing good stability even in the high degree of gray scale can be obtained even in the display device using a display element, such as an element using liquid crystal in particular, that cannot necessarily hold the linearity of the γ characteristics in the low start signal range, and as such can provide an image of good gray scale reproducibility, color reproducibility and uniformity which are strictly requested by the user in recent years. In addition, the effect of being stable with time and being resistant to temperature change can be obtained.

Also, an excellent display having no flicker, no reversal of gray scale and no charging can be obtained, without any limitation to the digital gray scale display of image.

Also, since semiconductor elements comprising large particles and having good response are manufactured for a time, the display device having good display characteristics can be manufactured.

**Claims**

1. A display device comprising:

   light batch modulating means for modulating en bloc luminance, color, and their related optical states of a bundle of rays for a display surface within a single display period of each image in prescribed process steps; and two-dimensional light modulation means for separately modulating luminance, color and their related optical states of the bundle of rays on a pixel-to-pixel basis for the bundle of rays as modulated en bloc by the light batch modulating means.

2. The display device according to Claim 1, wherein the light batch modulating means is an isochronal variation type light batch modulating means which is equal in time variation of light modulation factor in the single display period for each display period.

3. The display device according to Claim 2, wherein the single display period has a plurality of unit sections as components; and wherein the two-dimensional light modulation means is a light modulation selecting type two-dimensional light modulation means for selecting one modulation of optical state in the single display period from a plurality of light modulation factors (unit light modulation factor waveforms) belonging in its related unit section in every unit section.

4. The display device according to Claim 3, wherein when the number of unit sections are taken as N (N is an integer of 2 or more), the unit sections are each expressed by $I_k$ (k is an integer that satisfies $0 \leqq k \leqq N-1$), the number of the light modulation factor waveforms belonging in the unit sections $I_k$ for k are expressed by $M_k$ ($M_k$ is an integer of 2 or more), and light output energies for the unit light modulation factor waveforms are numbered in the ascending sequence as $E_k(0)$, $E_k(1)$, ..., $E_k(M_k-1)$ in the unit secton $I_k$,

   the relation of Equation 2 is satisfied with respect to k=0, 1 .... N-2 and $E_k(0)$ is zero:

   【Equation 2】

   $$[\{E_{k+1}(M_{k+1}-1)\}/(M_{k+1}-1)]/[\{E_k(M_k-1)\}/(M_k-1)]=M_k$$

   $$(k=0, 1, \cdots, N-2)$$

5. The display device according to Claim 4, wherein the light output energies $E_k(m_k)$ ($0 \leqq m_k \leqq M_k-1$) for the unit light modulation factor waveforms belonging in the unit section $I_k$ is proportional as $m_k$.

6. The display device according to Claim 5, wherein the N number of unit sections $I_k$ are all uniform in time interval and also any sets of unit light modulation factor waveforms belonging to the each unit section $I_k$ are equal.

7. The display device according to Claim 6, wherein the number $M_k$ of the unit light modulation factor waveforms is 2 in every unit section $I_k$.

8. The display device according to Claim 7, wherein the light batch modulating means and the two-dimensional light modulation means are both for modulating intensity of light in the form of modulation of optical state.

9. The display device according to Claim 8, wherein the light modulation factors of the light batch modulating means are constant in the unit sections $I_k$ and the absolute value is in proportion to or in inverse proportion to $2^k$.

10. The display device according to Claim 8, wherein the unit sections $I_k$ are arranged in temporal descending order within the single display period; the light modulation by the light batch modulating means is exponentially attenuated in the single display period; and the light modulation made by multiplying a time constant of the attenuation by

## EP 1 091 342 A2

$\ell$ n 2 is equal to an interval of the unit section.

**11.** The display device according to Claim 8, wherein the unit sections $I_k$ are arranged in temporal ascending order within the single display period; the light modulation by the light batch modulating means is exponentially increased in the single display period; and the light modulation made by multiplying a time constant of the increase by $\ell$ n 2 is equal to an interval of the unit section.

**12.** The display device according to Claim 8, wherein the light modulation factor of the light batch modulating means is either zero or a fixed value in the each unit section $I_k$, and the time during which the fixed value is taken in the unit section $I_k$ is in proportion as $2^k$ and wherein the light modulation factor of the two-dimensional light modulation means is a predetermined fixed value during the time during which the light modulation factor of the light batch modulating means takes the fixed value in the each unit section $I_k$.

**13.** The display device according to Claim 8, wherein the light modulation factor of the light batch modulating means uses a pulse waveform as a base unit, the number of pulses is either a value varied in the unit section $I_k$ or zero, and the number of pulse waveforms included in the unit section $I_k$ are in proportion as $2^k$; and wherein the light modulation factor of the two-dimensional light modulation means is a predetermined fixed value during the time during which the light modulation factor of the light batch modulating means is varied in accordance with the number of pulses in the each unit section $I_k$.

**14.** The display device according to Claim 5, wherein the N number of unit sections $I_k$ comprise the $N_1$ number of unit sections of a first kind ($N_1$ is any integer that satisfies $1 \leqq N_1 \leqq N-1$) whose time intervals are proportional to $2^k$ and the $(N- N_1)$ number of unit sections of a second kind which are all equal in the time intervals;

wherein the light batch modulating means and the two-dimensional light modulation means are both for varying intensity of light as light modulation;

wherein the light batch modulating means are constant in the light modulation factor in the unit sections $I_k$ of the first kind (k=N-N1, N-N1+1, ... , N-1) and the number of unit light modulation factor waveforms Mk=2; and

wherein the light modulation factor of the light batch modulating means is temporally varied in the unit sections of the second kind and the set of unit light modulation factor waveforms are equal in any unit sections.

**15.** A display device comprising:

light batch modulating means for modulating en bloc luminance, color, and their related optical states of a bundle of rays for a display surface within a single display period of an image; and

two-dimensional light modulation means for separately modulating luminance, color and their related optical states of the bundle of rays for each pixel,

wherein the light batch modulating means is a light emission source control type light batch modulating means for controlling a light emission condition of a light source within the single display period of the image in prescribed process steps, and

wherein the two-dimensional light modulation means is a passive type light modulation means for controlling transmission, spattering, reflection, etc. of the light emitted from the light batch modulating means on a pixel-to-pixel basis.

**16.** The display device according to Claim 15, wherein the light emission source of the light batch modulating means is any one of a light emitting diode, a laser and an electro-luminescence light element.

**17.** The display device according to Claim 16, wherein the light batch modulating means has a circuit for electrically controlling luminance of the light emission source.

**18.** The display device according to Claim 15, wherein the two-dimensional light modulation means as the passive type light modulation means has a liquid crystal layer existing between two substrates.

**19.** The display device according to Claim 16, wherein the two-dimensional light modulation means as the passive type light modulation means has a liquid crystal layer existing between two substrates.

**20.** The display device according to Claim 17, wherein the two-dimensional light modulation means as the passive type light modulation means has a liquid crystal layer existing between two substrates.

**21.** The display device according to Claim 18, wherein the liquid crystal layer comprises liquid crystals having no spontaneous polarization or liquid crystals having the same as a main component.

**22.** The display device according to Claim 19, wherein the liquid crystal layer comprises liquid crystals having no spontaneous polarization or liquid crystals having the same as a main component.

**23.** The display device according to Claim 20, wherein the liquid crystal layer comprises liquid crystals having no spontaneous polarization or liquid crystals having the same as a main component.

**24.** The display device according to Claim 21, wherein the liquid crystal layer comprises liquid crystals showing nematic phase or liquid crystals having the same as a main component.

**25.** The display device according to Claim 22, wherein the liquid crystal layer comprises liquid crystals showing nematic phase or liquid crystals having the same as a main component.

**26.** The display device according to Claim 23, wherein the liquid crystal layer comprises liquid crystals showing nematic phase or liquid crystals having the same as a main component.

**27.** The display device according to Claim 24, wherein the liquid crystal layer comprises vertically aligned liquid crystals.

**28.** The display device according to Claim 25, wherein the liquid crystal layer comprises vertically aligned liquid crystals.

**29.** The display device according to Claim 26, wherein the liquid crystal layer comprises vertically aligned liquid crystals.

**30.** The display device according to Claim 27, wherein the liquid crystal layer has a thickness of 2μm or less.

**31.** The display device according to Claim 28, wherein the liquid crystal layer has a thickness of 2μm or less.

**32.** The display device according to Claim 29, wherein the liquid crystal layer has a thickness of 2μm or less.

**33.** The display device according to Claim 15, wherein the passive type light modulation means as the two-dimensional light modulation means comprises a first substrate, a second substrate and a liquid crystal layer between the substrates,

the first substrate having transparent electrodes on the side thereof confronting the liquid crystal layer,
the second substrate having, on the side thereof confronting the liquid crystal layer, a light reflection type pixel electrode portion which is formed into a matrix-like form and an electric circuit portion for controlling voltage applied to the light reflective type pixel electrodes,
the liquid crystal layer being for modulating a bundle of rays, which are incident from the first substrate side, are reflected by the light reflection type pixel electrodes formed on the second substrate, transmit again through the liquid crystal layer and pass out through the first substrate, in accordance with application of voltage to the electrodes on the both substrates by the electric circuit portion.

**34.** The display device according to Claim 33, wherein the electric circuit portion comprises:

pixel switching elements arranged in correspondence with the light reflection type pixel electrodes arranged in the matrix form;
scanning lines wired in a row direction of the matrix in correspondence with the pixel switching elements; and signal wires wired in a column direction of the same matrix,
wherein the pixel switching elements are elements to open and close electrical connection between the reflection type pixel electrodes and the related signal wires in accordance with the voltage applied to the related scanning lines, so that in the open state, the voltage of the reflection type pixel electrodes is charged by the voltage of the signal wires, while in the close state, the reflection type pixel electrodes are electrically isolated and the applied voltage to the liquid crystal layer is held by electric charge accumulated in the reflection type pixel electrodes.

**35.** The display device according to Claim 33, wherein the electric circuit portion comprises:

pixel switching elements and bistable elements, arranged in correspondence with the light reflection type pixel electrodes arranged in the matrix form;

scanning lines wired in a row direction of the matrix in correspondence with the pixel switching elements; and signal wires wired in a column direction of the same matrix,

wherein the pixel switching elements are elements to open and close the electrical connection with the signal wires corresponding to the bistable elements in accordance with the voltage applied to the related scanning lines; and

wherein the bistable elements are transited to one of two stable states in accordance with a voltage of the signal wires during the time during which the bistable elements are electrically connected with the signal wires, while the bistable elements keep the other stable state during which they are not electrically connected therewith, whereby the voltage of the light reflection type pixel electrodes electrically connected is set to a value varied in accordance with the two stable states.

**36.** The display device according to Claim 33, wherein the electric circuit portion comprises:

pixel switching elements, memory circuits and liquid crystal writing switching elements, arranged in correspondence with the light reflection type pixel electrodes arranged in the matrix form;

scanning lines wired in a row direction of the matrix in correspondence with the pixel switching elements; and signal wires wired in a column direction of the same matrix,

wherein the pixel switching elements are elements to open and close the electrical connection with the signal wires corresponding to the memory circuits in accordance with the voltage applied to the related scanning lines,

wherein an output voltage of the memory circuits is charged to a predetermined voltage corresponding to the voltage of the signal wires during the time during which the memory circuits are electrically connected with the signal wires by the pixel switching elements, while the output voltage is held during the time during which the memory circuits are not electrically connected therewith,

wherein the liquid crystal writing switching elements are elements to open and close the electrical connection between the output of the memory circuits and the reflection type pixel electrodes for all pixels by one operation, and

wherein the voltage of the light reflection type pixel electrodes is charged to a voltage corresponding to an output voltage of the memory circuits during the time during which the reflection type pixel electrodes and the output of the memory circuits are electrically connected via the liquid crystal writing switching elements and the reflection type pixel electrodes are electrically isolated during the time during which they are not electrically connected, whereby the voltage applied to the liquid crystal layer is held by the electric charges accumulated in the reflection type pixel electrodes during that time.

**37.** The display device according to Claim 33, wherein the electric circuit portion comprises:

pixel switching elements, memory circuits, liquid crystal writing switching elements and bistable elements, arranged in correspondence with the reflection type pixel electrodes arranged in the matrix form;

scanning lines wired in a row direction of the matrix in correspondence with the pixel switching elements; and signal wires wired in a column direction of the same matrix,

wherein the pixel switching elements are elements to open and close the electrical connection with the signal wires corresponding to the memory circuits in accordance with the voltage applied to the related scanning lines,

wherein an output voltage of the memory circuits is charged to a voltage corresponding to the voltage of the signal wires during the time during which the memory circuits are electrically connected with the signal wires via the pixel switching elements, while the output voltage is held during the time during which the memory circuits are not electrically connected therewith,

wherein the liquid crystal writing switching elements are elements to open and close the electrically connection between the output of the memory circuits and the bistable elements for all pixels by one operation, and

wherein the bistable elements are transited to one of two stable states in accordance with an output voltage of the memory circuits during the time during which the bistable elements are electrically connected with the output of the memory circuits via the liquid crystal writing switching elements, while the bistable elements hold the other stable state during which they are not electrically connected therewith, whereby the voltage of the light reflection type pixel electrodes electrically connected is set to a value varied in accordance with the two stable states.

38. The display device according to Claim 15, wherein the passive type light modulation means is an element having moving micro mirror surfaces, arrayed in the matrix form, for separately modulating an optical state for each pixel.

39. A display device comprising:

light batch modulating means for modulating en bloc luminance, color, and their related optical states of a bundle of rays for a display surface within a single display period of an image in prescribed process steps; and
two-dimensional light modulation means for separately modulating luminance, color and their related optical states of the bundle of rays for each pixel, while referring to the contents of the image,
wherein the light batch modulating means is a light source emitted light control type light batch modulating means for controlling an optical state of the light emitted from a light source within the single display period of the image, and
wherein the two-dimensional light modulation means is a passive type light modulation means for further controlling transmission, spattering, reflection, etc. of the light as emitted from the light batch modulating means and controlled.

40. The display device according to Claim 39, wherein the light batch modulating means is a light batch varying means using a rotary member which is rotatable around its axis at an interval equal to or an interval integral multiplies of the single display period and has windows, arrayed along the rotation direction, for modulating the optical state of the light from the light source.

41. The display device according to Claim 40, wherein the light batch varying means is a rotary member with three elementary color modulating windows which has a group of windows of three kinds for allowing any one of components of light of red, green and blue, from the light emission source to pass through them, the group of windows further having small windows which are different in transmittance of the component of light under a prescribed rule and are arrayed along the rotation direction.

42. The display device according to Claim 39, wherein the light batch modulating means has an optical shutter.

43. The display device according to Claim 42, wherein the optical shutter is a liquid crystal element using ferroelectric liquid crystal or antiferroelectric liquid crystal.

44. A display device comprising:

light batch modulating means for modulating en bloc luminance, color, and their related optical states of a bundle of rays for a display surface within a single display period of an image; and
two-dimensional light modulation means for separately modulating the luminance, color and their related optical states of the bundle of rays for each pixel,
wherein the two-dimensional light modulation means has a spontaneous light emission type display element which emits light of given luminance, color, etc. by itself, and
wherein the light batch modulating means is a passive control means for further controlling optical states related to luminance and color of the light from the spontaneous light emission type display element by use of transmission, spattering, reflection, etc. of the light within the single display period of an image.

45. The display device according to Claim 44, wherein the spontaneous light emission type display element is any one of an electro-luminescence element, a plasma display panel, a field emission type display, and a cathode ray tube.

46. The display device according to Claim 44 or 45, wherein the light batch modulating means is a rotary member to provide the passive control, which member is rotatable around a given axis at an interval equal to or an interval integral multiplies of the single display period of the image and has light transmitting windows and reflecting mirrors arrayed along the rotation direction, the windows and mirrors being different in shape and size, so that when transmitting therethrough and reflecting thereon, the light from light emission source is adjusted to vary luminance, color and the related optical states.

47. The display device according to Claim 44 or 45, wherein the light batch modulating means has an optical shutter.

**48.** A display device comprising:

light batch modulating means for controlling a condition of a light source or light emitted from the light source within a single display period comprising a plurality of unit sections of an image, to modulate en bloc luminance, color and their related optical states of a bundle of rays for a display surface; and
passive two-dimensional light modulating means having between two substrates a liquid crystal layer showing nematic phase, the passive two-dimensional light modulating means controlling the liquid crystal layer to select one of a plurality of unit light modulation factor waveforms belonging in each of the unit sections forming the single display period, whereby luminance, color and their related optical states of the bundle of rays within the single display period are separately modulated on a pixel-to-pixel basis.

**49.** A display device, wherein a single display period of an image comprises N unit sections (N is an integer of 2 or more) which are all in equal in time interval, and any set of waveforms of modulation factor of light (unit light modulation factor waveforms) belonging in each unit section $I_k$ (k is an integer that satisfies $0 \leqq k \leqq N-1$) satisfy the relation of the following Equation 3 with respect to k=0, 1, .... N-2 and $E_k(0)$ is zero,

〖Equation 3〗

$$\{E_{k+1}(1)\} / E_k(1) = 1 / 2$$

where $E_k(0)$ represents a small light output energy and $E_k(1)$ represents a large light output energy of the light output energies for each unit light modulation factor waveform,

the display device further comprising:
light batch modulating means for controlling a condition of a light source or light emitted from the light source within the single display period of the image, to modulate en bloc luminance, color and their related optical states of a bundle of rays for a display surface; and
two-dimensional light modulating means having between substrates a liquid crystal layer showing nematic phase and a normally-off type voltage-transmittance (or reflectance) response, the two-dimensional light modulating means controlling transmission or reflection of light on the liquid crystal element, to select one from a sets of two unit light modulation factor waveforms belonging in a related unit section in the unit sections, whereby luminance, color and their related optical states of the bundle of rays are separately modulated for each pixel, wherein an absolute value of the voltage applied to the liquid crystal layer to achieve the unit light modulation factor waveform corresponding to the small light output energy, of the unit light modulation factor waveforms is not more than a switching threshold voltage of the liquid crystal layer.

**50.** The display device according to Claim 49, wherein an absolute value of the voltage applied to the liquid crystal layer to achieve the unit light modulation factor waveform corresponding to the large light output energy is not less than a minimum modulation voltage.

**51.** A display device, wherein a single display period of an image comprises N unit sections (N is an integer of 2 or more) which are all in equal in time interval, and any set of waveforms of modulation factor of light (unit light modulation factor waveforms) belonging in each unit section $I_k$ (k is an integer that satisfies $0 \leqq k \leqq N-1$) satisfy the relation of the following Equation 3 with respect to k=0, 1, .... N-2 and $E_k(0)$ is zero,

〖Equation 3〗

$$\{E_{k+1}(1)\} / E_k(1) = 1 / 2$$

where $E_k(0)$ represents a small light output energy and $E_k(1)$ represents a large light output energy of the light output energies for each unit light modulation factor waveform,

the display device further comprising:

light batch modulating means for controlling a condition of a light source or light emitted from the light source within the single display period of the image, to modulate en bloc luminance, color and their related optical states of a bundle of rays for a display surface; and

two-dimensional light modulating means having between substrates a liquid crystal layer showing nematic phase and a normally-on type voltage-transmittance (or reflectance) response, the two-dimensional light modulating means controlling transmission or reflection of light on the liquid crystal element to select one from a sets of two unit light modulation factor waveforms belonging in a related unit section in the unit sections, whereby luminance, color and their related optical states of the bundle of rays are separately modulated for each pixel, wherein an absolute value of the voltage applied to the liquid crystal layer to achieve the unit light modulation factor waveform corresponding to the large light output energy, of the unit light modulation factor waveforms is not more than a switching threshold voltage of the liquid crystal layer.

52. The display device according to Claim 51, wherein an absolute value of the voltage applied to the liquid crystal layer to achieve the unit light modulation factor waveform corresponding to the small light output energy is not less than a minimum modulation voltage.

53. The display device according to any one of Claims 49 through 52, wherein the voltage applied to the liquid crystal layer reverses at specified display periods or specified unit sections.

54. The display device according to Claims 53, wherein the reversal of voltage applied to the liquid crystal layer is a reversal of electric potential across the substrates.

55. A display device comprising:

light batch modulating means for controlling a condition of a light source within the single display period of the image to modulate en bloc luminance, color and their related optical states of a bundle of rays for a display surface;

two-dimensional light modulation means for performing separate modulation for each pixel by use of a passive type light modulation element for controlling luminance, color and their related optical states of the bundle of rays by using transmission, spattering, reflection, etc.; and

an optical magnifying means for magnifying an image formed by the bundle of rays after passed through the two-dimensional light modulation means so that an observer can observe the image under magnification.

56. The display device according to Claims 55, wherein the optical magnifying means is a convex lens, and the display device is a micro display.

57. The display device according to Claims 55, wherein the optical magnifying means is a projection type magnifying means haivng a lens system and a screen, and the display device is a projection type display device.

58. A display device comprising:

light batch modulating means for modulating en bloc luminance, color, and their related optical states of a bundle of rays for a display surface within a single display period of an image;

two-dimensional light modulation means for separately modulating the luminance, color and their related optical states of the bundle of rays for each pixel; and

control means for controlling both the light batch modulating means and the two-dimensional light modulation means, for gradation display of the image.

59. The display device according to Claims 58, wherein the light batch modulating means and the two-dimensional light modulation means each have a display element using liquid crystal.

60. A method for driving a display device comprising light batch modulating means for modulating en bloc luminance, color, and their related optical states of a bundle of rays for a display surface within a single display period of an image; and two-dimensional light modulation means for separately modulating the luminance, color and their related optical states of the bundle of rays for each pixel,

the method comprising a two stage control process in which both the light batch modulating means and the two-dimensional light modulation means are controlled to provide a gradation display.

**61.** A display device wherein specified voltage waveforms related to gradation display such as luminance and color are applied to pixels having a light modulation layer and arrayed on a display surface, in accordance with image signals,

each pixel comprising a plurality of partial pixels to which voltages of predetermined waveforms are separately applied at voltage modulation terms forming the single display period,

the display device further comprising partial-pixel-related, applied voltage waveform determining means for selectively determining from predetermined waveforms (unit voltage waveforms) a voltage applied to each partial pixel in each voltage modulating term in each display period in correspondence with degree of gray scale, such as luminance and color, of the image signals; and

partial-pixel-related, applying means for selecting one unit voltage waveform from a plurality of unit voltage waveforms belonging in the voltage modulation terms of the display period on a partial-pixel-to-partial-pixel basis under the determination of the partial-pixel-related, applied voltage waveform determining means, for applying the one unit voltage waveform to the each partial pixel.

**62.** The display device according to Claims 61, wherein the unit voltage waveform is a rectangular pulse of a constant voltage in the voltage modulation terms to which it belongs.

**63.** The display device according to Claim 61 or 62, wherein the pixel is a polarity consideration type pixel with four unit voltage waveforms in each voltage modulation term, the voltages of the first and third unit voltage waveforms being revere in polarity to each other, the voltages of the second and fourth unit voltage waveforms being also revere in polarity to each other, an absolute value of the voltage of the first unit voltage waveform being larger than an absolute value of the voltage of the second unit voltage waveform, and an absolute value of the voltage of the third unit voltage waveform being larger than an absolute value of the voltage of the fourth unit voltage waveform, and

wherein the partial-pixel-related, applying means has polarity selecting means for selecting either of the first and second unit voltage waveforms in accordance with image input signals for each of the voltage modulation terms in odd numbered display periods and selecting either of the third and fourth unit voltage waveforms in accordance with the image input signals for each of the voltage modulation terms in even numbered display periods, when the unit voltage waveforms thus selected are applied.

**64.** The display device according to Claim 63, wherein the pixel is a symmetric pixel in which an optical state of a light modulation layer provided when the first unit voltage waveform is applied and the an optical state of the light modulation layer provided when the second unit voltage waveform is applied are identical to each other and an optical state of the light modulation layer provided when the second unit voltage waveform is applied and the an optical state of the light modulation layer provided when the fourth unit voltage waveform is applied are identical to each other.

**65.** The display device according to Claim 64, wherein the single display period has the M number of voltage modulation terms and further the intervals of the M number of voltage modulation terms form a geometric progression of a common ratio of 1/2.

**66.** The display device according to Claim 65, wherein the partial-pixel-related, applying means includes a subordinate special voltage waveform generating means for generating $V_j$

where luminance of the image signals has $2^M$ gray scales, $S_0, S_1, ... , S_2{}^M{}_{-1}$, in the ascending order; the M number of voltage modulation terms are numbered as $P_0, P_1, ..., P_{M-1}$, in the ascending order of interval; and the voltage waveforms is expressed by $V_j$ which are so formed that when with respect to the gray scale j=0, 1, ... , $2^M$-1, a value of a k-th digit ($2^k$) of the j appearing in the binary system is 1, the unit voltage waveforms in the voltage modulation terms $P_k$ (k=0, 1, ... , M-1) in the single display period are taken as the first unit voltage waveform or the third unit voltage waveform, while when the k-th digit ($2^k$) of the j is 0, the unit voltage waveforms are taken as the second unit voltage waveform or the fourth unit voltage waveform.

**67.** The display device according to Claim 65, wherein the partial-pixel-related, applying means includes a subordinate special voltage waveform generating means for generating a voltage waveform $V_{j(i)}$ in which j(i) is formed by associating any integer j with each gray scale Si (i=0, 1, ..., $2^{M-1}$) of the input signal and also $I_{j(i)}$ is an increasing function for i,

where luminance of the image signals has $2^M$ gray scales, $S_0, S_1, ... , S_2{}^M{}_{-1}$, in the ascending order; the M number of voltage modulation terms are numbered as $P_0, P_1, ..., P_{M-1}$, in the ascending order of interval; and the voltage waveforms is expressed by $V_j$ which are so formed that when with respect to the gray scale j=0, 1, ... , $2^M$-1, a value of a k-th digit ($2^k$) of the j appearing in the binary system is 1, the unit voltage waveforms in the voltage modulation terms $P_k$ (k=0, 1, ... , M-1) in the single display period are taken as the first unit voltage waveform or the third unit voltage waveform, while when the k-th digit ($2^k$) of the j is 0, the unit voltage waveforms are taken as the second unit voltage waveform or the fourth unit voltage waveform; and an integrated value of intensity of light transmitting or reflecting on the light modulation layer over the single display period corresponding to $V_j$ is taken as $I_j$.

68. The display device according to Claim 63, wherein voltages of n-th unit voltage waveforms are constant for four unit voltage waveforms (n=1, 2, 3, 4) in all voltage modulation terms in each display period.

69. The display device according to Claim 63, wherein the pixels are formed between a display control substrate and a transparent electrode substrate equal in potential in the whole surface, wherein the light modulation layer is sandwiched from both sides by the display control substrate and the transparent electrode substrate, and wherein where $V_S$ and $V_B$ are set to voltage values that satisfy $V_S > |V_B| \geqq 0$, the potential of the transparent electrode substrate is -$V_B$ for the first and second unit voltage waveforms; the potential of the transparent electrode substrate is $V_S$ for the third and fourth unit voltage waveforms, and the potential of the display control substrate is $V_S$ -$V_B$ for the first and fourth unit voltage waveforms; and the potential of the display control substrate is zero for the second and third unit voltage waveforms.

70. The image display device according to Claim 69, wherein the light modulation layer is a liquid crystal layer.

71. The image display device according to Claim 70, wherein the liquid crystal layer is liquid crystal showing a nematic phase.

72. The image display device according to Claim 71, wherein the liquid crystal showing the nematic phase is a liquid crystal having a smaller dielectric constant with respect to a major axis direction of molecule thereof than the dielectric constant with respect to a direction perpendicular to the major axis direction of the molecule.

73. A method for driving a display device comprising a liquid crystal layer; pixels each comprising a plurality of partial pixels; and a display control means for applying voltage waveforms to the liquid crystal layer in accordance with input signals on a pixel-to-pixel basis or on a partial-pixel-to-partial-pixel basis, to provide gray scale display, such as luminance, color, etc., wherein the display control means applies the voltage waveforms in voltage modulation terms of each display period, and wherein the application of voltage waveforms comprises the step of selecting one from a plurality of voltage waveforms belonging in the related term of each voltage modulation term.

74. A display device comprising pixels having light modulation layers; and display control means for controlling optical states related to luminance and color of the light modulation layers of the pixels in accordance with input signals,
    wherein the light modulation layer is a two-variant light modulation layer that takes either of two optical states for each pixel, and
    wherein the display controlling means is a binary type display controlling means that brings the light modulation layer into one of the two optical states only during the time corresponding to the input signals within each display period and brings the light modulation layer into the other optical state during the remaining time.

75. The display device according to Claim 74, wherein the light modulation layer is a liquid crystal layer.

76. The display device according to Claim 74 or 75, wherein the light modulation layer is a zero output capable light modulation layer in which the output light intensity in the one optical state is taken as zero.

77. The display device according to Claim 76, wherein where the input signals are numbered as 0, 1, 2, ... and the time during which the light modulation layer takes the other optical state of not zero for the input signal of the number j within the single display period is expressed by T(j), T(j) is in proportion to j.

78. The display device according to Claim 77, wherein the two-variant light modulation layer takes either the first optical state or the second optical state in accordance with the voltage applied to the pixels from the display controlling means,

    the display controlling means comprising a register, a counter and a comparator which are arranged in association with each pixel, and

wherein numeric values corresponding to image input signals are registered in the register; indicated numeric values of the counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state and the second optical state.

79. The display device according to Claim 77, wherein the two-variant light modulation layer takes either the first optical state or the second optical state in accordance with the voltage applied to the pixels from the display controlling means,

the display controlling means comprising a counter, and a register and a comparator which are arranged in association with each pixel, and
wherein numeric values corresponding to image input signals are registered in the register; indicated numeric values of the counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state and the second optical state.

80. The display device according to Claim 78 or 79, wherein the display controlling means comprises two electrodes sandwiching the light modulating layer therebetween, and the applied voltage to the light modulation layer is controlled by varying the potentials of both of the two electrodes.

81. A method for driving an image display device comprising a light modulation layer and display controlling means for controlling an optical state of each of pixels in a plane of the light modulation layer in accordance with image input signals,
wherein the light modulation layer is a two-variant light modulation layer that takes either a first optical state or a second optical state, and
wherein the display controlling means brings the light modulation layer into the first optical state only during a time corresponding to the image input signals within a signal display period and brings the light modulation layer into the second optical state during the remaining time.

82. A method for manufacturing a display device which comprises (i) a two-variant light modulation layer, formed by a liquid crystal layer between two electrodes and equivalent, for taking a first optical state and a second optical state and (ii) display controlling means comprising a register and a comparator which are arranged in association with each pixel and in which numeric values corresponding to image input signals are registered in the register; indicated numeric values of a counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state or the second optical state, the method comprising the steps:

that a plurality of display controlling unit circuits, each having the register, the counter, the comparator and wiring interconnecting therewith as a unit, are produced in pack on a Si substrate;
that the display controlling unit circuits produced in pack are separated into each individual display controlling unit circuit; and
that the separated display controlling unit circuits are each arranged for each pixel of the image display device.

83. A method for manufacturing a display device which comprises (i) a two-variant light modulation layer, formed by a liquid crystal layer between two electrodes and equivalent, for taking a first optical state and a second optical state and (ii) display controlling means comprising a counter, and a register and a comparator which are arranged in association with each pixel and in which numeric values corresponding to image input signals are registered in the register; indicated numeric values of the counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state or the second optical state, the method comprising the steps:

that a plurality of display controlling unit circuits, each having the register, the comparator and wiring interconnecting therewith as a unit, are produced in pack on a Si substrate;

that the display controlling unit circuits produced in pack are separated into each individual display controlling unit circuit; and

that the separated display controlling unit circuits are each arranged for each pixel of the image display device.

84. A method for manufacturing a display device which comprises (i) a two-variant light modulation layer, formed by a liquid crystal layer between two electrodes and equivalent, for taking a first optical state and a second optical state and (ii) display controlling means comprising a register and a comparator which are arranged in association with each pixel and in which numeric values corresponding to image input signals are registered in the register; indicated numeric values of a counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state or the second optical state, the method comprising the steps:

that a specified number of pixel-use display controlling unit circuits, each having a specified number of registers, counters, comparator and wiring interconnecting therewith corresponding to a specified number of pixels as a unit, are produced in pack on a Si substrate;

that the specified number of pixel-use display controlling unit circuits produced in pack are separated into each individual pixel-use display controlling unit circuit; and

that the separated pixel-use display controlling unit circuits are each arranged for each pixel of the image display device.

85. A method for manufacturing a display device which comprises (i) a two-variant light modulation layer, formed by a liquid crystal layer between two electrodes and equivalent, for taking a first optical state and a second optical state and (ii) display controlling means comprising a counter, and a register and a comparator which are arranged in association with each pixel and in which numeric values corresponding to image input signals are registered in the register; indicated numeric values of the counter increases or decreases at each time when clock signals are input to the counter; and the comparator compares numeric values between the registered numeric values of the register and the indicated numeric values of the counter and applies voltages in accordance with the numerical relation such that the optical state of the light modulation layer can be put into either the first optical state or the second optical state, the method comprising the steps:

that a plurality of display controlling unit circuits, each having a specified number of register, comparator and wiring interconnecting therewith corresponding to a specified number of pixels as a unit, are produced in pack on a Si substrate;

that the display controlling unit circuits produced in pack are separated into each individual display controlling unit circuit for each pixel; and

that the separated display controlling unit circuits are each arranged for each of the specified number of pixels of the image display device.

86. A display device used for providing a gray scale display of a digital image by use of a display element in which linearity of γ characteristics cannot necessarily be held under a specified condition, the display device comprising:

light batch modulating means for modulating luminance, color, and their related optical states of a bundle of rays, apart from contents of an image, for a display surface within a single display period of the image under a prescribed rule corresponding to lapsed time of the related display period; and

two-dimensional light modulation means for modulating luminance, color and their related optical states of the bundle of rays with reference to the contents of the image on a pixel-to-pixel basis, for the bundle of rays modulated en bloc by the light batch modulating, by using the display element, in which the linearity of the γ characteristics cannot necessarily be held under the specified condition, beyond the confines of the specified condition and also using the modulation under the prescribed rule corresponding to lapsed time of the light from the light batch modulating means.

87. The display device according to Claim 86, wherein the single display period comprises a plurality of unit sections, and the two-dimensional light modulation means has a subordinate unit light modulation factor waveform selecting means for selecting one light modulation factor waveform from a predetermined plural number of light modulation factor waveforms for each unit section, for separate light modulation.

88. The display device according to Claim 86, wherein the pixel comprises a plurality of partial pixels, and the two-dimensional light modulation means has a subordinate partial pixel separately driving means for use in displaying at least one partial pixel of the plurality of partial pixels for each pixel, separately from the remaining partial pixels, for separate light modulation.

89. The display device according to Claim 86, wherein the single display period comprises a plurality of unit sections and the pixel comprises a plurality of partial pixels, and
wherein the two-dimensional light modulation means comprises:

a subordinate unit light modulation factor waveform selecting means for selecting one light modulation factor waveform from a predetermined plural number of light modulation factor waveforms for each unit section, for separate light modulation; and
a subordinate partial pixel separately driving means for use in displaying at least one partial pixel of the plurality of partial pixels for each pixel, separately from the remaining partial pixels.

90. The display device according to any one of Claims 86 through 89, wherein the two-dimensional light modulation means has an optical shutter transmission control element, such as an optical shutter, for controlling transmitted light by an open and close operation and equivalent.

91. The display device according to any one of Claims 86 through 89, wherein the two-dimensional light modulation means has a reflective angle control type reflection element for receiving light from the light batch modulating means and controlling a travelling direction of the reflected light.

92. The display device according to any one of Claims 86 through 89, wherein the two-dimensional light modulation means uses liquid crystal as the display element in which the linearity of the γ characteristics cannot necessarily be held under the specified condition.

93. The display device according to any one of Claims 86 through 89, wherein the two-dimensional light modulation means using the liquid crystal as the display element comprises:

two upper and lower substrates having voltage applying capabilities;
a liquid crystal layer, held between the upper and lower substrates, for providing a normally-one type behavior or a normally-off type behavior in accordance with an applied voltage across the two upper and lower substrates;
a shift related voltage loading means for loading $V_{OFF}$ and $V_{ON}$ to the two upper and lower substrates in a region in which variation in transmittance or reflectance is small relative to a variation ratio of voltage of the liquid crystal layer; and
load voltage alternating means for alternating + and - of a voltage loaded to the upper and lower substrates by the shift related voltage loading means at specified intervals, e.g. at single display period or at single unit section.

94. The display device according to Claim 92, wherein the two-dimensional light modulation means using the liquid crystal as the display element comprises:

two upper and lower substrates having voltage applying capabilities;
a liquid crystal layer, held between the upper and lower substrates, for providing a normally-on type behavior or a normally-off type behavior in accordance with an applied voltage across the two upper and lower substrates;
a shift related voltage loading means for setting and loading $V_{OFF}$ and $V_{ON}$ to the two upper and lower substrates in a region in which variation in transmittance or reflectance is small relative to a variation ratio of voltage of the liquid crystal layer; and
load voltage alternating means for alternating + and - of a voltage loaded to the upper and lower substrates by the shift related voltage loading means at specified intervals, e.g., at single display period or at single unit section.

95. The display device according to Claim 92, wherein the two-dimensional light modulation means includes at least one of a pixel-use memory circuit, a liquid crystal writing switching element, and a bistable element, in order to provide at least one of the effects of preventing flicker, reversal of gray scale display in a partial gray scale, and charge-up, and ensuring high speed response.

**96.** The display device according to Claim 93, wherein the two-dimensional light modulation means includes at least one of a pixel-use memory circuit, a liquid crystal writing switching element, and a bistable element, in order to provide at least one of the effects of preventing flicker, reversal of gray scale display in a partial gray scale and charge-up and ensuring high speed response.

FIG. 1

Transmittance (or Reflectance)

TRmax(ON)

0(OFF)                    TRmax/10                    0(OFF)

$-V_M$     $-V_{th}$     0     $V_{th}$     $V_M$     Applied Voltage

FIG. 2

(1)

(2)

FIG. 3

(1)

(2)

FIG. 4

FIG. 5

Voltage(V)

Vm,n(0)

Vm,n(2)

Vm,n(1)

Time(T)

FIG. 6

Voltage

| Unit Section | $I_7$ | $\cdots$ | $I_5$ | $I_4$ | | $I_3$ | $I_2$ | $I_1$ | $I_0$ |

| Ratio of Time Interval | 128 | $\cdots$ | 32 | 16 | | 8 | 4 | 2 | 1 |

$V_{ON}$

$V_{OFF}$

0 → Time(T)

Transmittance

0 → Time(T)

1 Frame

FIG. 7

FIG. 8

External Signal Strength

FIG. 9

(1)

Modulation Factor
$\mu$ (t)

Luminance
P(t)

Intensity of Output Light
P(t) $\mu$ (t)

450

550

400

500

(2)

| G | B | R | G |
| R | G | B | R |
| B | R | G | B |
| G | B | R | G |

FIG. 10

Intensity of
Light Source          Single Display Period

P(t)

128

64    32    16

0                                            Time(T)

Open/Close          T/8

$\mu_0$

$\mu$ (t)

0                                            Time(T)

Intensity of
Light of Pixel    Area Ratio:
                  128 64  32  16  8   4   2   1

P(t) $\mu$ (t)

0                                            Time(T)

Unit Section    $I_7$  $I_6$  $I_5$  $I_4$  $I_3$  $I_2$  $I_1$  $I_0$

Input of Signal of $\mu$ (t) =[10100100]
(164 in Decimal System)

Energy of Output Light
$\propto 2^7 + 2^5 + 2^2 = 128+32+4=164$

FIG. 11

Single Display Period

Intensity of
Light Source

$T_A/2$   $T_A/8$

$T_A$  $T_A/4$  $T_A/16$  ...

$P_0$

P(t)

0 → Time(T)

T/8

Open/Close

$\mu_0$

$\mu$ (t)

0 → Time(T)

Intensity of
Light of Pixel

Area Ratio:
128 64 32 16 8 4 2 1

$P_0\mu_0$

P(t) $\mu$ (t)

0 → Time(T)

Unit Section   $I_7$  $I_6$  $I_5$  $I_4$  $I_3$  $I_2$  $I_1$  $I_0$

Input of Signal of $\mu$ (t) $=$ [10100100]
(164 in Decimal System)

Energy of Output Light
$\propto 2^7 + 2^5 + 2^2 = 128+32+4=164$

FIG. 12

Input of Signal of $\mu$ (t) $=[10100100]$
(164 in Decimal System)

Energy of Output Light
$$\propto 2^7 + 2^5 + 2^2 = 128 + 32 + 4 = 164$$

FIG. 13

Intensity of
Light Souce

Single Display Period                    1/16

                                    1/8  1/32

1 ----                                   ----

P(t)              1/2      1/4

0                                              → Time(T)

Open/Close

     4T/12    2T/12   T/12  T/12  T/12
                      T/12  T/12  T/12

μ0 ----                                   ----

μ(t)

0                                              → Time(T)

Intensity of
Light of Pixel    Area Ratio:
                  128    64  32 16 8 4 2 1

P(t)μ(t)

0                                              → Time(T)

Unit Section        I₇       I₆   I₅ I₄ I₃ I₂ I₁ I₀

Unit Section of            Unit Section of
1st Kind (Variation        2nd Kind (Variation of
of Time Interval)          Light Source Luminance)

Input of Signal of μ(t)=[10100100]
     (164 in Decimal System)

Energy of Output Light
     ∝2⁷ + 2⁵ + 2² = 128+32+4=164

73

FIG. 14

(1)

Filter

Infrared
Laser Beam

Close

404          406          405

41

$\lambda = 1.06 \mu \mathrm{m}$

(2)

Filter

Infrared
Laser Beam

Open

404          406          405

41

$\longrightarrow \quad \lambda = 1.06 \mu \mathrm{m}$

$\longrightarrow \quad \lambda = 530 \mu \mathrm{m}$

FIG. 15

401
401r  401g  401b

402

Synchronized
Signal

Light Emission
Luminance
Control Circuit

400

Image Signal

Light Valve
Driving Circuit

530

Output Light

501

10

500

45

60

FIG. 16

106   105   104   300   102
                              200

107
108
111
109
110

112

Incident Light
Reflected Light

FIG. 17

FIG. 18

FIG. 19

Single Display Period

Luminance of
Light Emission
Source P(t)

$P_0$

0

Time(T)

$\tau_r$   $\tau_d$   T/8

Reflectance
$\mu$ (t)

$\mu_0$

0

Time(T)

Intensity of
Light of Pixel

Area Ratio:
128 64 32 16 8 4 2 1

P(t) $\mu$ (t)

0

Time(T)

Unit Section   $I_7$   $I_6$   $I_5$   $I_4$   $I_3$   $I_2$   $I_1$   $I_0$

FIG. 20

FIG. 21

FIG. 22

FIG. 23

FIG. 24

FIG. 25

(1)

(2)

$\left( \begin{array}{c} \text{W' is Reversed} \\ \text{Phase Signal} \\ \text{of W} \end{array} \right)$

FIG. 26

(1)

450

550

552

150

(2)

450

552

551

150    OFF State

(3)

552

450

552

150    ON State

FIG. 27

Synchronized
Signal

402    400    401

Light Emission
Luminance
Control Circuit

500

Image
Signal

DMD
Driving
Circuit

540

10

60

552

450    551

541

FIG. 28

(1)

(2)

(3)

FIG. 29

FIG. 30

FIG. 31

502   400

FIG. 32

FIG. 33

FIG. 34

Transmittance, Reflectance

$-V_M$   $-V_T$   $V_T$   $V_M$   Voltage

FIG. 35

FIG. 36

Fig. 37

FIG. 38

FIG. 39

FIG. 40

554   417

200

102

300

104

100

417

206   213

FIG. 41

FIG. 42

Single Display Period

W

CL

G(m)

Writing Timing
from D1-D4
to R1

Writing Timing
from R1 to R2

Counter
Reset Timing

$t'_0$

$t_1$

$t'_2$

$t_3$

$t'_4$

EP 1 091 342 A2

FIG. 43

(1) Indicated Numeric
Value of Counter
or
Resistered Value
of Resistor R2

(2) Output of
Comparator

(3) Transmittance
of Liquid
Crystal Layer

$t_0$   $t_2$   $t_4$ Writing to R2 and Counter Reset Timing

Indicated Numeric Value of Counter   Resistered Value of Resistor R2

Single Display Period

EP 1 091 342 A2

103

EP 1 091 342 A2

FIG. 44

Voltage Modulation Section $P_3$     $P_2$   $P_1$   $P_0$
Time Interval Ratio 8       4    2    1

(1)$11=1011_2$

Voltage Wave

0 → Time

(A)      (B)

Transmittance of Liquid Crystal

1

0 → Time

(2)$12=1100_2$

Voltage Wave

0 → Time

Transmittance of Liquid Crystal

1

0 → Time

104

FIG. 45

FIG. 46

EP 1 091 342 A2

FIG. 47

(1) Indicated Numeric Value of Counter 15 or Registered Value of Resistor R2

Indicated Numeric Value of Counter

Registered Value of Resistor R2

Writing to R2 and Counter Reset Timing

Single Display Period

(2) Output of Comparator

(3) Potential of Opposite Substarate

(4) Applied Voltage to Liquid Crystal Layer

(5) Transmittance of Liquid Crystal Layer

EP 1 091 342 A2

FIG. 48

Writing To R2 and Counter Reset Timing

$t_4$

$t_2$

$t_0$

Registered Value of Registor R2

Indicated Numeric Value of Counter

(1) Indicated Numeric Value of Counter / or Registered Value of Registor R2

15

0

Single Display Period

(2) Output of Comparator — 4V / 0V — Time

(3) Potential of Opposite Substrate — 5V / −1V — Time

(4) Applied Votage to Liquid Crystal Layer — 5V / 1V / −1V / −5V — Time

(5) Transmittance of Liquid Crystal Layer — 1 / 0 — Time

Time

FIG. 49

Cmp.

XOR

134

P(Even/Odd Number Control Signal)

104

FIG. 50

EP 1 091 342 A2

(1)

(2)

151

213

(3)

(4)

100

FIG. 51

(1)

206

213

(2)

2131

(3)

2132

## FIG. 52

Synchronizing Part

Image Signal

Pixel Control Signal

Flashing Instruction

400

500

Luminance

0 ——→ Time

10

70

206

| R | G | B |
| R | | |
| G | | |
| B | | |

R
G
B

R | G | B

FIG. 53

Transmit Only Red
or
Transparent

Transmit Only Green
or
Transparent

Transmit Only Blue
or
Transparent

Close
or
Open

FIG. 54

(1)

| Synchronizing Part | Image Signal |
|---|---|

Flashing Instruction

Pixel Control Signal

400

500

60

10

63

(2)

64

65

FIG. 55

```
┌─────────────────────────────────────┐
│      Input of Analog Image Signal    │
└─────────────────────────────────────┘
                    ↓
┌─────────────────────────────────────┐
│     Pixel Division for Each Screen   │
└─────────────────────────────────────┘
                    ↓
┌─────────────────────────────────────┐
│  Separation into 3 Elementary Colors │
│  for Each Pixel                      │
└─────────────────────────────────────┘
                    ↓
┌─────────────────────────────────────┐
│   Modulation of Each Elementary      │
│   Color of Each Pixel                │
└─────────────────────────────────────┘
                    ↓
┌─────────────────────────────────────┐
│ Decision on the way of Display of Each│
│ Pixel in accordance with Modulation Factor│
│ (e.g. Decision on Partial Pixel to which│
│ Voltage is Applied in Each Unit Section)│
└─────────────────────────────────────┘
                    ↓
┌─────────────────────────────────────┐
│ Reversal of Applied Voltage or       │
│ Other Process is taken,where required │
└─────────────────────────────────────┘
                    ↓
┌─────────────────────────────────────┐
│ Display with Color and Luminance in  │
│ accordance with Input Signals for Each│
│ Elementary Color on a Pixel-to-Pixel │
│ Basis                                │
└─────────────────────────────────────┘
```

115